# EUROPEAN PATENT SPECIFICATION

(11) **EP 2 613 608 B1**
(45) Date of publication and mention of the grant of the patent: **23.08.2017**
(21) Application number: 11821327.1
(22) Date of filing: 31.08.2011
(51) Int. Cl.: H05B 6/12, H05B 6/36, H05B 6/06, H05B 6/44

(54) **INDUCTION COOKING APPLIANCE**
INDUKTIONSKOCHVORRICHTUNG
APPAREIL DE CUISSON À INDUCTION

(30) Priority: 03.09.2010 JP 2010197693
(43) Date of publication of application: 10.07.2013
(73) Proprietor: Mitsubishi Electric Corporation, Tokyo 100-8310 (JP); Mitsubishi Electric Home Appliance Co., Ltd., Fukaya-shi, Saitama 369-1295 (JP)
(72) Inventor: KAMEOKA, Kazuhiro, Fukaya-shi Saitama 369-1295 (JP); KAWATA, Yukio, Fukaya-shi Saitama 369-1295 (JP); ITO, Masanobu, Fukaya-shi Saitama 369-1295 (JP); HIRASHIKI, Isamu, Tokyo 100-8310 (JP); YAMAUCHI, Tokiko, Tokyo 100-8310 (JP); TANAKA, Kazufumi, Tokyo 100-8310 (JP)
(74) Representative: Pfenning, Meinig & Partner mbB
(86) International application number: PCT/JP2011/004866
(87) International publication number: WO 2012/029306

(56) References cited:
- WO-A1-2010/101135
- WO-A1-2010/101202
- JP-A- 11 123 140
- JP-A- 2008 269 885
- JP-A- 2009 218 041
- JP-A- 2010 165 656

## Description

### Technical Field

The present invention relates to an induction cooking system that heats a heating target such as a metal pan, which holds an object to be cooked therein, on the top plate from below the top plate.

### Background Art

Cooking systems that perform induction heating of a heating target, such as a metal pan, with a heating coil has been recognized by consumers for their safety, cleanliness, and high efficiency and have gradually become popular in recent years.

Such induction cooking systems are broadly categorized, by their installation form, into a table-top type that is used by placing the system on a top side of a sink cabinet or the like and into a built-in (embedded) type that is set in an installation space of a piece of kitchen furniture such as a sink cabinet. In either type, widely known induction cooking systems are ones with a top side covered with a top plate (also referred to as a "top") formed by a heat-resisting glass plate or the like on substantially all of the top side and with a single or a plurality of induction heating source disposed below the top plate. As for the induction heating source of the above, one with a plurality of heating coils with different diameters disposed concentrically on a substantially same plane and a high-frequency power circuit (also referred to as an "inverter circuit") supplying high-frequency power to each of the heating coils are used (see Patent Literature 1, for example). The above-configuration allows output control of high-frequency power to be individually exerted to the plurality of coils with different diameters such that various heating patterns can be configured.

Further, as another induction cooking system, there is one that disposes a circular heating coil at the center, arranges a plurality of side heating coils so that they are adjacent to the both sides of the center heating coil, and drives the center heating coil and the side heating coils with different high-frequency power circuits. By considering the directions of the high-frequency currents flowing in the plurality of side heating coils and the center heating coil, induced electromotive forces generated in the plurality of side heating coils and the center heating coil are canceled out allowing the induction heating system to be used for purposes such as simultaneous heating of a wide planar region (see Patent Literature 2, for example).

Furthermore, in order to provide an induction cooking system that is capable of heating a large pan, which has a bottom size that is larger than the outer diameter of a single heating coil, without any unevenness in the heating distribution and without degrading its cooking performance, an induction cooking system has been proposed, as still another induction heating system, that includes a first heating coil; a group of plurality of heating coils that is disposed in the vicinity of the first heating coil each having a different center of circle with that of the first coil, the minimum outer diameter of each of the group of heating coils being smaller than the minimum outer diameter of the first heating coil; and a controller that controls the output of a first inverter circuit that drives the first heating coil and the outputs of the second inverter circuit that drives the group of heating coils (see Patent Literature 3, for example).

Still further, as yet another induction cooking system, there is one including a plurality of annular heating coils each having different center of circles disposed under a top plate on a substantially same plane, an inverter circuit supplying induction heating power to the plurality of coils, a control unit controlling output of the inverter circuit, and an operating unit instructing the start/end of the heating, the heating power settings, and the like to the control unit. In order to generate convection in an object to be cooked in a heating target, the control unit performs control such that, among the plurality of heating coils, induction heating power is supplied to half or more of the heating coils but not all and such that no induction heating power is supplied to the rest of the heating coils, according to the instruction from the operating unit (see Patent Literature 4, for example).

Similarly, in an induction cooking system including a plurality of annular heating coils each having different center of circles disposed under a top plate on a substantially same plane, with an object to generate convection in an object to be cooked, there is one that supplies more induction heating power to half or more of the heating coils but not all than the rest of the heating coils, (see Patent Literature 5, for example).

### Citation List

### Patent Literature

Patent Literature 1: Japanese Patent No. 2978069 (page 1, page 2, Fig. 1)
Patent Literature 2: Japanese Patent No. 3725249 (page 1, page 2, Fig. 3)
Patent Literature 3: Japanese Unexamined Patent Application Publication No. 2010-73384 (page 2, page 7, Fig. 3)
Patent Literature 4: Japanese Unexamined Patent Application Publication No. 2010-165656 (page 1, page 2, Fig. 1, Fig. 2)
Patent Literature 5: Japanese Unexamined Patent Application Publication No. 2010-146882 (page 1, page 2, Fig. 1, Fig. 2)

### Summary of Invention

### Technical Problem

However, in conventional induction cooling systems, since the entire bottom of a single heating target such as a metal pan is heated simultaneously with a plurality of circular coils, or a circular coil (center coil) and (non-circular) side coils, it is not yet sufficient to generate a convection with a long convection channel that approaches the other facing side from one side of the pan. Further, in induction cooking systems, even ones for home use, there are various menus desired by the user such as boiling hot water rapidly, maintaining a stewed food at a high temperature or at a predetermined temperature state (referred to also as heat retaining), and heating a frying pan rapidly to a predetermined temperature and further uniformizing the entire temperature as much as possible while raising the peripheral line temperature of the pan, so to speak, the pan surface temperature to a desired level to cast the cooking ingredients in; however, there is a problem that a driving pattern of the heating coil(s) suitable for the cooking menu cannot be selected by the user easily or be selected automatically.

The present invention is addressed to the above-described problems and a main object of the invention is to obtain an induction cooking system employing control that is capable of facilitating generation of convection in liquid, such as water, soup of stewed food, and the like, in the heating target. Solution to Problem

This object, according to the invention, is solved by an induction cooking system comprising the features of claim 1. Preferred embodiments of this system are defined in the dependent claims.

### Brief Description of Drawings

[Fig. 1] Fig. 1 is a block diagram illustrating a basic configuration of an entirety of a built-in induction cooking system according to Embodiment 1 of the invention.
[Fig. 2] Fig. 2 illustrates plan views of induction heating coils of the built-in induction cooking system according to Embodiment 1 of the invention.
[Fig. 3] Fig. 3 is a first explanatory diagram of a heating operation of the induction heating coils of the built-in induction cooking system according to Embodiment 1 of the invention.
[Fig. 4] Fig. 4 is a first explanatory diagram of energizations of the induction heating coils of the built-in induction cooking system according to Embodiment 1 of the invention.
[Fig. 5] Fig. 5 is an explanatory diagram of control steps illustrating a basic heating operation of the entire built-in induction cooking system according to Embodiment 1 of the invention.
[Fig. 6] Fig. 6 is a plan view illustrating a modification of the induction heating coils of the built-in induction cooking system according to Embodiment 1 of the invention.
[Fig. 7] Fig. 7 is a second explanatory diagram of the energizations of the induction heating coils of the built-in induction cooking system according to Embodiment 1 of the invention.
[Fig. 8] Fig. 8 is a third explanatory diagram of the energizations of the induction heating coils of the built-in induction cooking system according to Embodiment 1 of the invention.
[Fig. 9] Fig. 9 is a second explanatory diagram of the heating operation of the induction heating coils of the built-in induction cooking system according to Embodiment 1 of the invention.
[Fig. 10] Fig. 10 is a perspective view illustrating an entirety of a built-in induction cooking system according to Embodiment 2 of the invention with a partially exploded portion.
[Fig. 11] Fig. 11 is a perspective view illustrating an entirety of a main body of the built-in induction cooking system according to Embodiment 2 of the invention in a state in which a top panel has been removed.
[Fig. 12] Fig. 12 is a plan view illustrating the entirety of the main body of the built-in induction cooking system according to Embodiment 2 of the invention.
[Fig. 13] Fig. 13 is a perspective view illustrating a state in which main components such as vertical partition plates of the built-in induction cooking system according to Embodiment 2 of the invention have been removed.
[Fig. 14] Fig. 14 is a longitudinal sectional view taken along the line D1-D1 of Fig. 10.
[Fig. 15] Fig. 15 is a longitudinal sectional view taken along the line D2-D2 of Fig. 10.
[Fig. 16] Fig. 16 is a perspective view of the main sections illustrating a partially cut away component case and cooling duct of the built-in induction cooking system according to Embodiment 2 of the invention.
[Fig. 17] Fig. 17 is a plan view illustrating an overall arrangement of heating coils of the built-in induction cooking system according to Embodiment 2 of the invention.
[Fig. 18] Fig. 18 is a plan view illustrating an induction heating source on the left side of the built-in induction cooking system according to Embodiment 2 of the invention.
[Fig. 19] Fig. 19 is a wiring description of a main heating coil of the induction heating source on the left side of the built-in induction cooking system according to Embodiment 2 of the invention.
[Fig. 20] Fig. 20 is an enlarged plan view of the main heating coil of the induction heating source on the left side and its peripheral area of the built-in induction cooking system according to Embodiment 2 of the invention.
[Fig. 21] Fig. 21 is a plan view of a coil support of the main heating coil of the induction heating source on the left side of the built-in induction cooking system according to Embodiment 2 of the invention.
[Fig. 22] Fig. 22 is a general drawing of a control circuit of the built-in induction cooking system according to Embodiment 2 of the invention.
[Fig. 23] Fig. 23 is a diagram of a full bridge circuit that is the main portion of the control circuit of the built-in induction cooking system according to Embodiment 2 of the invention.
[Fig. 24] Fig. 24 is a schematic diagram of the full bridge circuit that is the main portion of the control circuit of the built-in induction cooking system according to Embodiment 2 of the invention.
[Fig. 25] Fig. 25 is a longitudinal sectional view illustrating a case in which a heating operation is performed with a large-diameter pan placed above the induction heating source on the left side of the built-in induction cooking system according to Embodiment 2 of the invention.
[Fig. 26] Fig. 26 is a longitudinal sectional view illustrating a center front portion of a main body of the built-in induction cooking system according to Embodiment 2 of the invention.
[Fig. 27] Fig. 27 is a plan view illustrating integral display means of the built-in induction cooking system according to Embodiment 2 of the invention.
[Fig. 28] Fig. 28 is a plan view illustrating an exemplary display screen of the integral display means of the built-in induction cooking system according to Embodiment 2 of the invention when the left IH heat source alone is used.
[Fig. 29] Fig. 29 is a plan view illustrating an exemplary display screen of the integral display means of the built-in induction cooking system according to Embodiment 2 of the invention when the left IH heat source alone is used.
[Fig. 30] Fig. 30 is a plan view illustrating an exemplary display screen of the integral display means of the built-in induction cooking system according to Embodiment 2 of the invention when the left IH heat source is performing rapid heating.
[Fig. 31] Fig. 31 is an explanatory diagram of control steps illustrating a basic heating operation of the entire built-in induction cooking system according to Embodiment 2 of the invention.
[Fig. 32] Fig. 32 is a first flowchart of the control operation of the built-in induction cooking system according to Embodiment 2 of the invention.
[Fig. 33] Fig. 33 is a second flowchart of the control operation of the built-in induction cooking system according to Embodiment 2 of the invention.
[Fig. 34] Fig. 34 is a third flowchart illustrating a control operation of the built-in induction cooking system according to Embodiment 2 of the invention when heating power is changed.
[Fig. 35] Fig. 35 are charts illustrating heating levels (electric power for heating) of a main heating coil MC and sub heating coils SC1 to SC4 of the built-in induction cooking system according to Embodiment 2 of the invention when the heating power is 3 kW and 1.5kW.
[Fig. 36] Fig. 36 are charts illustrating heating levels (electric power for heating) of the main heating coil MC and the sub heating coils SC1 to SC4 of the built-in induction cooking system according to Embodiment 2 of the invention when the heating power is 500 W.
[Fig. 37] Fig. 37 is a plan view illustrating an exemplary display screen of an integral display means of a built-in induction cooking system according to Embodiment 3 of the invention when the left IH heat source alone is used to heat a large-diameter pan.
[Fig. 38] Fig. 38 is a longitudinal sectional view illustrating the built-in induction cooking system according to Embodiment 3 of the invention when the left IH heat source alone is used to heat a pan with normal diameter.
[Fig. 39] Fig. 39 is a plan view illustrating an exemplary display screen of the integral display means of the built-in induction cooking system according to Embodiment 3 of the invention when the left IH heat source alone is used to heat a large-diameter pan.
[Fig. 40] Fig. 40 is a plan view illustrating an exemplary display screen of the integral display means of the built-in induction cooking system according to Embodiment 3 of the invention when the left IH heat source alone is used to heat a large-diameter pan.
[Fig. 41] Fig. 41 is a plan view illustrating an exemplary display screen of the integral display means of the built-in induction cooking system according to Embodiment 3 of the invention when the left IH heat source alone is used to heat a different elliptical large-diameter pan.
[Fig. 42] Fig. 42 is a plan view illustrating an exemplary display screen of the integral display means of the built-in induction cooking system according to Embodiment 3 of the invention when the left IH heat source alone is used to heat the pan with normal diameter.

### Description of Embodiments

### Embodiment 1

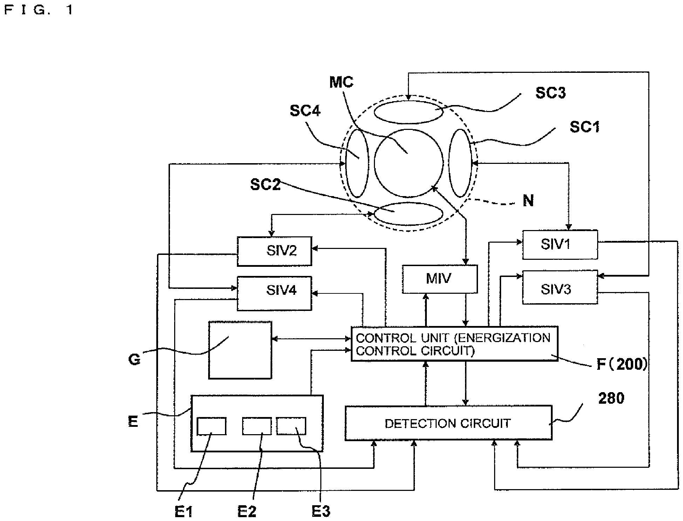

Figs. 1 to 9 illustrate an exemplary built-in (embedded) induction cooking system that illustrates an induction cooking system according to Embodiment 1 of the invention.

Fig. 1 is a block diagram illustrating a basic configuration of an entirety of the built-in induction cooking system according to Embodiment 1 of the invention.

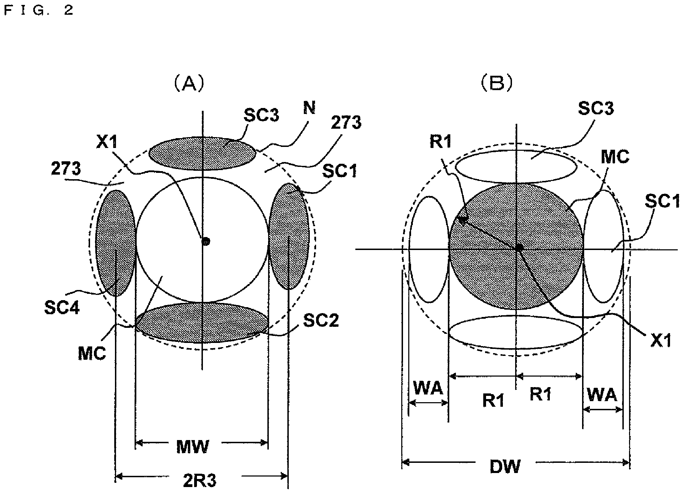

Fig. 2 is plan views illustrating induction heating coils of the built-in induction cooking system according to Embodiment 1 of the invention.

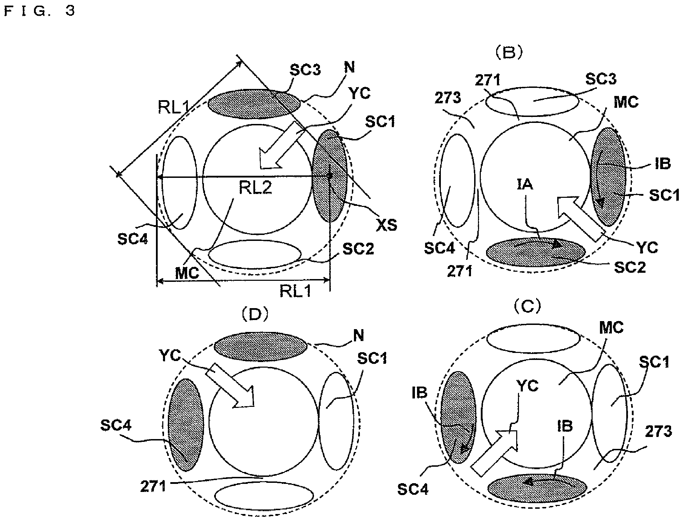

Fig. 3 is a first explanatory diagram of a heating operation of the induction heating coils of the built-in induction cooking system according to Embodiment 1 of the invention.

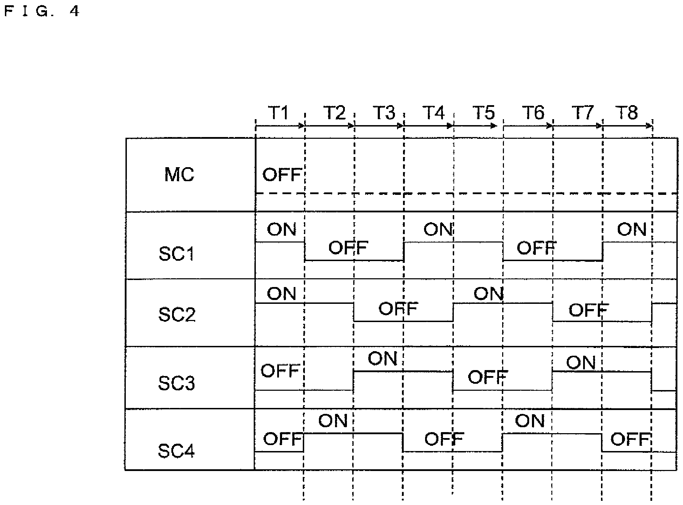

Fig. 4 is a first explanatory diagram of energizations of the induction heating coils of the built-in induction cooking system according to Embodiment 1 of the invention.

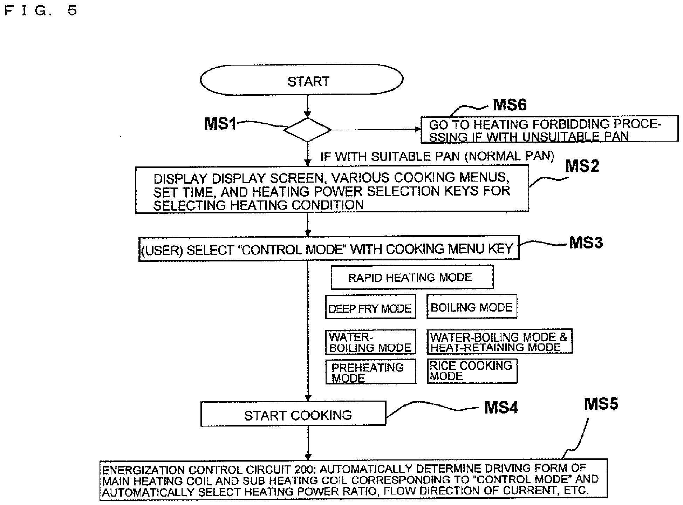

Fig. 5 is an explanatory diagram of control steps illustrating a basic heating operation of the entire built-in induction cooking system according to Embodiment 1 of the invention.

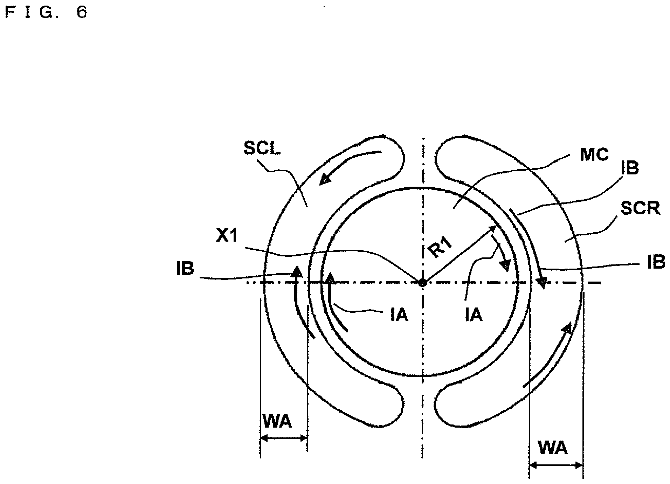

Fig. 6 is a plan view illustrating a modification of the induction heating coils of the built-in induction cooking system according to Embodiment 1 of the invention.

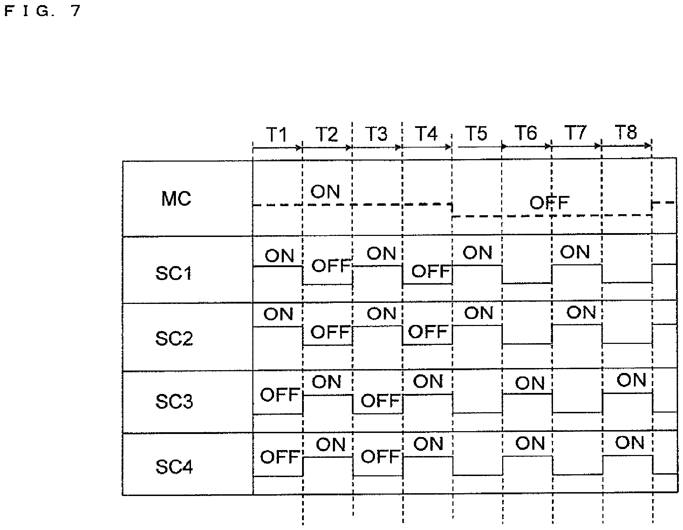

Fig. 7 is a second explanatory diagram of the energizations of the induction heating coils of the built-in induction cooking system according to Embodiment 1 of the invention.

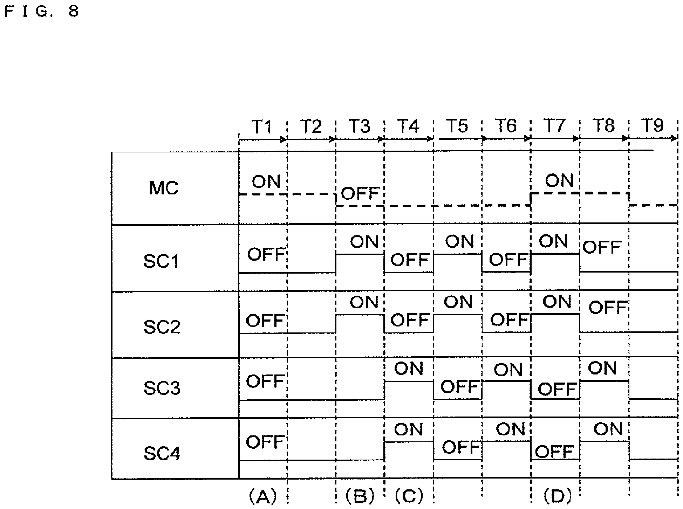

Fig. 8 is a third explanatory diagram of the energizations of the induction heating coils of the built-in induction cooking system according to Embodiment 1 of the invention.

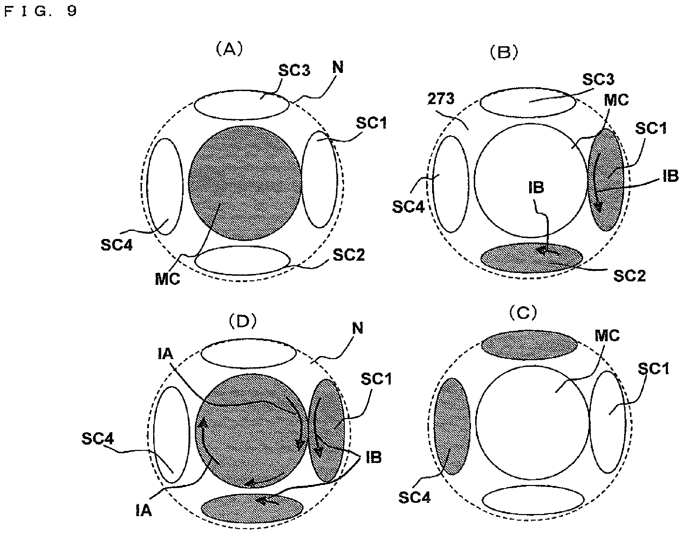

Fig. 9 is a second explanatory diagram of the heating operations of the induction heating coils of the built-in induction cooking system according to Embodiment 1 of the invention.

Note that in each figure, like parts or corresponding parts are designated with like reference numerals.

Terms that will be used in the embodiments of the invention will each be defined.

"Operating condition" of heating means D is an electric and physical condition for heating and is a collective term for energization time, energization amount (heating power), heating temperature, energization pattern (continuous energization or intermittent energization), and the like. That is, it is an energization condition of the heating means D.

"Displaying" is an operation that visually informs a user of the operating condition of the cooking system and related information that serves as a reference while cooking (including information with the aim to alarm abnormal use and occurrence of an abnormal operating state, hereinafter, merely referred to as "cooking related information") by means of characters and symbols, by illustration, by whether there is color or emittance of light, or by change such as luminance of emitted light. Note that when "displaying" by emitting or lighting a "wide area light emitting unit" or an "individual light emitting unit" described later, and when "display" is used such as in "first display" or "second display", the emitting or lighting is mere illumination of light of a predetermined color. When the state of lighting and visual effect, such as color of light, brightness, and continuous lighting or blinking, are changed, it may be described as "changing" or "switching" the display. Further, while "emitting" and "lighting" have the same meaning, in many cases, emitting is used when a light-emitting element such as a light emitting diode itself emits light and lighting is used when a lamp emits light. In the following description, both may be written side by side as above. Note that even if the emitting unit is emitted or lighted electrically and physically, there are cases in which a weak light not enough to be visually recognized by the user may reach the user. Unless specified otherwise, such cases does not correspond to the terms "emitting" and "lighting" since the user cannot recognize the outcome of the "emitting" or "lighting". For example, the top plate described later is typically not colorless or transparent but has a light color in the material itself from before it is coated on the surface. As such, since the transmittance rate of the visible light is not 100%, there are cases in which the light cannot be visually recognized from above the top plate when the light of the light emitting diode is weak, for example.

If not specified otherwise, the "display means" of the display unit includes a liquid crystal display (LCD), various light-emitting elements (a semiconductor light-emitting element has, for example, two types, that is, light emitting diode (LED) and laser diode (LD)), organic electro luminescence (Electro Luminescence:EL) element, or the like. Accordingly, the display means includes a liquid crystal screen, an EL screen, or the like. However, the display means such as the "wide area light emitting unit" and the "individual light emitting unit" described below may be mere light emitting means such as a lamp or an LED.

"Notifying" is an operation notifying the user with the object to make the user recognize the operating condition of the control means and the cooking related information by display or electrical speech (phonetic sound electrically created or synthesized).

If not specified otherwise, "notifying means" includes notifying means with audible sound such as a buzzer, a speaker, and the like and notifying means with characters and symbol, illustration, animation, or visible light.

"Cooperative heating" is an operation that heats the same single heating target by induction by supplying electric power to each of the two or more heating coils serving as induction heating sources. In the invention, examples of the cooperative heating are illustrated in Embodiment 2 and Embodiment 3 described later.

Embodiment 1 of the induction cooking system according to the invention will be described below in detail with reference to Figs. 1 to 9. Figs. 1 and 2 are plan views schematically illustrating the induction heating coils of an induction cooking system 1 according to the invention.

Referring to Figs. 1 and 2, the induction cooking system of the invention includes a single rectangular main body A (not shown). This main body A includes a top panel B (not shown) that constitutes a top side of the main body A, the entire surface of the top side of the top panel B other than a portion of its circumference being covered with a top plate; a housing C (not shown) constituting a periphery (outer wall) of the main body A other than the top side; heating means D (such as a main heating coil MC described later) that heats a pan, foodstuff, and the like with electric energy and the like; operation means E that is operated by a user; control means F that controls the heating means by receiving a signal from the operation means; and display means G that displays the operating condition of the heating means.

Further, although not used in Embodiment 1, there are cooking systems that includes, as a part of the heating means D, electric heating means referred to as a "grill chamber (grill heating chamber)" or a "roaster". Referring to Fig. 1, E1 is a first selection section in the operation means E provided at the front of the top side of the main body A, to which input operation is performed by means of a touch key that detects if there has been an input or not with the difference in static capacitance, a press key that has an electromechanical contact, or other keys. Similarly, E2 is a second selection section and E3 is a third selection section. The user can select various cooking menus described later by operating these selection sections. The characteristics of the function of each of the selection sections E1 to E3 will be described in detail later.

Referring to Figs. 1 and 2, "MC" is the main heating coil of the induction heating source (hereinafter, referred to as an "IH heat source") and is disposed near the bottom of the top plate (not shown) on which a heating target N is placed. Circles depicted by broken lines in the drawings are the external form of the heating target N such as a pan.

Further, the main heating coil is ultimately formed into a disc shape by bundling about 30 fine wires with a size of approximately 0.1 mm to 0.3 mm, twisting one or a plurality of this bundle (hereinafter, referred to as an "assembled wire"), and spirally winding this so that a circular outer shape is formed with a center point X1 as its cardinal point. The diameter (maximum outer diameter) of the main heating coil MC is about 180 mm to about 200 mm and its radius R1 is 90 to 100 mm. In Embodiment 1, regarding its capacity, the maximum electric power consumption (maximum heating power) of the main heating coil is 1.5 kW, for example.

"SC1 to SC4" are four elliptical sub heating coils that are disposed with even distances and are disposed symmetrically in the front-rear and the left-right positions with a center point X1 of the main heating coil MC as the cardinal point. When viewed radially from the center point X1, the transverse dimension, that is, the "thickness" (also referred to as "breadth") WA of each sub heating coil has the size amounting to 50% to 30% of the radius R1 of the main heating coil MC. In the examples of Figs. 1 and 2, sub heating coils in which WA is set to 40 mm are used. Further, a major axis MW of each sub heating coil is about double of R1, that is, the same as the diameter (maximum outer diameter) of the main heating coil MC, and is about 180 mm to 200 mm. Note that, if there is no contradiction with the other descriptions in particular, taking Fig. 2 as an example, the "side" of the main heating coil MC naturally indicates the right side and the left side, and also includes the upper side and the lower side (the front side) and "both sides" naturally indicates both the left and right sides, and also the front and rear sides as well as the diagonal sides.

Each of the four sub heating coils SC1 to SC4 is disposed to maintain a predetermined space (size of a few millimeters to one centimeter), namely space 271, with the circumference of the main heating coil MC. Spaces between the sub heating coils SC1 to SC4 are set at substantially even intervals (maintaining a space 273 between each other). These sub heating coils are also formed so as to have an ellipse or oval outer shape by twisting one or a plurality of assembled wires and spirally winding the assembled wires in a predetermined direction, and then by partially binding it with a binding tool or by overall hardening it with heat-resistant resin so as to maintain its shape. The four sub heating coils SC1 to SC4 have a same planar shape, and the dimensions of the length, width, and height (thickness) are all the same. Accordingly, four sub heating coils of the same kind are fabricated and are disposed at four positions.

As shown in Fig. 2, in the circumference of the main heating coil MC having a radius R1 from the center point X1, the tangential direction coincide with the center line of each of the sub heating coils SC1 to SC4 in their longitudinal direction. In other words, it is in accord with the major axis direction.

Each of the sub heating coils SC1 to SC4 electrically constitutes a single closed circuit while the assembled wires are extended and bent into an elliptical shape. Further, the dimension of the main heating coil MC in the vertical direction (the height, also referred to as "thickness") and the dimension of each of the sub heating coils SC1 to SC4 in the vertical direction are the same. Further, the main heating coil MC and the sub heating coils SC1 to SC4 are horizontally disposed and fixed such that the facing distances between their upper sides and the bottom side of the top plate are the same.

Referring to Fig. 2, "DW" indicates the outer diameter of the heating target N such as a metal pan. In the example in Fig. 2, from the diameter of the main heating coil MC and the thicknesses WA of the sub heating coils SC1 to SC4 above, the outer diameter DW of the heating target N is about 220 mm to 240 mm.

Fig. 1 is a circuit block diagram of a built-in power supply of the induction cooking system 1. Broadly, the power supply according to the invention includes a converter that converts three-phase alternating current power into direct current (referred to as a "diode bridge circuit" or a "rectifier bridge circuit", for example), a smoothing capacitor connected to an output terminal of the converter, a main inverter circuit (power circuit) MIV for the main heating coil MC connected in parallel to this smoothing capacitor, as well as the sub inverter circuits (power circuit) SIV1 to SIV4 for the sub heating coils SC1 to SC4 connected in parallel to the smoothing capacitor.

Each of the main inverter circuit MC and the sub inverter circuits SIV1 to SIV4 converts the direct current from the converter into a high-frequency current and supplies the high-frequency current individually (to each other) to the corresponding one of the main heating coil MC and the sub heating coils SC1 to SC4.

Generally, impedance of an induction heating coil changes depending on whether there is a heating target N over the induction heating coil and on the size (area) of the heating target N. Amperage of the main inverter circuit MIV and the sub inverter circuits SIV1 to SIV4 changes accordingly. The power supply according to the invention includes a current detection unit (detection means) 280 for detecting the amperage of each of the main heating coil MC and the sub heating coils SC1 to SC4. This current detection unit is a type of a placement-of-heating-target determination unit described later.

The invention is capable of accurately detecting the placed state of the heating target N by using the current detection unit 280 to detect the amperage of the main heating coil MC and the sub heating coils SC1 to SC4 and estimate whether there is a heating target N placed above each coil or whether the bottom area of the heating target N is larger than a predetermined value, and by transmitting the estimated result to a control unit (hereinafter, referred to as an "energization control circuit") 200.

Note, although a current detection unit 280 is used to detect the amperage of the main inverter circuit MIV and the sub inverter circuits SIV1 to SIV4, the invention is not limited to this unit and other arbitrary sensors such as a mechanical sensor or an optical sensor may be used to detect the placed state of the heating target N.

As shown in the drawing, the energization control circuit 200 of the power supply of the invention is connected to the current detection unit 280 and provides a control signal to the main inverter circuit MIV and the sub inverter circuits SIV1 to SIV4 in accordance with the placed state of the heating target N. That is, the energization control circuit 200 receives a signal (data indicating the placed state of the heating target N) related to the amperage of the main heating coil MC and the sub heating coils SC1 to SC4 detected by the current detection unit 280, and when it is determined that that there is no heating target N placed or that the diameter of the heating target N is smaller than a predetermined value (120 mmφ, for example), then the energization control circuit 200 selectively controls the main inverter circuit MIV and the sub inverter circuits SIV1 to SIV4 such that supply of the high-frequency currents to the main heating coil MC and the sub heating coils SC1 to SC4 are prohibited or (if already been supplied) stopped.

The invention is capable of controlling power supply to the main heating coil MC and the sub heating coils SC1 to SC4 individually to each other by supplying the control signal to the main inverter circuit MIV and the sub inverter circuits SIV1 to SIV4 with the energization control circuit 200 in accordance with the placed state of the heating target N. Further, by not driving the main heating coil MC at the center (switching it to an OFF state) and by driving all of the sub heating coils SC1 to SC4 (switching them to an ON state), it will be possible to carry out cooking methods such as preheating of only the pan surface (side of the pan) of a frying pan and the like.

Specific operations will be described next. However, before that, main cooking menus that can be performed with the energization control circuit 200 that constitutes the core of the control means F of the invention will be described.

Rapid heating mode (A cooking menu putting priority on the heating speed. Selected with a first selection section E1). The heating power applied to the heating target N can be manually set.

A level of the total heating power of the main heating coil MC and the sub heating coils is set by the user from among the below-described nine levels in the range of 120W to 3.0 kW.

120 W, 300 W, 500 W, 750 W, 1.0 kW, 1.5 kW, 2.0 kW, 2.5 kW, 3.0 kW.

A heating power ratio of the main heating coil MC and the sub heating coils SC1 to SC4 (hereinafter, referred to as a "main-sub heating power ratio") is automatically determined by the energization control circuit 200 so as to not exceed the limit that is the above-mentioned total heating power selected by the user and so as to be within the range of the predetermined heating power ratio; the user cannot arbitrarily set the heating power ratio. For example, the main-sub heating power ratio ranges from 2:3 (during high heating power) to 1:1 (during low heating power).

The main heating coil MC and the sub heating coils SC1 to SC4 are driven simultaneously. In such a case, directions of the high-frequency currents in the adjacent areas of the main heating coil MC and the sub heating coils SC1 to SC4 are controlled to coincide with each other.

### Deep fry mode (automatic). (A cooking menu that requires rapid heating and heat retaining function. Selected with a third selection section E3)

Heating the heating target N (deep-frying pan and the like) containing oil for deep frying to a predetermined temperature (first step), automatically controlling the heating power such that the temperature of the heating target N is maintained within a predetermined range with the energization control circuit 200 (second step).
First step: rapid heating to a predetermined temperature (180°C, for example).
   The heating power of the main heating coil is 2.5 kW.
Second step: deep frying is carried out at this step and the ingredients and the like of the deep-fried food is cast in. Operating for 30 minutes at the maximum. During this step, setting of (arbitrarily) heating power with the heating power setting unit is prohibited. After elapse of 30 minutes, the heating operation is automatically ended (it is possible to command extension of the operation).

The main-sub heating power ratio is automatically determined so as to be within a predetermined range in both the first and second steps, and the user cannot arbitrarily set the heating power ratio of the main heating coil and the sub heating coils. For example, the main-sub heating power ratio automatically changes from 2:3 (during high heating power) to 1:1 (during low heating power).

The main and sub heating coils are simultaneously driven in the first step and the flows of the high-frequency currents where the main and sub heating coils are adjacent to each other coincide. This is for performing rapid heating up to the predetermined temperature. The main and sub heating coils are simultaneously driven and the flows of the currents coincide each other in the second step as well. However, when a state in which there is little temperature change during deep frying continues, the direction of the currents are made to counter each other in order to uniformize the heating.

### Preheating mode (A cooking menu putting priority on uniformity of heating. Selected with a second selection section E2)

Performing a first preheating step that heats the heating target N with a predetermined heating power while prohibiting setting or changing of the heating power, and after the end of the first preheating step, performing a heat retaining step that maintains the heating target N within a predetermined temperature range (using the detection temperature signal from the temperature sensor).
Preheating step: the main heating coil set to 1.0 kW (fixed)
   The sub heating coils set to 1.5 kW (fixed)
Heat retaining step: five minutes at the maximum. During this time period, when (arbitrary) heating power setting is not performed, the heating operation is ended automatically after elapse of five minutes.
Main heating coil set between 300 W to 100 W (the user unable to perform the setting)
Sub heating coils set between 300 W to 100 W (the user unable to perform the setting)

During the heat retaining step, when an arbitrary heating power is set, it will be the same as rapid heating.

As regards the setting of the arbitrary heating power, the user can select a level of the total heating power of the main heating coil MC and the sub heating coils from among the below-described nine levels in the range of 120W to 3.0 kW.
120 W, 300 W, 500 W, 750 W, 1.0 kW, 1.5 kW, 2.0 kW, 2.5 kW, 3.0 kW.

In this case, the main-sub heating power ratio is automatically determined by the energization control circuit 200 so that it will be within a predetermined range; the user cannot arbitrarily determine the main-sub heating power ratio. For example, the main-sub heating power ratio ranges from 2:3 (during high heating power) to 1:1 (during low heating power).

The main and sub heating coils are simultaneously driven in the preheating step and the flows of the high-frequency currents where the main and sub heating coils are adjacent to each other are in completely opposite directions. This is because importance is put on uniformizing the heating intensity by having the magnetic flux generated from both coils in adjacent areas interfere with each other. The main and sub heating coils are simultaneously driven also in the heat retaining step; however, the directions of the high-frequency currents in the areas where the main heating coil and the sub heating coils are adjacent to each other are opposite. This is to uniformize the overall temperature distribution.

Note, in the heat retaining step or after start of boiling, convection acceleration control is started on the basis of instructions from the user. The convection acceleration control will be described later.

### Water-boiling mode (A cooking menu putting priority on the heating speed. Selected with the first selection section E1)

After the user starts to heat the water in the heating target N with an arbitrary heating power and after the water starts to boil (when the energization control circuit 200 determines that the water is in a boiling state from information such as the temperature of the heating target N and the change in the degree of temperature rise detected by a temperature sensor, a display means G informs the user that the water is boiling. The heating power thereafter is automatically set, and the boiling state is maintained as it is for just two minutes.

### Water-boiling step:

The total heating power of the main heating coil and the sub heating coils is from 120 W to 3.0 kW (Arbitrarily set from among nine levels from heating level 1 to heating level 9. Default setting is heating level 7 = 2.0 kW).

The main-sub heating power ratio is automatically determined by the energization control circuit 200 so as to not exceed the limit that is the above-mentioned total heating power selected by the user and so as to be within the range of the predetermined heating power ratio; the user cannot arbitrarily set the heating power ratio. For example, the main-sub heating power ratio ranges from 2:3 (during high heating power) to 1:1 (during low heating power).
Heat retaining step: two minutes at the maximum. After elapse of 2 minutes, the heating operation is automatically ended.
Main heating coil set to 1.0 kW or lower (the user unable to perform the setting)
Sub heating coils set to 1.5 kW or lower (the user unable to perform the setting)

During this time period, when an arbitrary heating power is set by the user, it will be the same as rapid heating. The heating power can be selected from nine heating levels ranging from 120 W to 3.0 kW.

Until the object to be cooked starts to boil, the main heating coil MC and the sub heating coils SC1 to SC4 are driven simultaneously. In such a case, directions of the high-frequency currents in the adjacent areas of the main heating coil MC and the sub heating coils SC1 to SC4 are controlled to coincide each other. After the object to be cooked starts to boil, the directions of the currents are made to counter each other.

### Rice-cooking mode (A cooking menu putting priority on uniformity of heating. Selected with the second selection section E2)

After the user has set a container, which is to be the heating target N, having therein appropriate amount of rice and water, the container is heated according to a predetermined rice-cooking program (sequential program including a water absorbing step, a heating step, a boiling step, and a steaming step) and automatic rice-cooking is performed.

Water absorbing step and rice-cooking step
Main heating coil set to 0.6 kW or lower (the user unable to perform the setting. Changes automatically in accordance with the progression of the steps). Sub heating coils set to 0.7 kW or lower (the user unable to perform the setting. Changes automatically in accordance with the progression of the steps)
Steaming step: five minutes
Main coil, no heating (heating power 0 W)
Heat retaining step: five minutes at the maximum.
Main heating coil set to 200 W or lower (the user unable to perform the setting)
Sub heating coils set to 200 kW or lower (the user unable to perform the setting)

The main and sub heating coils are simultaneously driven and the flows of the high-frequency currents where the main and sub heating coils are adjacent to each other are controlled so that they are in opposite directions. This is because importance is put on uniformizing the heating intensity by having the magnetic flux generated from the two coils in adjacent areas interfere with each other.

Note that after the rice-cooling step is completed, if the detection circuit (a placement-of-heating-target detection unit) 280 detects that the heating target N is not placed above the main and sub heating coils, or during either of the steaming step and the heat retaining step, if the placement-of-heating-target detection unit similarly detects that the heating target N is not placed above the main and sub heating coils at the same time, then the heating operation of the main and sub heating coils are immediately stopped.

### Stew mode (A cooking menu putting priority on the heating speed. Selected with the first selection section E1)

### Heating step (until boiling starts):

The heating power exerted to the heating target N can be set manually.

The level of the total heating power of the main heating coil MC and the sub heating coils is selected by the user from among the below-described nine levels in the range of 120W to 3.0 kW.
120 W, 300 W, 500 W, 750 W, 1.0 kW, 1.5 kW, 2.0 kW, 2.5 kW, 3.0 kW.

The default value is 2 kW (when the user does not select any heating power, heating is started at 2 kW)

The main-sub heating power ratio is automatically determined by the energization control circuit 200 so that it will be within a predetermined range; the user cannot arbitrarily determine the main-sub heating power ratio. For example, the main-sub heating power ratio ranges from 2:3 (during high heating power) to 1:1 (during low heating power).

### After start of boiling:

When the water starts to boil (when the control unit estimates that the water is in a boiling state from information such as the temperature of the heating target N and the change in the degree of temperature rise detected by the temperature sensor), it is informed to the user.
Then, for 30 minutes continuously (can be extended), the heating operation is automatically continued at a default value (600 W) so as to maintain the boiling state; however, the user may arbitrary select the heating power after the start of boiling.

In all of the steps until the object to be cooked starts to boil, the main heating coil MC and the sub heating coils SC1 to SC4 are driven simultaneously, and the directions of the high-frequency currents in the adjacent areas of the main heating coil MC and the sub heating coils SC1 to SC4 are controlled to coincide each other. After start of boiling, convection acceleration control is started on the basis of an operation by the user. The convection acceleration control will be described later.

### Water-boiling and heat retaining mode (A cooking menu putting priority on the heating speed and on uniformity of the heating. Selected with the third selection section E3)

After the user starts to heat the water in the heating target N with an arbitrary heating power and after the water starts to boil (when the control unit estimates that the water is in a boiling state from information such as the temperature of the heating target N and the change in the degree of temperature rise detected by a temperature sensor), a display unit G informs the user that the water is boiling. The heating power from then on is automatically set, and the boiling state is maintained as it is for just two minutes.

### Water-boiling step:

The total heating power of the main heating coil and the sub heating coils is 120 W to 3.0 kW (Arbitrarily set from among nine levels from heating level 1 to heating level 9. Default setting is heating level 7 = 2.0 kW).
The main-sub heating power ratio is automatically determined by the energization control circuit 200 so as to not exceed the limit that is the above-mentioned total heating power selected by the user and so as to be within the range of the predetermined heating power ratio; the user cannot arbitrarily set the heating power ratio. For example, the main-sub heating power ratio ranges from 2:3 (during high heating power) to 1:1 (during low heating power).
Heat retaining step: 10 minutes at the maximum. After elapse of 10 minutes, the heating operation is automatically ended.
Main heating coil set to 1.0 kW or lower (the user unable to perform the setting)
Sub heating coils set to 1.5 kW or lower (the user unable to perform the setting)

Until the object to be cooked starts to boil, directions of the high-frequency currents in the adjacent areas of the main heating coil MC and the sub heating coils SC1 to SC4 are controlled to coincide each other. After the object to be cooked starts to boil, the directions of the currents are made to counter each other. After start of boiling, convection acceleration control is started on the basis of an operation by the user. The convection acceleration control will be described later.

The basic operation of the induction cooking system according to the invention will be described below with reference to Fig. 5. After activating the main power, when the user instructs an operation preparing heating with the operating unit (not shown), the amperage of the main heating coil MC and the sub heating coils SC1 to SC4 are detected using the current detection unit 280 to determine whether there is a heating target placed above each coil or whether the bottom area of the heating target N is larger than a predetermined value. The result is transmitted to the energization control circuit 200 that is a control unit (step MS1).

When the pan is a suitable one, the energization control circuit 200 makes, for example, a liquid crystal display screen of the display means G that is disposed in the control unit E or near the control unit E to display a display that encourages selection of the desired cooking menu (MS2). When the pan is an unsuitable deformed pan (one with a concave bottom or the like) or is an abnormally small pan or the like, heating forbidding processing is performed (MS6).

When the user selects and inputs, with the operating unit, the cooking menu, heating power, the cooking time, and the like, a full-fledged heating operation is started (MS4).

As the cooking menu displayed on the display means G, there are seven modes, namely "rapid heating mode", "deep fry mode", "water-boiling mode", "preheating mode", "rice-cooking mode", "boiling mode", and "water-boiling and heat-retaining mode" that are described above. In the subsequent description, the wording "mode" may be omitted and, for example, "rapid heating mode" may be described as "rapid heating".

When the user selects an arbitrary menu from the seven cooking menus, the program embedded in the energization control circuit 200 automatically selects a control mode corresponding to the menu, and setting such as whether to energize each of the main heating coil MC and the sub heating coils SC1 to SC4, the amount of energization (heating power), and the energization time are set. Depending on the cooking menu, a display encouraging the user to set an arbitrary heating power, energizing time, and the like is displayed on the display unit (MS5).

Note that while there are three selection sections, namely the first, second, third selection sections E1, E2, and E3, there are seven cooking menus displayed on the display means G. However, actually, there is a key in E1 that allows selection of three modes, namely, the "rapid heating", the "water-boiling", and the "boiling", for example. Similarly, in the selection section E2, there is a key for two modes, namely, the "preheating" and the "rice-cooking", and in the selection section E3, there are keys for two modes, namely, the "water-boiling and heat-retaining" and the "deep fry".

### (Convection Acceleration Control)

The convection acceleration control that is a characteristic of the invention will be described next. There are three types of convection acceleration control. Note that after start of boiling or immediately before the boiling, for example, in a case in which the temperature sensor detects that the temperature of the heating target N has risen to 98°C, or in a case in which the energization control circuit 200 determines that it is close to a boiling state based on the elapsed time from the start of cooking, it is desirable that the convection acceleration control is started after the above and at a timing the user has instructed arbitrarily, for example, immediately after the operation of the user. However, in a specific cooking menu, after it is in a boiling state, unless the user prohibits or unless the heating is stopped midway, it may be shifted to convection acceleration control automatically. The convection acceleration control will be described later.

### (First Convection Acceleration Control)

This control heats the heating target N with the sub heating coils SC1 to SC4 during the time period in which the main heating coil MC is not driven.

Fig. 2(A) illustrates a state in which high-frequency currents are simultaneously supplied to the four sub heating coils SC1 to SC4 from each of the inverter circuits SIV1 to SIV4, respectively. Fig. 2(B) illustrates a state in which the four sub heating coils SC1 to SC4 are not supplied with any high-frequency currents and are suspended of their heating operations, and, conversely, the main heating coil MC alone is supplied with the high-frequency current from the main inverter circuit MIV and is heat driven.

Fig. 3(A) illustrates a state in which high-frequency currents are individually and, further, simultaneously supplied to the neighboring pair (hereinafter, referred to as a "group") of sub heating coils SC1 and SC3 among the four sub heating coils SC1 to SC4 from the inverter circuits SIV1 and SIV3. In the above case, the heat generating portion of the heating target N is a belt-shaped portion including portions immediately above the two neighboring sub heating coils SC1 and SC3 and a portion between the two. Accordingly, the object to be cooked, such as miso soup or stew, contained in the heating target N is heated in the belt-shaped portion including portions immediately above the two neighboring sub heating coils SC1 and SC3 and the portion between the two, and an upflow is generated with the heated portion as its reference point. As depicted by an arrow YC in Fig. 3(A), when this state is continued, it will be possible to generate a long convection heading towards the opposite side that is the farthest side from the sub heating coils SC1 and SC3. Generation of reflux is facilitated in which the convection turns into a downflow at the opposite side, flows laterally through the bottom of the object to be cooked, and returns towards the sub heating coils SC1 and SC3 again.

In other words, the sequential route (referred to as a "circulation path" or a "convection loop") can be made long, in which the liquid object to be cooked returns back again with drop in temperature after spontaneously ascending with increase in temperature.

RL1 indicates a length of the long convection route where the ascended liquid of the object to be cooked moves towards the other side to turn into a downflow. The starting point of RL1 is a center point XS of the sub heating coils SC1 to SC4. Further, RL2 indicates a length from a single sub heating coil SC1 to the opposite wall of the heating target N such as a pan. As it can be understood from Fig. 3(A), RL1 and RL2 are the same (RL1 = RL2).

Next, as shown in Fig. 3(B), a state in which high-frequency currents IB are individually and simultaneously supplied to the two neighboring sub heating coils SC1 and SC2 among the four sub heating coils SC1 to SC4 from each of the inverter circuits SIV1 and SIV3 is illustrated. The direction of the currents IB flowing in the sub heating coils SC1 and SC2 are opposite each other. In this case, since the heat generating portion of the heating target N is a belt-shaped portion including portions immediately above the two neighboring sub heating coils SC1 and SC2 and a portion between the two, the direction of the generated convection is as indicated by an arrow YC in Fig. 3(B).

Similarly, as shown in Fig. 3(C), a state in which high-frequency currents IB are individually and simultaneously supplied to the pair of two neighboring sub heating coils SC2 and SC4 among the four sub heating coils SC1 to SC4 from each of the inverter circuits SIV2 and SIV4 is illustrated. In this case, since the heat generating portion of the heating target N is a belt-shaped portion including portions immediately above the two neighboring sub heating coils SC2 and SC4 and a portion between the two, the direction of the generated convection is, as indicated by an arrow YC in Fig. 3(C), completely in an opposite direction to the state illustrated in Fig. 3(A).

As described in the above embodiment, the first convection acceleration control is a method in which main heating is carried out by a group of two neighboring sub heating coils out of the four sub heating coils SC1 to SC4. In other words, it is a method of driving half or more of the sub heating coils but not all simultaneously, among the four sub heating coils. The first convection acceleration control is implemented not only to a case with four sub heating coils SC1 to SC4. In a case in which, for example, six sub heating coils are used, three or four sub heating coils may be simultaneously driven. That is, three or four sub heating coils may be grouped as a group and heating and driving may be carried out per each group.

With this first convection acceleration control, it will be possible to induce a flow facilitating convection through the entire width of the pan from one side to the opposing other side of the pan and conversely returning from the other side to the one side. Further, even if no convection is caused, since the position of the pan heated by the sub heating coils SC1 to SC4 changes on the peripheral side of the main heating coil MC, when heating a thick cooked liquid with high viscosity, it will be possible to suppress local burning due to evaporation of water content caused by concentration of heat to only one place.

The preferable timing for sequentially switching from Fig. 3(A) to Fig. 3(B) and from Fig. 3(B) to Fig. 3(C) is not the same among objects to be cooked; however, switching is started at least from after the object to be cooked reaches its boiling temperature or when close to 100°C that is immediately before start of its boiling. From then on, the switching is performed in, for example, a 10 to 15 seconds interval.

Alternatively, when a 30-minute stew cooking is set, the switching may be started five minutes before the end of cooking and be performed for 5 minutes until the end of cooking. Further, switching of 30 seconds may be repeated a few times so that absorbing of the soup by the ingredients such as vegetables, meat, and the like is facilitated. It is desirable that the heating power, the interval of energization, and the order of the four sub heating coils SC1 to SC4 are selected based on experiment results of various cooking menus because, in actuality, the generated intensity of the convection is greatly affected by the viscosity of the liquid of the object to be cooked even when the same sub heating coils are heat driven with the same heating power.

With this first convection acceleration control, it will be possible to carry out a cooking method (heating method) such as only preheating the pan surface (side of the pan) of a frying pan and the like by driving (setting to an ON state) the four sub heating coils SC1 to SC4 (that is disposed on the same circumference with a predetermined interval) corresponding to the periphery of the heating target N.

Fig. 4 is an explanatory diagram illustrating the distribution timings of the currents flowing in the main heating coil MC and the sub heating coils SC1 to SC4. "ON" indicates an ON state in which high-frequency current is applied to the coils that is to be heat driven, and "OFF" indicates an OFF state in which current is not applied.

In Fig. 4, as indicated by a broken line, the main heating coil MC is not energized. During this unenergized period, a group of sub heating coils including half or more of the sub heating coils but not all, in this example, a group of a pair of sub heating coils constituted by two neighboring sub heating coils, performs induction heating.

As it can be understood from Fig. 4, among a plurality of intervals divided by a predetermined time interval (hereinafter, merely referred to as an "interval"), in the first interval I, the sub heating coils SC1 and SC2 are ON, and in the next interval II, the sub heating coil SC1 is turned OFF while SC2 is kept ON. SC3 is turned ON.

In the next interval III, the sub heating coil SC1 is kept OFF while SC2 is turned OFF. SC3 is kept ON and SC4 is turned on anew. In the next interval IV, SC3 is turned OFF. SC4 is kept ON and SC1 is turned on anew. As mentioned above, each of the intervals I to IV shown in this diagram may be about 10 to 15 seconds. Subsequently, the currents flowing in the sub heating coils SC1 to SC4 are turned ON and OFF in a predetermined time interval.

### (Modification of Group of Sub Heating Coils)

Note, in Embodiment 1, although the constitution of the sub heating coils making up the group is changed in each of the intervals (I, II, III, and the like), the constitution may be unchanged and be fixed. For example, the sub heating coils may be divided into a group of SC1 and SC2 and a group of SC3 and SC4 at all times, and the two groups may be energized alternately such that while one group is ON, the other group is OFF. Alternatively, in a case in which the constitution is changed, the order of energization may be changed while the first group that is heat driven is cycled, as shown in Fig. 3, from the energization interval I to the energization interval IV. For example, when the first group in interval I is sub heating coils SC1 and SC2 as shown in Fig. 3(B), the grouping in interval II is SC2 and SC4 as shown in Fig. 3(C), and the grouping in interval V becomes sub heating coils SC1 and SC2 again as shown in Fig. 3(B), then it can be said that the heat driven first group has sequentially changed in a clockwise direction; however, this can be changed in an anticlockwise direction. In that case, the two cycles, namely energization intervals I to IV and the energization intervals V to VIII, may change the sub heating coils subject to driving in the clockwise direction as shown in Fig. 3, and from the stage entering the third cycle, that is, from interval IX, change may be carried out in the anticlockwise direction. The pace in which the heated portion of the sub heating coils are moved, that is, the switching intervals of the energization (the above-described energization intervals I, II, III to VIII, and the like), may be changed as each cycle is repeated. These changing forms can be applied to second and third convection acceleration control that will be described below.

### (Modification of Sub Heating Coils)

As shown in Fig. 6, the four sub heating coils SC1 to SC4 may be reduced to two sub heating coils. That is, a right-side sub heating coil SCR shown in Fig. 6 is like a connection of the sub heating coils SC1 and SC2 that are illustrated in Figs. 1 to 3 and the entirety is curved extending along substantially the entire right side of the peripheral line of the main heating coil MC. The entirety of a left sub heating coil SCL has a curved shape extending along substantially the entire left side of the peripheral line of the main heating coil MC. The left sub heating coil SCL has a shape that is bilaterally symmetrical to the right-side sub heating coil SCR with the center point X1 of the main heating coil in between.

The right sub heating coil SCR and the left sub heating coil SCL are completely the same sub heating coils. These sub heating coils can be commonly used by just changing their disposed orientation. Further, the breadth of the two sub heating coils SCR and SCL are about half of the radius of the main heating coil MC. When the diameter of the main heating coil MC is about 180 to 200 mm, the breath of each of the sub heating coils SCR and SCL is about 45 to 50 mm. In order to increase the degree of flatness and further elongate its shape, there lies many technical constrains such as the winding method of the assembled wires.

In this modification, when high-frequency current is alternately applied in a predetermined interval (the interval does not have to be uniform) to the sub heating coil SCR on the right side and left sub heating coil SC from the respective one of the inverter circuits, since the right peripheral line and the left peripheral line of the heating target N are alternately and intensively induction heated, convection is alternately generated in the object to be cooked from the right and the left. In this case as well, it is effective to set the heating power of the sub heating coil SCR on the right side performing heating alone or the heating power of the left sub heating coil SCL performing heating alone during the convection acceleration mode to be higher than the heating power of the sub heating coil SCR on the right side and the heating power of the left sub heating coil SCL during induction heating with maximum heating power while the right and left side sub heating coils SCR and SCL are in an ON state. Note that an arrow IA illustrated on the main heating coil MC indicates the direction of a high-frequency current IA that flows in the main heating coil MC when the coil is driven.

In view of heating efficiency, it is preferable that when the main heating coil MC and either or both of the right sub heating coil SCR and the left sub heating coil SCL are simultaneously heat driven, the direction of the high-frequency current IA flowing in the main heating coil MC and the direction of the high-frequency current IB flowing in each of the left and right sub heating coils SCR and SCL are the same on the adjacent sides as shown by solid-line arrows in Fig. 6 (In Fig. 6, a case in which the direction is clockwise in the main heating coil MC and anticlockwise in the left and right sub heating coils SCR and SCL is shown). This is because, in an area where two independent coils are adjacent to each other, when the currents of the coils flow in the same direction, the magnetic fluxes generated by the currents intensifies each other, the density of the magnetic flux that interlink with the heating target N is increased, and more eddy current is generated on the bottom side of the heating target; hence, efficient induction heating is enabled.

The heating power of 3 kW--when the three coils, namely the right sub heating coil SCR, left sub heating coil SCL, and the main heating coil MC, are simultaneously heating a single pan, and when the right sub heating coil SCR is set to 1 kW, the left sub heating coil SCL is set to 1 kW, and the main heating coil MC is set to 1 kW--is, in the case of the above described convection acceleration mode, set such that the right sub heating coil SCR is set to 1.5 kW and the left sub heating coil SCL is also set to 1.5 kW while the two are alternately switched to an ON state. Note that when the number of sub heating coils is reduced to two, it will be possible to reduce the driven number of inverter circuits; hence, advantages such as cost reduction due to reduction in circuit configuration and miniaturization due to reduction in area of the circuit board can be anticipated.

As it is apparent from the modification in Fig. 6, the first convection acceleration control includes a top plate on which a heating target such as a pan for putting in an object to be cooked is placed, an annular main heating coil MC disposed below the top plate, flat first sub heating coil SCR and second sub heating coil SCL that are adjoinedly disposed on the both sides of the main heating coil and that has a width that is smaller than the radius of the main heating coil, inverter circuits that each supply induction heating power to the main heating coil MC and the first and second sub heating coils SCR and SCL, a control unit that controls the output of each inverter circuit, an operating unit that instructs the start of heating and the heating power settings to the control unit. The control unit repeats the energization switching operation for the first and the second sub heating coils a plurality of times such that the second sub heating coil is supplied with induction heating power from the relevant inverter circuit during a time period in which the first sub heating coil is not supplied with the induction heating power, and subsequently, the first sub heating coil is supplied with induction heating power from the relevant inverter circuit during a time period in which the supply of the induction heating power to the second sub heating coil is stopped.

As described above, in Embodiment 1, it is possible to easily select the intended cooking menu since in the display means E that displays the heating condition, selection keys E1, E2, and E3 of the first, second, and third selection section are displayed in form of keys such as a capacitance switch that enables selection operation of the user. With the selection, the control unit automatically determines the suitable heat driving pattern, and, thus, it will be possible to perform heat cooking with a heating coil driving form according to the intent and desire of the user such as prioritization of heating time or prioritization of uniformity of temperature. As such, since the selection key for the cooking menu is made operable in the display unit, an advantage such as elimination of improper use by the user and alleviation of mental stress can be enjoyed.

As regards an application of the modification, there is one that enables generation of a different convection route by alternating the energization period of the main heating coil MC at the center and that of the right sub heating coil SCR and the left sub heating coil SCL. For example, the right sub heating coil SCR is first driven for 15 seconds with a heating power of 1 kW, then the left sub heating coil is driven for 15 seconds with a heating power of 1 kW. After repeating this two times, the main heating coil MC is driven alone for 15 seconds with a heating power of 1 kW. With the above, it will be possible to create a convection that ascends from above the main heating coil MC and that spreads out radially to the peripheral line side of the pan. With the above, including the convection with a long route created by heating the bottom of the pan in its outer circumference with the left and right sub heating coils SCR and SCL, it will be possible to create two types of convections. As such, stirring effect and temperature uniformization of the entire object to be cooked in the pan, and suppression of boiling over can be anticipated.

### (Second Convection Acceleration Control)

In this control, during the period in which the main heating coil MC is not driven, the heating target N is heated by a group of more than two neighboring sub heating coils (also referred to as a "group") and driving power is made different between the groups of sub heating coils. That is, the control is characterized in that induction heating power higher than the power supplied to a first group of sub heating coils is supplied to a second group of sub heating coils, and, subsequently, the induction heating power supplied to the first group of sub heating coils is reduced and power higher than this is supplied to the second group of sub heating coils, and, further, this operation is repeated a plurality of times. In other words, it is a method in which, among the four sub heating coils, half or more of the sub heating coils but not all constituting a group are simultaneously driven, and the driving power is changed in the rest of the sub heating coils such that the total heating power of the group of half or more of the sub heating coils but not all is higher than the total heating power of the rest of the sub heating coils.

Subsequently, description will be given in detail.

As shown in Fig. 3(B), the high-frequency currents IB are simultaneously supplied to the two neighboring sub heating coils SC1 and SC2 among the four sub heating coils SC1 to SC4 from each of the inverter circuits SIV1 and SIV2. In this case, a heating power of 1.0 kW (a second heating power) is set to each of the two sub heating coils SC1 and SC2. In this case, each of the two sub heating coils SC4 and SC3 that are at a position symmetric to the two sub heating coils SC1 to SC2 with the center point X1 in between are driven with a heating power of 500 W (a first heating power).

Next, as shown in Fig. 3(C), among the two sub heating coils SC1 and SC2 described above, while the heating power of SC1 is reduced by half to 500 W (the first heating power) and the heating power of SC2 is kept the same, the sub heating coil SC4 that is adjacent to SC2 is driven at 1.0 kW (the second heating power). SC3 is kept at 500 W (the first heating power).

Next, as shown in Fig. 3(D), among the two sub heating coils SC2 and SC4 described above, while the heating power of SC2 is reduced by half to 500 W and the heating power of SC4 is kept the same, the sub heating coil SC3 that is adjacent to SC4 is driven at 1.0 kW. SC1 is kept at 500 W.

As it is apparent from the above description, the control is characterized in that the group of two neighboring sub heating coils is driven with a high heating power and the group of the remaining two sub heating coils is driven with a lower heating power, and further the group with high heating power and the group with low heating power are switched such that the position of the portion where heating is intense is changed.

With this control, it will be possible to carry out cooking methods and heating methods such as heating the center portion of the frying pan and the like while effectively preheating the pan surface (side of the pan). Further, since the center portion of the pan heated by the sub heating coils SC1 to SC4 changes in the circumference of the main heating coil MC, when heating a thick cooked liquid with high viscosity, it will be possible to suppress local burning.

As such, the second convection acceleration control is a method in which main heating is carried out by a pair of two neighboring sub heating coils out of the four sub heating coils SC1 to SC4. In other words, it is a method of driving, among the four sub heating coils, half or more of the sub heating coils but not all simultaneously and creating a difference between the driven heat power of the group of the rest of the sub heating coils and that of the half or more of the sub heating coils but not all. The second convection acceleration control is implemented not only to a case with four sub heating coils SC1 to SC4. In a case in which, for example, six sub heating coils are used, three or four sub heating coils may be simultaneously driven. Note that it is preferable that the second heating power is twice or more than the first heating power; however, it may be 1.5 times or more. Further, in the method in which the four or more sub heating coils are divided into the first group of two neighboring sub heating coils and the other group (the second group), it is preferable that the total of the second heating power of the first group of sub heating coils is twice or more of the total of the second heating power; however, it may be 1.5 times or more.

Furthermore, as shown in Fig. 6 which is a modification of the sub heating coils, two sub heating coils are provided in place of the four sub heating coils SC1 to SC4. This modification also applies to the second convection acceleration control. That is, a top plate in which a heating target such as a pan for putting in a cooked object is placed, an annular main heating coil MC disposed below the top plate, flat first sub heating coil SCR and second sub heating coil SCL that are adjoinedly disposed on the both sides of the main heating coil and that has a width that is smaller than the radius of the main heating coil, inverter circuits that each supply induction heating power to the main heating coil MC and the first and second sub heating coils SCR and SCL, a control unit that controls the output of each inverter circuit, an operating unit that instructs the start of heating and the heating power settings to the control unit is included. The control unit supplies induction heating power that is higher than the power supplied to the first sub heating coil SCR from the relevant inverter circuit to the second sub heating coil SCL, and subsequently, reduces the induction heating power supplied to the second sub heating coil SCL and supplies power that is higher than this to the first sub heating coil SCR from the relevant inverter circuit. The control unit repeats the energization switching operation for the first and the second sub heating coils SCR and SCL a plurality of times.

### (Third Convection Acceleration Control)

This control is related to the third aspect of the invention. At the same time period when the main heating coil MC is driven or when the main heating coil MC is suspended of its driving, heating of the heating target N is performed with the sub heating coils SC1 to SC4. That is, the characteristics of the third control are as below. The plurality of flat sub heating coils that has a width that is smaller than the radius of the main heating coil and that is disposed on both sides of the main heating coil are divided into the first group and the second group. The groups are disposed on the both sides of the main heating coil. During a time period in which induction heating power having the first heating power is continuously or intermittently supplied to the main heating coil, and under a state in which supply of induction heating power to the first group is stopped, a second heating power that is higher than the first heating power is supplied to the second group from the relevant inverter circuit. Subsequently, the induction heating power supplied to the first group is stopped, a third heating power that is higher than the first heating power is supplied to the second group from the relevant inverter circuit. The above operation is repeated for a plurality of times to generate a convection with a long route in the object to be cooked inside the heating target. Even if no convection is created with the above, since the center portion of the pan heated by the sub heating coils SC1 to SC4 changes in the portion outside the circumference of the main heating coil MC, when heating a thick cooked liquid with high viscosity, it will be possible to suppress local burning.

Fig. 7 is a diagram illustrating the distribution timings of the currents flowing in the main heating coil MC and the sub heating coils SC1 to SC4. "ON" indicates an ON state in which high-frequency current is applied to the coils that is to be heat driven, and "OFF" indicates an OFF state in which current is not applied.

As indicated by a broken line in Fig. 7, the main heating coil MC is energized continuously from the first interval I to interval IV, but turns into an unenergized period in the subsequent four intervals. Induction heating is performed by a group of half or more of the sub heating coils but not all (in this example, two) during this energized and unenergized period. The control is characterized in that the total heating power during this induction heating is set to be higher than the heating power (first heating power) of the main heating coil "when driving for non-convection acceleration control".

The "when driving for non-convection acceleration control" indicates each of the below two cases. Note that when control is performed, the first heating power may not be determined by a condition that satisfies both of the below case, and the first heating power may be determined by either one of the case.
(1) When cooking is performed under normal operation in which the main heating coil MC and all of the sub heating coils are simultaneously driven to exert the maximum level of heating. For example, when the main heating coil MC and all of the sub heating coils are driven simultaneously, the maximum heating power setting is 3 kW, and the heating power ratio distributed to the main heating coil is 1 kW when heating at 3 kW, then, this 1 kW is the heating power of the main heating coil "when driving for non-convection acceleration control".
(2) In a case in which cooking is performed by heat driving the main heating coil MC alone in a regular manner, when the main heating coil MC is operated under its maximum heating power setting. For example, when the maximum heating power of the main heating coil MC alone is 1.2 kW, this 1.2 kW is the heating power of the main heating coil "when driving for non-convection acceleration control".

As it is apparent from Fig. 7, in all of the intervals, the group of half or more of the sub heating coils but not all (first group) is constituted by the two sub heating coils SC1 and SC2 and the second group is constituted by the two coils SC3 and SC4. In the first interval I, the first group is ON and the second group is OFF. In the next interval II, the first group is turned OFF and the second group is turned ON.

In the next interval III, the first group is turned ON again and the second group is turned OFF. Each of the intervals I to IV shown in this diagram may be about 10 to 15 seconds, for example. Subsequently, as above, the currents flowing in the sub heating coils of the first group and the second group are turned ON and OFF alternately in a predetermined time interval.

### (Modification of Third Convection Acceleration Control)

Fig. 8 is a diagram illustrating the distribution timings of the currents flowing in the main heating coil MC and the sub heating coils SC1 to SC4. "ON" indicates an ON state in which high-frequency current is applied to the coils that is to be heat driven, and "OFF" indicates an OFF state in which current is not applied. Regarding the sub heating coils, the group of sub heating coils (first group) is constituted by half or more of the sub heating coils but not all, namely the two sub heating coils SC1 and SC2. On the other hand, the second group is constituted by the remaining two, that is, SC3 and SC4. The constitution of the groups are not changed during cooking such that the first group is fixed to the sub heating coils SC1 and SC2 at all times.

As indicated by a broken line in Fig. 8, the main heating coil MC is energized (with the first heating power) continuously from the first intervals I to II, but turns into an unenergized period in the subsequent four intervals (III to VI). During the induction heating period of the main coil MC (with the first heating power) in the first two intervals, the driving of all the four sub heating coils SC1 to SC4 are stopped.

In the next interval III, the energization of the main heating coil MC is stopped. Alternatively, when in this interval III, the first group of sub heating coils performs induction heating. The total heating power during this induction heating is a (second) heating power (1.5 kW or 2 kW, for example) that is higher than the first heating power (1 kW, for example) of the main heating coil. The second group of sub heating coils is not heat driven.

Next, when in interval IV, while energization of the main heating coil MC is still suspended, the heating of the first group of sub heating coils is stopped in this interval IV. Alternatively, the second group of sub heating coils SC3 and SC4 is heat driven. The total heating power during this induction heating is the (third) heating power (1.5 kW or 2 kW, for example) that is higher than the first heating power (1 kW) of the main heating coil. Note that the heating power of the third heating power and the second heating power are the same. As long as they are higher than the first heating power (1 kW), they do not have to be the same.

Next, when in interval V, while energization of the main heating coil MC is still suspended, in this interval V, the heat driving of the first group of sub heating coils is resumed. In this case, the total driven heat power of the two sub heating coils SC1 and SC2 are set to the second heating power (1.5 kW or 2 kW, for example) that is higher than the first heating power. In this interval V, the heating of the second group of sub heating coils SC3 and SC4 are stopped.

Next, when in interval VI, while energization of the main heating coil MC is still suspended, in this interval VI, the heating of the first group of sub heating coils is stopped once again, and, alternatively, the second group is heat driven. In this case, the total driven heat power of the second group of the two sub heating coils SC3 and SC4 is set to the third heating power that is higher than the first heating power.

In the next interval VII, the energization of the main heating coil MC is resumed. At this time, the heating power is set to the first heating power. Further, in this interval VII, the first group of sub heating coils is heat driven again. In this case, the total driven heating power of the first group of the two sub heating coils SC1 and SC2 is set to heating power 2 that is higher than the first heating power. The heating of the second group is suspended.

Next, when in interval VIII, while energization of the main heating coil MC is maintained at heating power 1, the heating of the first group of sub heating coils SC1 and SC2 is stopped. Alternatively, the second group of sub heating coils is heat driven once again. In this case, the heating power level is set to the third heating power.

As above, the main heating coil MC is heat driven in two intervals, and the heating thereof is suspended in four intervals. Hereafter, it is a repetition of the above. Meanwhile, the first and second groups of sub heating coils each follow a pattern in which heating is suspended for four intervals, and, then, heat driving is performed once in every other interval alternately. Note that symbol (A) has been attached to interval I of Fig. 8, (B) to interval III, (C) to interval IV, and (D) to interval VII. The intervals with (A), (B), (C), and (D) correspond to (A), (B), (C), and (D) of Fig. 9. The sequential switching of the driving period in Fig. 9 can be understood. As such, there is a total of five energization patterns.

Note that the preferable timing for switching the energization, that is, each interval (I to IX, etc.) is not the same among objects to be cooked; however, switching is started at least from after the object to be cooked reaches its boiling temperature or when close to 100°C that is immediately before start of boiling. From then on, the switching is performed in, for example, a 10 to 15 seconds interval. Alternatively, when stew cooking of 30 minutes is set, the switching may be started five minutes before the end of cooking and be performed for 5 minutes until the end of cooking.

It is desirable that the heating level, the interval of energization, and the order are selected based on experiment results of various cooking menus because the intensity of the convection, generated by the difference in heating powers between the first, second, and third heating powers or the absolute value of each of the first, second, and third heating power, is greatly affected in actuality by the viscosity of the liquid of the object to be cooked when the main heating coil MC and the sub heating coils are heat driven with the first and second heating powers.

Specific examples of the above when applied to actual cooking menus will be described below.

For example, a case in which the cooking menu "boiling" is carried out at 2.0 kW will be described.

First, as described above, since the default value is 2.0 kW, heating is started at 2.0 kW from the start with no need to initially input 2.0 kW to the heating power setting unit (not shown). In this case, the main-sub heating power ratio is automatically determined by the energization control circuit 200 such that there is no need for the user to arbitrary set the ratio. For example, the heating power of the main heating coil MC is set to 800 W and the total heating power of the four sub heating coils is set to 1200 W (that is higher than the "first heating power").

Then, when water starts to boil (when the control unit estimates that the water is in a boiling state from information such as the temperature of the heating target N and the change in the degree of temperature rise detected by a temperature sensor) after being heated at 2.0 kW, the energization control circuit 200 issues a notification signal which is then displayed to notify the user of the boiling by means of characters and light on the display means G that displays the operating condition of the heating means. At this time, if the heating power is not set once more, automatic reduction of the heating power is notified.

If the user does not perform any operation, the energization control circuit 200 outputs a signal commanding reduction of heating power to the main inverter circuit MIV and the sub inverter circuits SIV1 to SIV4 when a boiling state is reached. For example, the heating power of the main heating coil MC is set to 300 W and the total heating power of the four sub heating coils is set to 300 W.

This state is continued for 30 minutes at the longest. If no user operation is performed during this period, driving of all the induction heating sources are automatically stopped. Until this step in which boiling starts, directions of the high-frequency currents in the adjacent areas of the main heating coil MC and the sub heating coils SC1 to SC4 are controlled to coincide each other.

On the other hand, if the user sets the heating power once more after start of boiling, the third convection acceleration control is performed automatically.

For example, if the user increases the heating power to 2.0 kW rather than leaving it at the default value (600 W) after start of boiling, the energization control circuit 200 sets the heating power (first heating power) of the main heating coil MC to 500 W (first heating power), the total heating power of the two neighboring sub heating coils to 1.5 kW, and the total heating power (third heating power) of the other group of sub heating coils to 1.5 kW.

While the main heating coil MC is continuously driven at 500 W, the four adjacent sub heating coils are divided into two groups such as a group of two sub heating coils SC1 and SC2, and a group of two sub heating coils SC3 and SC4, the two groups are alternately heat driven for 15 seconds each at a total of 1.5 kW (heating power of 750 W is input to a single sub heating coil).

Further, if the user increases the heating power to 3.0 kW, which is the maximum heating power, rather than to 2 kW after start of boiling, the energization control circuit 200 sets the heating power (first heating power) of the main heating coil MC to 1.0 kW (first heating power), the total heating power of the two neighboring sub heating coils to 2.0 kW, and the total heating power (third heating power) of the other group of sub heating coils to 2.0 kW.

Until the step in which boiling starts, the directions of the high-frequency currents in the areas in which the main heating coil MC and each of the sub heating coils SC1 to SC4 are adjacent to each other are controlled to be the same so that high heating power can be exerted; however, after start of boiling, the currents are switched to opposite directions. For example, in the adjacent area of the main heating coil MC and the sub heating coil SC1, and the adjacent area of the main heating coil MC and the sub heating coil SC2, the directions of the high-frequency currents are made to counter each other.

Note that in the above description, when the heating power after the start of boiling is set to 2 kW, a method is used in which the main heating coil MC is intermittently driven at 500 W; however, the main heating coil MC may be driven continuously. In either case, it is for generating more convection with at least two adjacent sub heating coils. That is, specific gravity of the object to be cooked at the peripheral line becomes low since the object to be cooked is induction heated alternately with the two groups of sub heating coils at a position near, to the greatest extent possible, to the periphery of the heating target N. Note that the invention is not limited to the above-described exemplary heating power of the main heating coil MC and the exemplary total heating power of the sub heating coils.

Further, in order to increase the convection acceleration effect, it is preferable that the heating at the peripheral line of the heating target N is more intense than the heating at its center portion. Assuming that the main heating coil MC is set to 1.5 kW as a first heating power and the total of the plural adjacent sub heating coils out of the sub heating coils SC1 to SC4 is set to 1.5 kW (as a second heating power), by carrying out the energization rate control of the main heating coil MC at all times such that the energization rate is switched to 50% during the time after start of boiling, the heating power will be substantially equivalent to 750 W. In such a case as above, it is possible to obtain the convection acceleration effect of the present invention as well.

As shown in Fig. 3, the "time selective" energization switching control of the sub heating coils SC1 to SC4 can suppress boiling over when stewing and boiling. That is, as in the above-described "water-boiling and heat-retaining mode", when in the boiling stage after the start of boiling with the cooking menu putting priority on heating speed and uniformity, it will be possible to avert a state in which the center or a specific single position of the pan is intensively heated, which is equivalent to sequentially moving the bottom of the pan that is induction heated, by performing energization switching control of the sub heating coils SC1 to SC4 as shown in Fig. 3.

Although the portion of the sub heating coils that is energized heats the pan and, on the other hand, the pan bottom portion above the portion of the sub heating coils that is unenergized and that is away from the energized coils does not perform heating, the heat from the heated portion is transmitted through the pan so as to perform preheating, thus, an advantageous effect of uniform distribution of heat to the entire object to be cooked in the pan can be anticipated. Note that "time selective" not only refers to a constant cycle (for example, 30 seconds), but also means that the switching cycle of the initial cycle and the next cycle during the same cooking menu may be changed or that the cycle and the repetition number thereof may be changed depending on the cooking menu and the type of object to be cooked.

As such, the third convection acceleration control is a method in which a pair of two neighboring sub heating coils, out of the four sub heating coils SC1 to SC4, carries out heating of the peripheral part of the pan while the main heating coil heats the center portion thereof. In other words, it is a method of driving, among the four sub heating coils, half or more of the sub heating coils but not all simultaneously and creating a difference between the driven heat power of the group of the rest of the sub heating coils and that of the half or more of the sub heating coils but not all. The second convection acceleration control is implemented not only to a case with four sub heating coils SC1 to SC4. In a case in which, for example, six sub heating coils are used, three or four sub heating coils may be simultaneously driven.

### (Modification of Group of Sub Heating Coils)

Note that in Embodiment 1, the sub heating coils constituting the groups of sub heating coils are fixed and is divided into a group of SC1 and SC2 and a group of SC3 and SC4 throughout all of the intervals (I, II, III, and the like); however, it may be changed in a predetermined time interval. For example, as shown in Fig. 4, it may be changed in each interval.

Note that as a modification of the sub heating coils, the four sub heating coils SC1 to SC4 are integrated into two sub heating coils (see Fig. 6) in the first convection acceleration control. This modification also applies to the third convection acceleration control.

That is, the third convection acceleration control, which uses the first and second sub heating coils SCR and SCL, includes a heating target N such as a pan for putting in an object to be cooked, a top plate on which the heating target is placed, an annular main heating coil MC disposed below the top plate, flat first sub heating coil SCR and second sub heating coil SCL that are each adjoinedly disposed on the respective side of the main heating coil and that has a width that is smaller than the radius of the main heating coil, inverter circuits that each supply induction heating power to the main heating coil MC and the first and second sub heating coils SCR and SCL, a control unit that controls the output of each inverter circuit, an operating unit that instructs the start of heating and the heating power settings to the control unit. The control unit repeats the energization switching operation for the first and the second sub heating coils SCR and SCL a plurality of times such that the first sub heating coil SCR is supplied with induction heating power having a second heating power (1.2 kW, for example) that is higher than a first heating power from the relevant inverter circuit during a time period in which the main heating coil MC is supplied with the induction heating power with the first heating power (800 W, for example), and subsequently, supply of induction heating power to the first sub heating coil SCR is stopped and the second sub heating coil SCL is supplied with induction heating power having a third heating power (1.2 kW, for example) that is higher than the first heating power from the relevant inverter circuit.

In the above case, as it has been described above, in view of heating efficiency, it is preferable that when the main heating coil MC and the right sub heating coil SCR or the left sub heating coil SCL is simultaneously heat driven, the direction of the high-frequency current IA flowing in the main heating coil MC and the high-frequency current IB flowing in each of the left and right sub heating coils SCR and SCL are the same on the adjacent sides as shown by solid-line arrows in Fig. 6. Accordingly, in the convection acceleration mode, in an area where two independent coils are adjacent to each other, when the currents of the coils are controlled so as to flow in the same direction, the magnetic fluxes generated by the currents intensifies each other, the density of the magnetic flux that interlink with the heating target N is increased, more eddy current is generated on the bottom side of the heating target, and efficient induction heating is enabled. Hence it is possible to effectively perform heating for causing convection.

### Embodiment 2

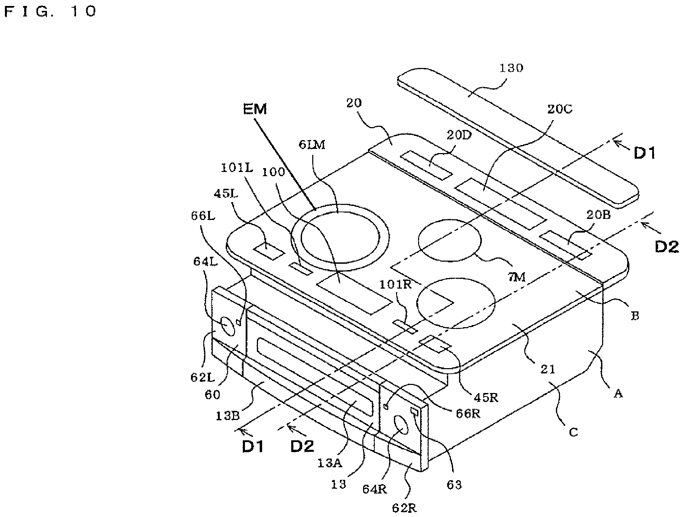

Figs. 10 to 36 illustrates an induction cooking system according to Embodiment 2 of the invention and Fig. 10 is a perspective view illustrating an entirety of the built-in induction cooking system according to Embodiment 2 of the invention with a partially exploded portion.

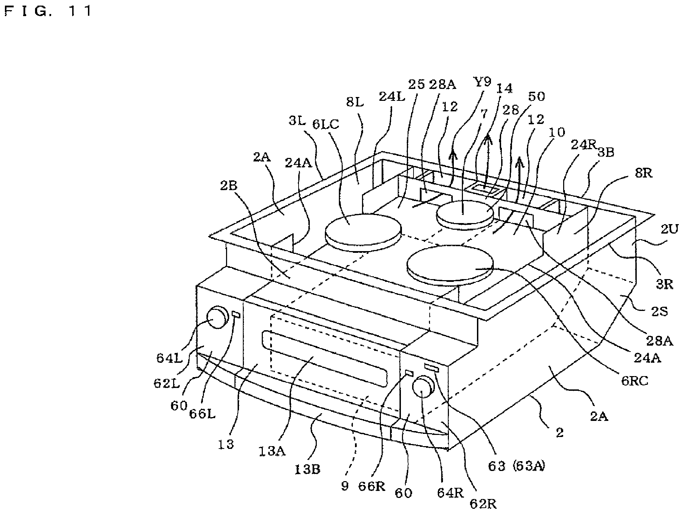

Fig. 11 is a perspective view illustrating an entirety of the main body of the built-in induction cooking system according to Embodiment 2 of the invention in a state in which the top panel has been removed.

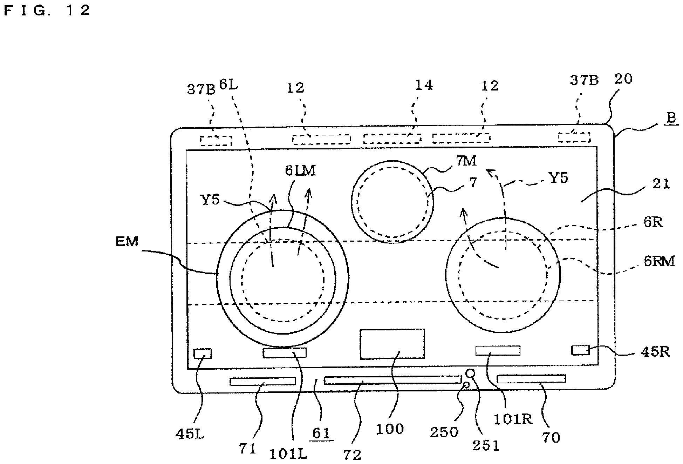

Fig. 12 is a plan view illustrating the entirety of the main body of the built-in induction cooking system according to Embodiment 2 of the invention.

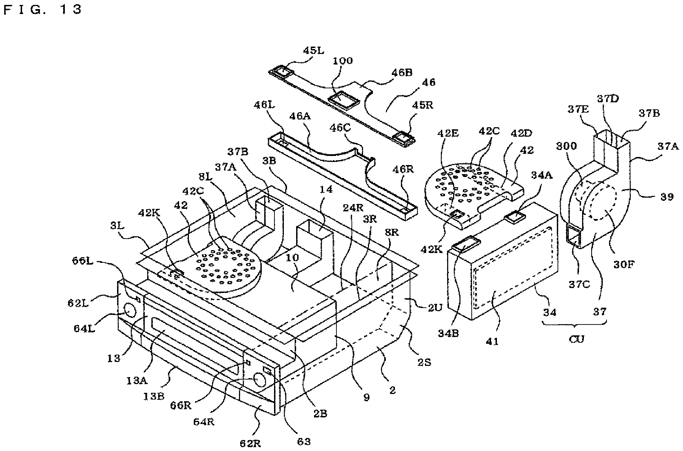

Fig. 13 is a perspective view illustrating a state in which main components such as vertical partition plates of the built-in induction cooking system according to Embodiment 2 of the invention have been removed.

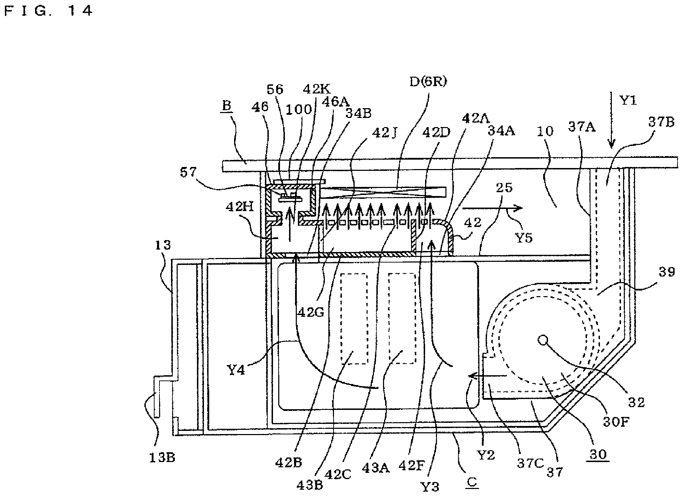

Fig. 14 is a longitudinal sectional view taken along the line D1-D1 of Fig. 10.

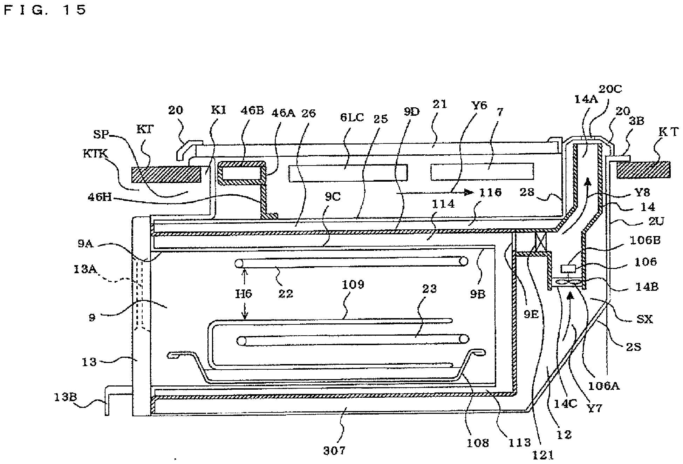

Fig. 15 is a longitudinal sectional view taken along the line D2-D2 of Fig. 10.

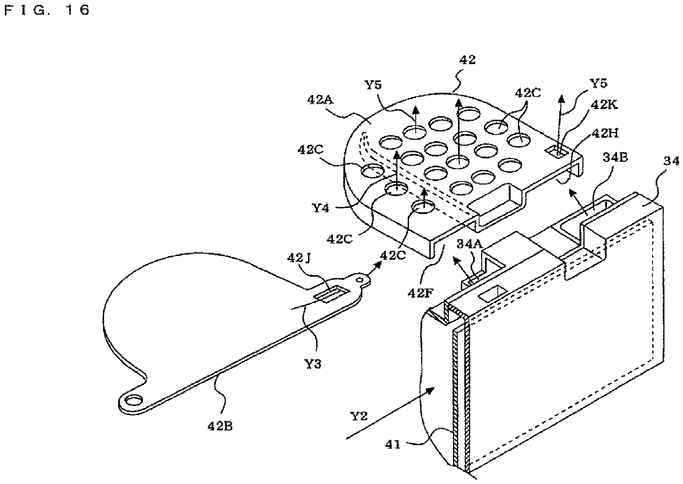

Fig. 16 is a perspective view of the main sections illustrating a partially cut away component case and cooling duct of the built-in induction cooking system according to Embodiment 2 of the invention.

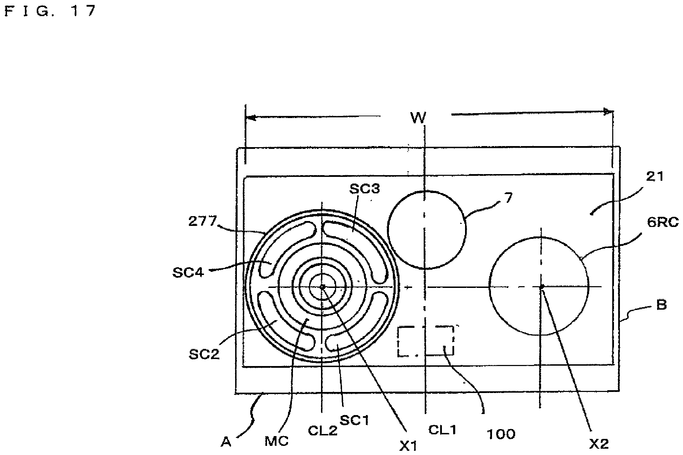

Fig. 17 is a plan view illustrating an overall arrangement of the heating coils of the built-in induction cooking system according to Embodiment 2 of the invention.

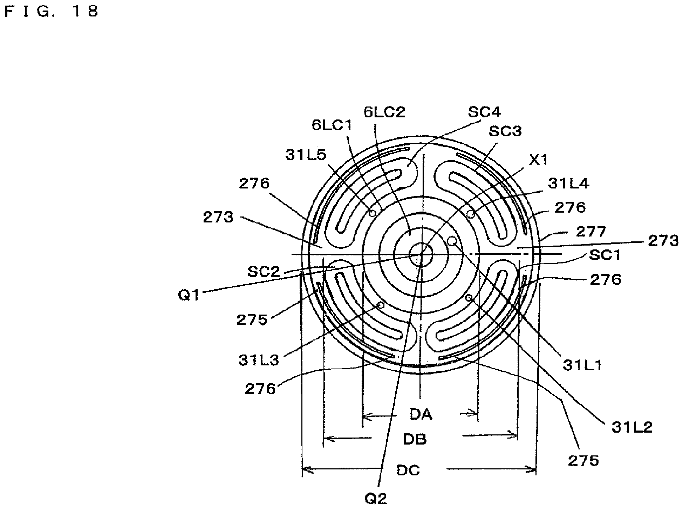

Fig. 18 is a plan view illustrating an induction heating source on the left side of the built-in induction cooking system according to Embodiment 2 of the invention.

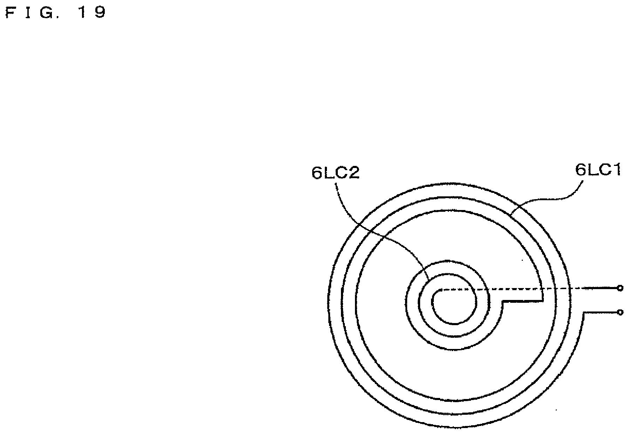

Fig. 19 is a wiring description of the main heating coil of the induction heating source on the left side of the built-in induction cooking system according to Embodiment 2 of the invention.

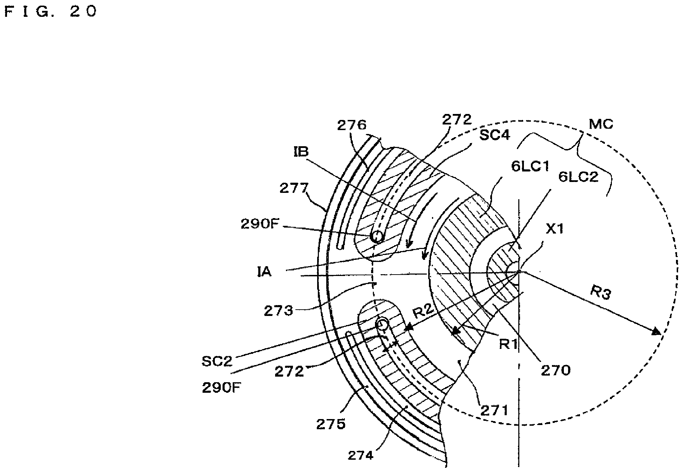

Fig. 20 is an enlarged plan view of the main heating coil of the induction heating source on the left side and its peripheral area of the built-in induction cooking system according to Embodiment 2 of the invention.

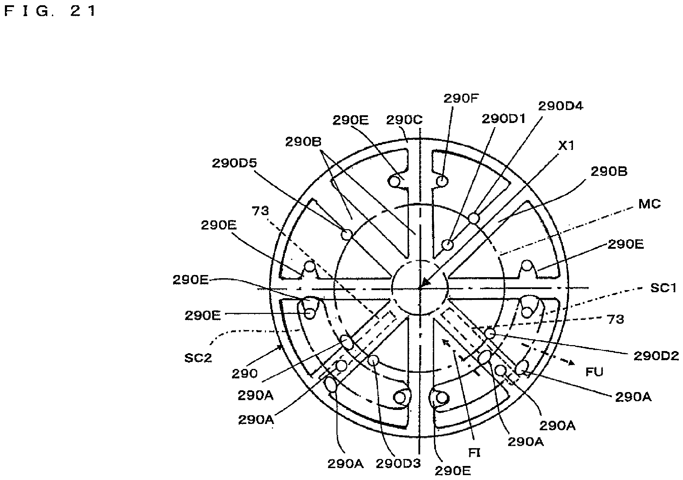

Fig. 21 is a plan view of a coil support of the main heating coil of the induction heating source on the left side of the built-in induction cooking system according to Embodiment 2 of the invention.

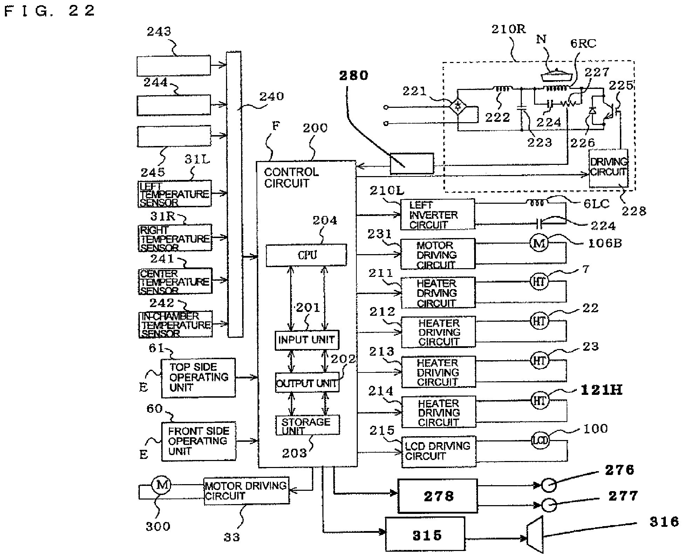

Fig. 22 is a general drawing of a control circuit of the built-in induction cooking system according to Embodiment 2 of the invention.

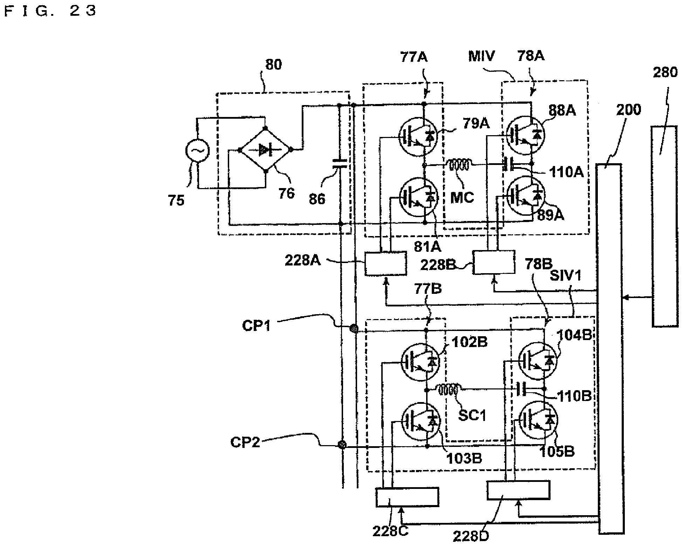

Fig. 23 is a diagram of a full bridge circuit that is the main portion of the control circuit of the built-in induction cooking system according to Embodiment 2 of the invention.

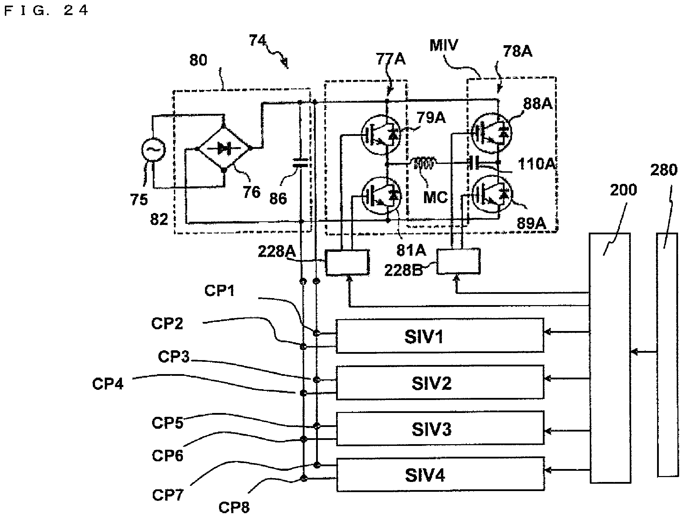

Fig. 24 is a schematic diagram of the full bridge circuit that is the main portion of the control circuit of the built-in induction cooking system according to Embodiment 2 of the invention.

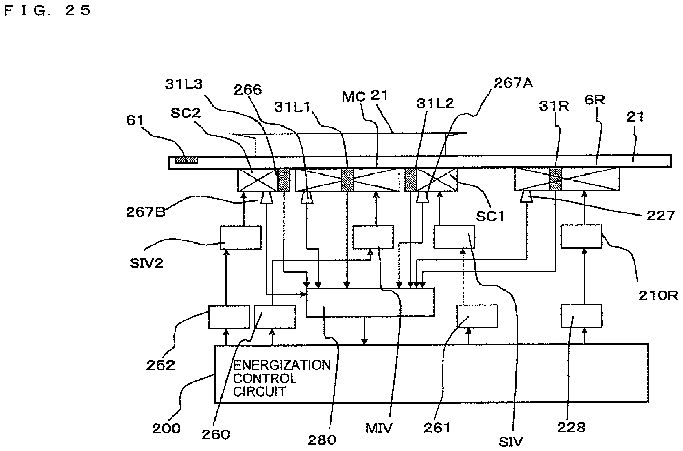

Fig. 25 is a longitudinal sectional view illustrating a case in which a heating operation is performed with a large-diameter pan placed above the induction heating source on the left side of the built-in induction cooking system according to Embodiment 2 of the invention.

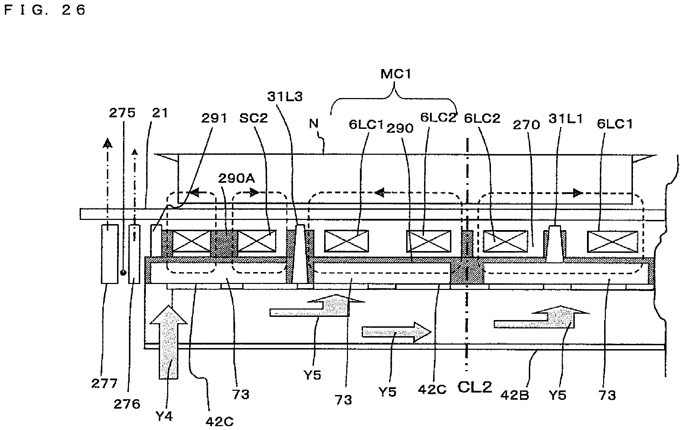

Fig. 26 is a longitudinal sectional view illustrating the center front portion of the main body of the built-in induction cooking system according to Embodiment 2 of the invention.

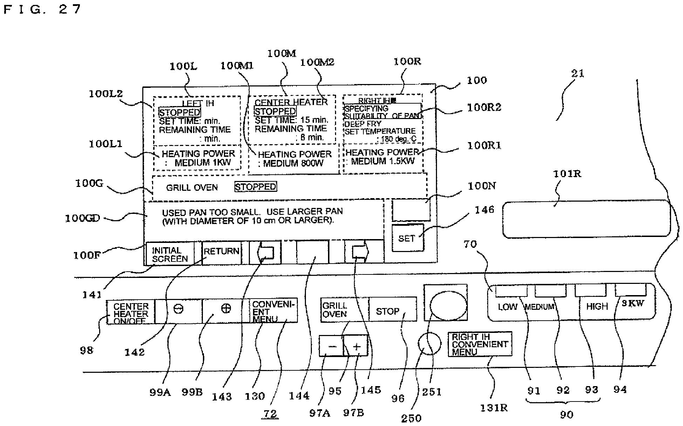

Fig. 27 is a plan view illustrating integral display means of the built-in induction cooking system according to Embodiment 2 of the invention.

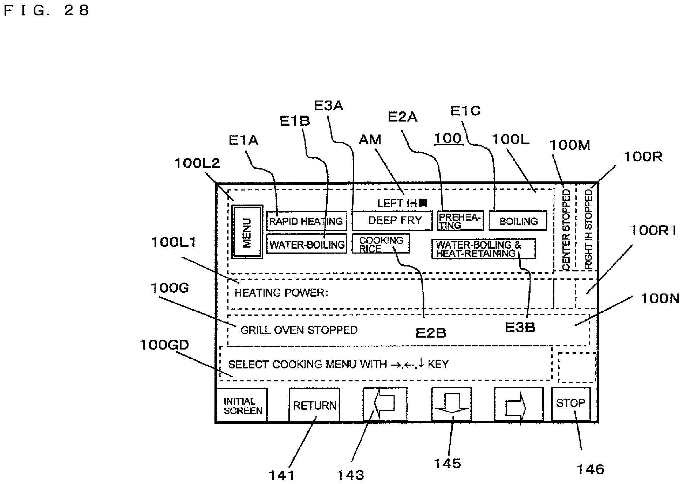

Fig. 28 is a plan view illustrating an exemplary display screen of the integral display means of the built-in induction cooking system according to Embodiment 2 of the invention when the left IH heat source alone is used.

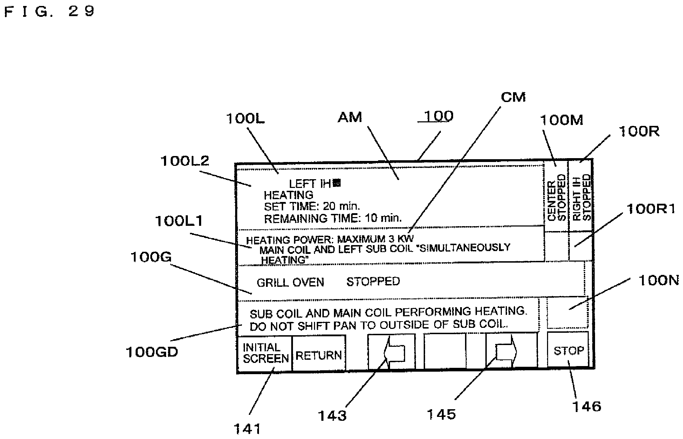

Fig. 29 is a plan view illustrating an exemplary display screen of the integral display means of the built-in induction cooking system according to Embodiment 2 of the invention when the left IH heat source alone is used.

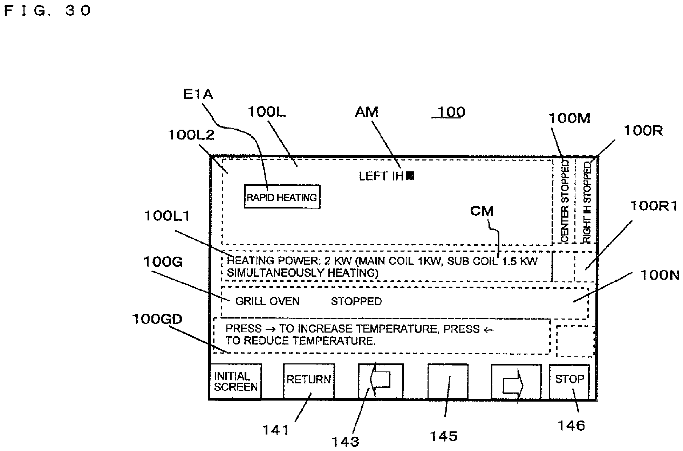

Fig. 30 is a plan view illustrating an exemplary display screen of the integral display means of the built-in induction cooking system according to Embodiment 2 of the invention when the left IH heat source is performing rapid heating.

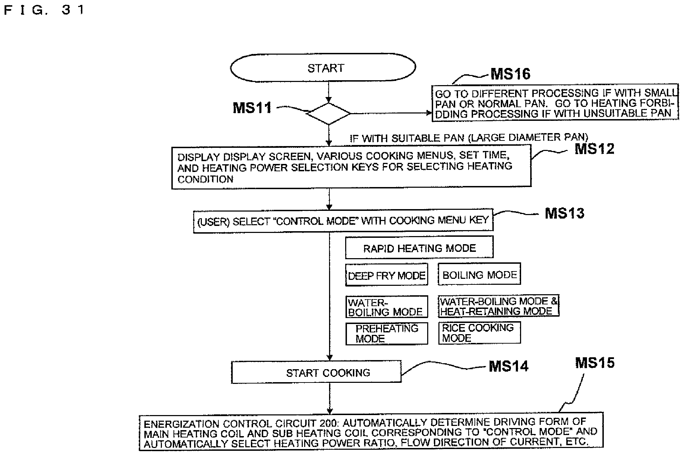

Fig. 31 is an explanatory diagram of control steps illustrating a basic heating operation of the entire built-in induction cooking system according to Embodiment 2 of the invention.

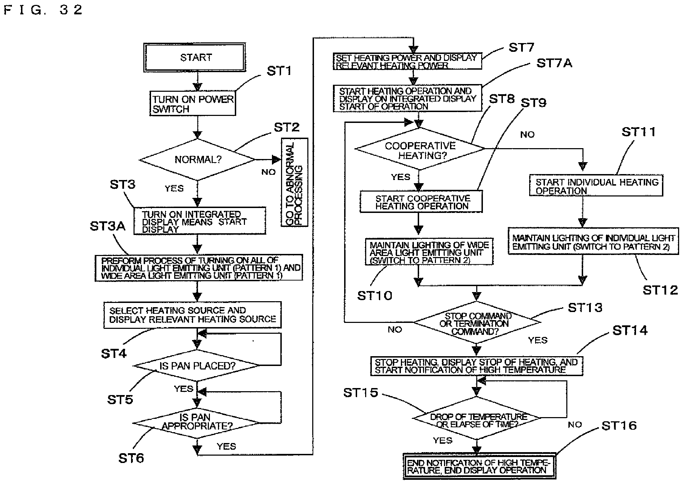

Fig. 32 is a first flowchart of the control operation of the built-in induction cooking system according to Embodiment 2 of the invention.

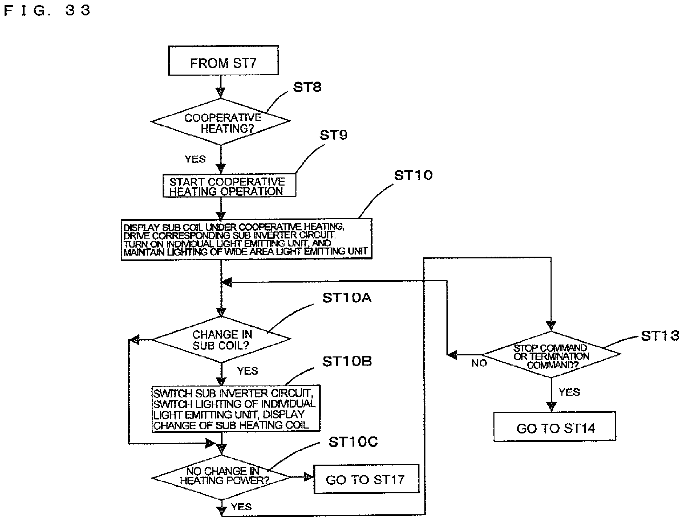

Fig. 33 is a second flowchart of the control operation of the built-in induction cooking system according to Embodiment 2 of the invention.

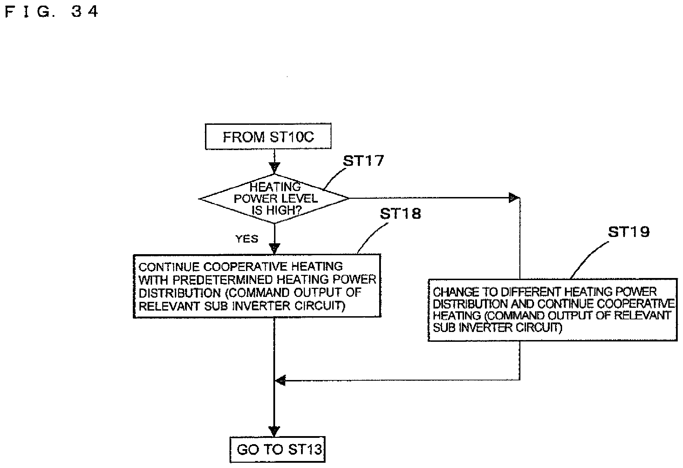

Fig. 34 is a third flowchart illustrating a control operation of the built-in induction cooking system according to Embodiment 2 of the invention when the heating power is changed.

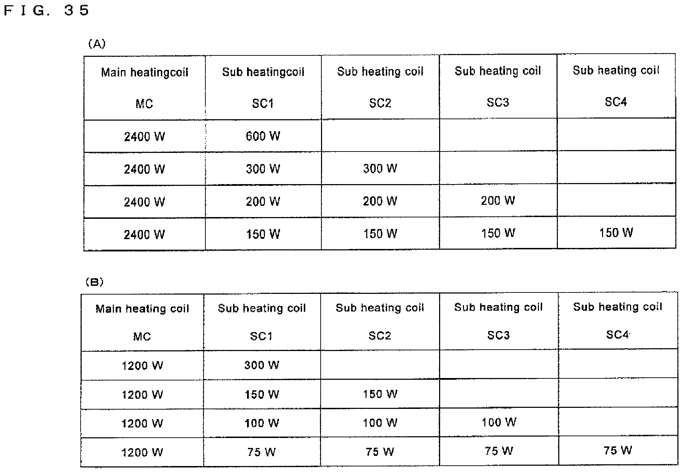

Fig. 35 are charts illustrating heating levels (electric power for heating) of the main heating coil MC and the sub heating coils SC1 to SC4 of the built-in induction cooking system according to Embodiment 2 of the invention when the heating power is 3 kW and 1.5kW,.

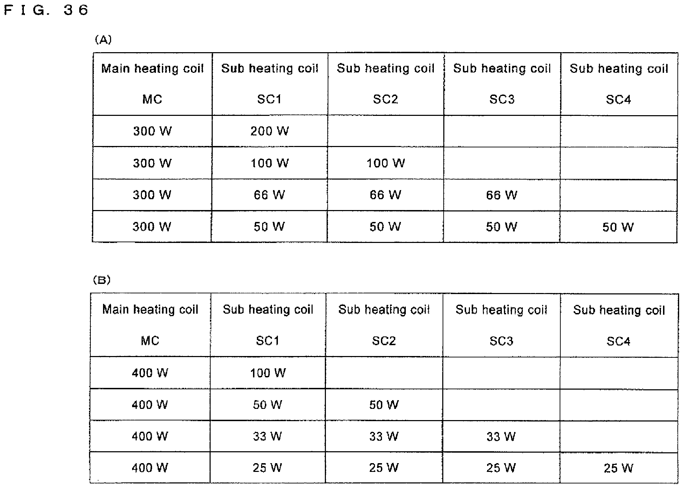

Fig. 36 are charts illustrating heating levels (electric power for heating) of the main heating coil MC and the sub heating coils SC1 to SC4 of the built-in induction cooking system according to Embodiment 2 of the invention when the heating power is 500 W.

Note that similar or corresponding elements to Embodiment 1 are designated with like reference numerals.

Further, unless specified otherwise, the terms used in Embodiment 1 are used with the same meaning in Embodiment 2.

### (Main Body of Cooking System)

The cooking system of Embodiment 2 also includes the single rectangular main body A, the top panel B that constitutes the top side of the main body A, the housing C constituting the periphery (outer wall) of the main body A other than the top side, the heating means D that heats a pan, foodstuff, and the like with electric energy and the like, the operation means E that is operated by the user, the control means F that controls the heating means upon reception of the signal from the operation means, and the display means G that displays the operating condition of the heating means. Further, as a part of the heating means D, electric heating means referred to as a grill chamber (grill heating chamber) or a roaster is included, as is described below.

The characteristics of the induction cooking system of Embodiment 2 is that, when with a normal sized pan and the like, heating is carried out in a conventional manner with the main heating coil MC, and when an circular pan or a large-sized oblong pan (also referred to as a "large-diameter pan") that has a diameter that is by far larger than that of a normal pan is placed over the induction heating portion, cooperative heating is carried out with the sub heating coil(s) SC1 to SC4 (provided on the circumference of the main heating coil MC in plural number) that is close to the placed position and the main heating coil, and in that only the individual light emitting unit that is disposed under the top plate in a position corresponding to the outside of the relevant sub heating coil(s) SC is emitted or lighted so that the sub heating coil(s) SC performing cooperative heating operation can be specified.

Further, Embodiment 2 differs with Embodiment 1 above in that a wide area light emitting unit that indicates the border of the wide area heating area, which is a wide area heating portion enabling cooperative heating with the main heating coil MC and all of the sub heating coils SC1 to SC4, is disposed under the top plate.

### (Main Body A)

As shown in Fig. 10, the entire top portion of the main body A is covered with the top panel B described later. The external shape of this main body A is formed with a size that will cover the installation opening K1 formed in the kitchen furniture KT (see Fig. 15) such as a sink cabinet and with a predetermined size that matches the space, and is formed into an approximate square or a rectangle.

A main body case 2 shown in Fig. 11 forms the outer walls of the housing C and includes a body 2A that is formed by folding a sheet of flat-shaped metal sheet a plurality of times with a press machine and a front flange plate 2B made of a metal sheet that is connected to the edge portion of this body by welding or by fixing means such as a rivet, screw or the like. In a state in which the front flange plate 2B is connected to the body 2A by the fixing means, the main-body case 2 is boxed shaped with an opened top side. The bottom portion on the rear side of this boxed shaped body 2A is an inclined portion 2S and above this is a vertical rear side wall 2U.

Three portions, that is, a rear edge, a right edge, and a left edge of the top side opening of the main body case 2 shown in Fig. 11 are each integrally bent outwards into an L-shape so as to form a flange. A flange 3B at the rear edge, a flange 3L on the left side, a flange 3R on the right side, and a front flange plate 2B are placed on the top side of the installation portion of the kitchen furniture KT (see Fig. 15) and support the load of the cooking system.

Further, as shown in Fig. 15, when the cooking system is in a state completely housed in the installation opening K1 of the kitchen furniture KT, the front side of the cooking system is exposed from the opening KTK that is formed in the front of the kitchen furniture KT, enabling the front side (left and right) operation units 60 (see Fig. 10) of the cooking system to be operable from the front side of the kitchen furniture.

An inclined portion 2S connects the rear side and the bottom side of the body 2A (see Figs. 11 and 13), and is cut so that it will not clash into and interfere with the rear edge portion of the installation opening K1 of the kitchen furniture KT when the cooking system is fitted and installed into the kitchen furniture KT. That is, when fitting and installing this type of cooking system into the kitchen furniture KT, the front side of the main body A of the cooking system is inclined downwards and, in this state, the front side is first lowered into the installation opening K1 of the kitchen furniture KT. Then, afterwards, the rear side is lowered into the installation opening K1 in an arc (such an installation method is disclosed in detail in Japanese Unexamined Patent Application Publication No. 11-121155, for example). Due to such an installation method, the front flange plate 2B is sized so that a sufficient space SP is secured between an installation-opening front edge (see Fig. 15) of the installation opening K1 of the kitchen furniture KT when the cooking system is installed in the kitchen furniture KT.

The main body case 2 includes therein heat sources 6L and 6R for induction heating an heating target N such as a pan (hereinafter may be referred to as merely a "pan") that is made of metal, for example, that has a magnetic property, in which the pan is placed on a top plate 21 described later; a central electric radiant heat source 7, such as one referred to as a radiant heater, which is an electric heater heating with radiant heat; the control means F described later that controls a cooking condition of the heating means; the operation means E described later that inputs the cooking condition to the control means; and the display means G that displays the operation condition of the heating means that has been input by the operation means. Each will be described in detail below.

Note that in Embodiment 2, it is assumed that, as a pan serving as the heating target N, a pan with a diameter of 12 cm or more is used. Variety of pans can be used, such as a pan (single-handled pan, double-handled pan, or the like) with a diameter of 16 cm, 18 cm, 20 cm, and 24 cm, and a frying pan with a diameter of 20 cm, a deep-frying pan with a diameter of 22 cm, a Chinese frying pan with a diameter of 29 cm, and the like.

As shown in Fig. 11, the housing C is partitionally formed therein with, in a broadly divided manner, a right side cooling chamber 8R that longitudinally extends in the front-rear direction, a left side cooling chamber 8L that longitudinally extends in the front-rear direction in the same manner, a box-shaped grill (or a roaster) heating chamber 9, an upper portion component chamber 10, and a rear portion exhaust hood 12. Note that each chamber is not completely isolated from each other. For example, the right cooling chamber 8R and the left side cooling chamber 8L are each in communication with the rear exhaust hoods 12 through the upper portion component chamber 10.

The grill heating chamber 9 is a substantially independent enclosed space when its front opening 9A is closed with the door 13 described later. The grill heating chamber is in communication with the external space of the housing C, that is, indoor space such as a kitchen, through the exhaust duct 14 (see Fig. 15).

### (Top Panel B)

As described below, the top panel B includes two large parts, namely, an upper frame (also known as frame body) 20 and the top plate (also known as upper plate, top glass, top) 21. The entire upper frame 20 is formed into a picture frame shape with a metal sheet such as a nonmagnetic stainless steel sheet or aluminum plate and has a size that covers the top side opening of the main body case 2 (see Figs. 12 and 15).

The top plate 21 has a breadth W (see Fig. 17) that completely covers a large opening provided in the center of the picture frame shaped upper frame 20 without any gap and is superimposed and installed above the main body case 2. This entire top plate 21 is formed of a transparent or a semitransparent material, such as a heat-resistant tempered glass, glass ceramics, and the like, in which visible ray of infrared light and LED penetrates therethrough and is formed in a rectangular or square shape so as to match the shape of the opening portion of the upper frame 20. Note that when transparent, the user can see all of the internal components from above the top plate 21 and this may degrade the look. Accordingly, there are cases in which paint for shielding is applied or printing of small dots or a grid that does not penetrate visible rays is performed on the surface or the back of the top plate 21.

Further, the front, rear, left, and right rims of the top plate 21 are fixed to the opening portion of the upper frame 20 in a water tight state with a rubber packing or a seal material (not shown) therebetween. Accordingly, water droplets penetrating from the top side of the top plate 21 through the gap formed between the facing upper frame 20 and top plate 21 into the interior of the main body A is prevented.

Referring to Fig. 10, a right vent hole 20B is formed by stamping, at the same time as the forming of the upper frame 20 with the press machine, and serves as an intake passage of a fan 30 described below. A center vent hole 20C is similarly formed by stamping when forming of the upper frame 20 is performed and a left vent hole 20D is similarly formed by stamping when forming of the upper frame 20 is performed. Note that in Fig. 8, although only the rear portion of the upper frame 20 is illustrated, as seen from above as in Fig. 12, the upper frame covers the entire top side of the main body case 2 in a picture frame manner.

During the actual cooking stage, there are cases in which the top plate 21 becomes 300 degrees C or higher by receiving heat from the heating target N such as a pan that has been heated to a high temperature by induction heating with the right side induction heating source (hereinafter, referred to as a "right IH heat source") 6R and/or the left side induction heating source (hereinafter, referred to as a "left IH heat source") which will be described in detail later. Further, if a central electric radiant heat source 7 that is an electric radiant heater described later is provided on the rear side of the top plate 21, there are cases in which the top plate 21 is directly heated to a high temperature by the heat from the central electric radiant heat source 7 to a temperature of 350 degrees C or higher.

On the top side of the top plate 21, as shown in Figs. 10 and 12, circular guide marks 6RM, 6LM, and 7M each indicating rough positions of the corresponding later described right IH heat source 6R, left IH heat source 6L, and the central electric radiant heat source 7 are displayed by means of printing and the like. The diameter of each of the left and right guide marks 6RM and 6LM is 220 mm.

### (Heating Means D)

The heating means D of Embodiment 2 of the invention includes the right IH heat source 6R that is arranged in the front portion on the right side position of the main body A; the left IH heat source 6L that is on the other side, that is, on the left side; the central electric radiant heat source 7 that is arranged on the rear portion side along a line that is a center of the left and right of the main body A; and a pair of upper and lower electric radiant heat sources 22 and 23 for the roster in the grill heating chamber 9. These heat sources are configured such that each energization is controlled independently by the control means F. Details will be described subsequently with reference to the drawings.

### (Right IH Heat Source)

The right IH heat source 6R is disposed in the upper portion component chamber 10 that is partitionally formed in the main body case 2. Additionally, a right IH heating coil 6RC is disposed on the bottom side of the top plate 21 on the right side. The top edge portion of this coil 6RC adjoins the bottom side of the top plate 21 with a minute gap therebetween, thus serving as an IH (induction) heat source. In Embodiment 2, one with a capacity in which the maximum electric power consumption (maximum heating power) is 3 kW is used, for example. The right IH heating coil 6RC is ultimately formed into a disc shape by bundling about 30 fine wires with a size of approximately 0.1 mm to 0.3 mm, twisting one or a plurality of this bundle (hereinafter, referred to as an "assembled wire"), and spirally winding this so that a circular outer shape is formed with a center point X2, shown in Fig. 17, as its cardinal point. The diameter (the maximum outer diameter) of the right IH heating coil 6RC is approximately 180 mm to 200 mm.

The position of a guide mark 6RM that is a circle (depicted by a solid line in Fig. 10) displayed on the top plate 21 may be matched completely with the outermost circumference of the right IH heating coil 6RC of the right IH heat source 6R; however, a complete match is not an essential requisite when carrying out the invention. Since the diameter of each of the above-described left and right guide marks 6RM and 6LM is 220 mm, if the diameter (the maximum outer diameter) of the right IH heating coil 6RC is 200 mm, then the position of the right guide mark 6RM will be immediately above the portion 10 mm outside the outermost peripheral line of the right IH heating coil 6RC. This guide mark 6RM merely indicates a proper induction heating region. The circle on the right side in Fig. 10 depicted by a broken line shows an approximate position of the outermost circumference of the right IH heating coil 6RC.

### (Left IH Heat Source)

The left IH heat source 6L is disposed at a position that is line symmetric to the right IH heat source 6R (relative to a left-right center line CL1 (see Fig. 17)) of the main body A and has a similar configuration as that of the right IH heat source 6R. In Embodiment 2, one with a capacity in which the maximum electric power consumption (maximum heating power) is 3 kW is used, for example. Further, as shown in Fig. 18, the left IH heating coil 6LC has a circular outer shape, formed of two concentric portions, with a radius R1 with respect to a center point X1 as its cardinal point and its diameter (maximum outer diameter) is approximately 180 mm. However, this dimension is one that does not include sub heating coils SC described later. Further, the diameter 180 mm is the maximum outer diameter of an outer coil 6LC1 among the outer coil 6LC1 and inner 6LC2 described later that constitute the left IH heating coil. This corresponds to DA in Fig. 17. In order to distinguish between the sub coils SC described later, the outer coil 6LC1 and the inner coil 6LC2 that constitute the left IH heating coil 6LC are subsequently referred to as a "main heating coil MC" (see Fig. 20).

The position of a guide mark 6LM that is a circle (depicted by a solid line in Figs. 10 and 12) displayed on the top plate 21 may be matched completely with the outermost circumference of the left IH heating coil 6LC; however, a complete match is not an essential requisite when carrying out the invention. The guide mark indicates a proper induction heating region. The circle on the left side in Fig. 12 depicted by a broken line shows an approximate position of the outermost circumference of the left IH heating coil 6LC.

A circular guide mark EM displayed on the top plate 21 indicates a large circular area (hereinafter, referred to as a "cooperative heating area mark") that covers the below-described main heating coil MC and all of the sub heating coils SC (four in total) arranged with substantially equal gaps in the front, rear, left, and right positions of the main heating coil MC. Further the position of this cooperative heating area mark EM almost conforms to the "wide area light emitting unit" described later that radiates light from below the top plate 21 to indicate the outer limit of the preferable placing position of the heating target when cooperatively heating with the main heating coil MC and the sub heating coils SC.

In a similar manner to the right IH heating coil 6RC, an infrared temperature detecting element (hereinafter, referred to as an "infrared sensor") 31 L is disposed in a space in the left IH heating coil 6LC (see Figs. 18, 22, and 23). Details will be described later.

The IH heating coil 6LC of the left IH heat source 6 includes two coils divided in the radius direction (hereinafter, the outside coil is referred to as an "outer coil" 6LC1 and the inside coil as an "inner coil" 6LC2). These two coils are, as shown in Fig. 19, a sequential unit connected in series. Note that the whole unit may be a single coil rather than two coils.

On the bottom sides (back side) of the left and right IH heating coils 6LC and 6RC, as shown in Figs.21 and 26, bars are disposed having a rectangular cross section formed of a high magnetic induction material, such as ferrite, as a magnetic flux leakage prevention material 73 of each heating coil. For example, the left IH heating coil 6LC is radially disposed from the center point X1 with 4, 6, or 8 of the above materials (the number does not have to be an even number).

That is, the magnetic flux leakage prevention material 73 does not have to cover the entire bottom side of each of the left and right IH heating coils 6LC and 6RC. The magnetic flux leakage prevention materials 73 each formed in a rod shape having a square or a rectangular cross section may be disposed with a predetermined interval so as to cross the coil wire of the right IH heating coil 6RC. Accordingly, in Embodiment 2, the material is radially provided in plural numbers from the center portion X1 of the left IH heating coil. With the magnetic flux leakage prevention material 73 as above, it will be possible to concentrate the magnetic line of force generated from the IH heating coil to the heating target N on the top plate 21.

The right IH heating coil 6RC and the left IH heating coil 6LC may each be divided into multiple parts that can be separately energized. For example, an IH heating coil may be spirally wound in the inside and a separate IH heating coil that is concentric and flush with the coil and that is spirally wound having a large diameter may be disposed on the outside, and the heating target N may be heated by three energization patterns, that is, energizing the inside IH heating coil, energizing the outside IH heating coil, and energizing both the inside and outside IH heating coils.

As described above, the heating target N (pan) from small ones to large ones (large diameter) may be efficiently heated by at least one of or a combination of the output level, duty ratio, and output interval of the high-frequency power that is made to flow to the two IH heating coils (as in a representative technical literature employing a plurality of heating coils that is allowed to be energized separately, Japanese Patent No. 2978069 is known).

An infrared temperature detecting element 31 R is an infrared temperature detecting element that is disposed in a space provided in the center portion of the right IH heating coil 6RC and has, on its top end portion, an infrared light receiving unit facing the bottom side of the top plate 5 (see Fig. 25).

In a similar manner, the left IH heating coil 6LC is disposed with an infrared temperature detecting element 31 L in a space provided in its center portion (see Figs. 18 and 26). Details will be described later.

The infrared temperature detecting elements 31 R and 31 L (hereinafter, each referred to as an "infrared sensor") each includes a photodiode or the like that can measure temperature by detecting the dose of infrared radiation from the heating target such as a pan. Note that the temperature detecting element 31 R (since the temperature detecting element 31 L is the same, hereinafter, description will be representatively given of the temperature detecting element 31 R only, when common to both element) may be a detector element of a heat transfer type such as a thermister temperature senor.

As above, prompt detection of infrared radiated in accordance with the temperature of the heating target by means of an infrared sensor from below the top plate 5 is known from Japanese Unexamined Patent Application Publication No. 2004-953144 (Japanese Patent No. 3975865), Japanese Unexamined Patent Application Publication No. 2006-310115, and Japanese Unexamined Patent Application Publication No. 2007-18787, for example.

When the temperature detecting element 31 R is an infrared sensor, infrared radiated from the heating target N can be integrated and can be received at real time (with almost no time lag) allowing the temperature be detected from the dose of infrared. Accordingly, the infrared sensor is superior (more than the thermister type). Even when the temperature of the top plate 21, such as one made of a heat-resisting glass or ceramics, that is positioned in front of the heating target N is not the same as the temperature of the heating target N, and irrespective of the temperature of the top plate 21, this temperature sensor is capable of detecting the temperature of the heating target N. This is because the top plate 21 is devised so that infrared radiated from the heating target is not absorbed or blocked by the top plate.

For example, the top plate 21 has been selected with a material in which infrared in the wavelength region of 4.0 µm or of 2.5 µm or under penetrates therethrough. The temperature sensor 31 R is selected from ones that detect infrared in the wavelength region of 4.0 µm or of 2.5 µm or under.

On the other hand, when the temperature detecting element 31 R is a heat transfer type such as a thermister, compared to the above-described infrared temperature sensor, although it is inferior in detecting a sudden temperature change in real time, it can surely detect the temperature of the bottom portion of the heating target N or the temperature of the top plate 21 under the heating target N by receiving radiant heat from the top plate 21 or the heating target N. Further, even if there is no heating target, it can detect the temperature of the top plate 21.

Note that when the temperature detecting element is a heat transfer type such as a thermister, the temperature sensing unit may be in contact with the bottom side of the top plate 21 or may have a thermally conductive resin therebetween such that the temperature of the top plate 21 itself is accurately understood. This is because if there is space between the temperature sensing unit and the bottom side of the top plate 21, there will be a delay in temperature propagation.

In the subsequent description, there are cases in which the "left, right" in the names and the "L, R" in the reference signs are omitted in parts that are disposed commonly to the left and right and that share the same details.

### [Radiant Type Central Electric Heat Source]

A central electric radiant heat source 7 (see Figs. 10 and 12) is arranged in a position that is inside the main body A, on the left-right center line CL1 of the top plate 21 (see Fig. 17), and on the rear portion side of the top plate 21. The central electric radiant heat source 7 employs an electric heater (for example, a nichrome wire heater, a halogen heater, or a radiant heater) that heats by radiation and heats the heating target N such as a pan through the top plate 21 from under. Further, one with a capacity in which the maximum electric power consumption (maximum heating power) is 1.2 kW is used, for example.

The central electric radiant heat source 7 has a round vessel shape with the entire top side opened and a vessel-shaped cover 50 made of a heat insulating material constituting the outermost circumference thereof that has a maximum outer diameter of approximately 180 mm and a height (thickness) of 15 mm.

The position of the guide mark 7M that is a circle (depicted by a solid line in Fig. 10 and 12) displayed on the top plate 21 does not completely match the position of the outermost circumference of the central electric radiant heat source 7. The guide mark 7M merely indicates a proper heating region. The guide mark 7M depicted by a broken line circle in Fig. 12 indicates an approximate outermost circumference of the vessel-shaped cover 50 of the central electric radiant heat source 7.

### [Electric Radiant Heat Source]

A vertical partition plate 24R on the right side is vertically disposed (see Figs. 11 and 13) and serves as a partition wall isolating the right side cooling chamber 8R and the grill heating chamber 9 that are in the housing C. A vertical partition plate 24L on the left side is, similarly, vertically disposed (see Fig. 11) and serves as a partition wall isolating the left side cooling chamber 8L and the grill heating chamber 9 that are in the housing C. Note that the vertical partition plates 24R and 24L are disposed such that spaces of a few millimeters are kept with the outside walls of the grill heating chamber 9.

A horizontal partition plate 25 (see Figs. 11 and 14) has a size that divides the whole space between the left and right vertical partition plates 24L and 24R into two spaces, that is, upper and lower spaces. The upper portion of this partition plate is the upper portion component chamber 10. Further, this horizontal partition plate 25 is disposed with a preset space 116 (see Fig. 15) of a few millimeters to 10 millimeters with the ceiling wall of the grill heating chamber 9.

A notch 24A is formed in each of the left and right vertical partition plates 24L and 24R and is provided so that the vertical partition plates 24L and 24R do not clash into a cooling duct 42, described later, that is being horizontally installed (see Fig. 11).

The grill heating chamber 9, which is formed in a rectangular box shape, is formed on the left and right sides, the top and bottom sides, and the rear side with a metal sheet such as a stainless steel sheet or steel sheet and is disposed with electric radiant heaters on the upper ceiling and the bottom, such as a sheath heater which is a set of upper and lower electric radiant heat sources 22 and 23 (see Fig. 15) that extend substantially horizontally. Here, "extended" refers to a state in which the sheath heater is bent midway plural times in a horizontal plane so as to planarly meander an area as wide as possible. A typical example is one with a planer and W-shape.

These two upper and lower electric radiant heat sources 22 and 23 are energized at the same time or individually so that roasting (roast fish, for example), grilling (pizza and gratin, for example), and oven cooking (cake and roasted vegetables, for example) in which cooking is performed by setting the ambient temperature in the grill heating chamber 9 can be performed. As the electric radiant heat source 22 that is disposed on the upper ceiling, one with a maximum electric power consumption (maximum heating power) of 1200 W is used and as the electric radiant heat source 23 that is disposed on the bottom, one with a maximum electric power consumption (maximum heating power) of 800 W is used.

Space 26 (see Fig. 15) is a gap formed between the horizontal partition plate 25 and the grill heating chamber 9 (same as the above-mentioned space 116) and is ultimately in communication with the rear exhaust hoods 12. Air in the space 26 is discharged by being induced to the outside of the main body A through the rear exhaust hoods 12.

Referring to Fig. 11, a rear partition plate 28 partitions the upper portion component chamber 10 and the rear exhaust hoods 12 and has a height such that the lower end of the rear partition plate 28 reaches the horizontal partition plate 25 and the upper end thereof reaches the upper frame 20. An outlet 28A is formed at two places in the rear partition plate 28. The outlets 28A are for discharging the cooling air that has entered the upper portion component chamber 10.

### (Cooling Fan)

The fan 30 in Embodiment 2 employs a multi-blade centrifugal fan (sirocco fan is typically known) (see Figs. 11 and 12) in which blades 30F are fixed to the end of a rotation shaft 32 of a drive motor 300. Further, the fan 30 is disposed in each of the right side cooling chamber 8R and the left side cooling chamber 8L and cools the circuit board for the left and right left IH heating coils 6LC and 6RC and the heating coils themselves. Details will be described later.

As shown in Figs. 13 and 14, a cooling unit CU is inserted from above into each of the cooling chambers 8R and 8L and is fixed therein, and includes a component case 34 that accommodates the circuit board 41 constituting an inverter circuit and a fan case 37 that is connected to the component case 34 and that forms a fan chamber 39 of the fan 30 therein.

The fan 30 is a so-called horizontal shaft type, in which the rotation shaft 32 of the drive motor 300 is oriented horizontally, and is accommodated inside the fan case 37 disposed in the right side cooling chamber 8R. In the fan case 37, a round-shaped fan space is formed surrounding the multiple blades 30F of the fan 30, thus forming the fan chamber 39. A suction 37B is provided in the uppermost portion of the suction tube 37A of the fan case 37. An outlet (exit) 37C is formed on one end of the fan case 37.

The fan case 37 is formed as an integral structure by combining two plastic cases 37D and 37E and coupling them with a fixture such as a screw. In this coupled state, the case is inserted into the cooling spaces 8R and 8L from above and is fixed so as not to move with appropriate fixing means.

The component case 34 is connected to the fan case 37 in an adhered manner so that cooling air discharged from the outlet 37C for discharging air of the fan case 37 is introduced into the component case 34. The component case 34 has a horizontally long rectangle shape and the entire case is sealed except for the three portions, namely, an introduction port (not shown) in communication with the outlet 37C, and a first outlet 34A and a second outlet 34B that are described later.

A printed circuit board (hereinafter, referred to as a "circuit board") 41 is mounted with the inverter circuit. The circuit board each provides a predetermined high-frequency power to each of the right IH heat source 6R and left IH heat source 6L. The circuit board 41 has external dimensions that substantially matches the shape of the internal space of the component case 34 and is disposed in the component case 34 on the far side relative to the grill heating chamber 9, in other words, it becomes as close as a few millimeters to the main body case 2 constituting the outer wall of the main body A. Note that in this circuit board 41, a power source and a control circuit for driving the drive motor 300 of the fan 30 are also mounted separate to the inverter circuit.

Each of the inverter circuits 210R and 210L of this circuit board 41 is, as shown in Fig. 22, a circuit equipped with, excluding a rectifier bridge circuit 221 whose input side is connected to a bus-line of an commercial power supply (although may be included), a direct current circuit that includes a coil 222 connected to a DC side output terminal and a smoothing capacitor 223, a resonant capacitor 224, an IGBT 225 that is an electric power controlling semiconductor serving as switching means, a driving circuit 228, and a flywheel diode. The inverter circuits do not include the IH heating coils 6RC and 6LC that are mechanical structures.

On the top side of the component case 34, the first outlet 34A and the second outlet 34B is formed with a distance between each other along the direction of the cooling air flow from the fan 30. The second outlet 34B is arranged in a position on the most downstream side of the cooling air flow in the component case 34 and has an opening area few times larger than that of the first outlet 34A. Note that in Fig. 14, Y1 to Y5 indicates the flow of air sucked into and discharged from the fan 30 and the cooling air flows in the order of Y1, Y2, ...and Y5.

A cooling duct 42 is molded with plastic in which three ventilation spaces 42F, 42G, and 42H that are described later are formed inside a space between a screwably fixed upper case 42A, which is an integrally formed plastic part, and a tabular cover 42B, which is also an integrally formed plastic part, (hereinafter, referred to as a "lower case") (see Fig. 14).

Blow out holes 42C are formed in plural numbers penetrating through the whole area of the wall of the upper side of the upper case 42A. The holes 42C are formed to blow out cooling air from the fan 30 and each bore of the blow out holes 42C is made the same.

A partition wall 42D has a straight or curved rib (convex shaped) shape integrally formed in the upper case 42A, and with this, a ventilation space 42F is partitionally formed in which one end is in communication with the first outlet 34A of the component case 34 (see Fig. 14).

In a similar manner, a partition wall 42E has a U-shape, when in planar view, and convex shape integrally formed in the upper case 42A, and with this, a ventilation space 42H is partitionally formed in which one end is in communication with the second outlet 34B of the component case 34 (see Fig. 14). This ventilation space 42H is in communication with the largest ventilation space 42G through a communication hole (aperture) 42J (see Fig. 14) formed on one side of the partition wall 42E (the side that is close to the component case 34 in Figs. 9 and 11).

Further, the cooling duct 42 is disposed so that one side of the ventilation space 42H (the side that is close to the component case 34 in Figs. 14 and 16) is directly above the second outlet 34B of the component case 34. With the above, the cooling air that is discharged from the component case 34 enters the ventilation space 42H of the cooling duct 42, is fanned out into the ventilation space 42G therefrom, and is blown out from each of the blow out holes 42C. A square shaped vent hole 42K is formed so as to correspond to the ventilation space 42H of the upper case 42A, and this vent hole blows out air that cools the liquid crystal display screens 45R and 45L described later.

Referring to Fig. 14, aluminum radiation fins 43A and 43B are installed with an electric power controlling semiconductor switching element such as IGBT 225 and other heat generating parts in the circuit board 41 that is mounted with inverter circuits (that will be described in detail in Fig. 22) 210R and 210L for the right IH heat source 6R and left IH heat source 6L. The aluminum radiation fins 43A and 43B are arrangements of orderly formed thin fins in plural numbers that is formed throughout the entirely thereof. As shown in Fig. 14, this radiation fins 43A and 43B are disposed on the side that is close to the ceiling portion than the bottom portion of the component case 34 and are secured below with sufficient space so that cooling air Y4 flows in the space.

That is, since the characteristics of the fan 30 is such that the discharge capacity (blow out capacity) of the discharge port (outlet 37C) is not uniform throughout its area and that the portion with maximum discharge capacity is on the lower side relative to the vertically center point of the outlet 37C, the positions of the radiation fins 43A and 43B are set on the upper side so that they are not positioned on the extended line of the vertically center point of the outlet 37C. Further, the cooling air is not blown towards various small electronic components and the printed wiring pattern mounted on the surface of the circuit board 41.

The inverter circuit 210L for the left IH heat source 6L includes an exclusive inverter circuit MIV for driving the main heating coil MC and exclusive inverter circuits SIV1 to SIV 4 for driving the plurality of sub heating coils SC individually (see Fig. 25).

The grill heating chamber 9 is equipped under the left and right IH heat source 6L and 6R of the main body A and forms a predetermined space SX (see Fig. 15) with the inside of the rear wall of the main body A. That is, for installing the exhaust duct 14 described later and in order to form the exhaust hood 12, the space SX with more than 10 cm with the rear side wall 2U of the body of the main body case 2 is formed.

In a state in which the two independent cooling units CU are inserted into the cooling chamber 8R and 8L from above and are fixed therein, each portion of the fan case 37 shown in Fig. 14 with a large width partially projects out into the space SX (see Fig. 15) and a predetermined space is formed between the left and right side walls of the grill heating chamber 9 and the corresponding component case 34 that houses the circuit board 41. Note that, here, the description space refers to a space between the left and right outer wall of the grill heating chamber 9 and the component case 34 and does not refer to the space between each of the vertical partition plates 24L and 24R and the outer surface of the corresponding component case 34 described in Embodiment 2.

Even if there is a grill heating chamber 9, the fan case 37 portion of the cooling unit CU is disposed in the space SX as above. When projected and viewed from the front, a portion of the fan case 37 of the cooling unit CU is in a partially overlapped state with the grill heating chamber 9, and, thus, preventing the increase in the width of the main body A.

### (Operation Means E)

The operation means E of the cooking system according to Embodiment 2 includes front side operating units 60 and a top side operating unit 61 (see Figs. 11 and 12).

### (Front Side Operating Units)

Plastic front side operating frames 62R and 62L are mounted on the front left and front right sides of the main body case 2, and the front sides of the operating frames are front side operating units 60. The front side operating unit 60 is provided with an operation button 63A (see Fig. 11) of the main power switch 63 that simultaneously provides or shuts off the power to all of the left IH heat source 6L, the right IH heat source 6R, the central electric radiant heat source 7 and the electric radiant heat sources 22 and 23 of the grill heating chamber 9. Each of a right operation dial 64R that opens and closes an electric contact of a right power switch (not shown) that controls the energization of the right IH heat source 6R and amount of energization (heating power) thereof and, similarly, a left operation dial 64L of a left control switch (not shown) that controls the energization of the left IH heat source 6L and amount of energization (heating power) thereof are provided in the corresponding front side operating unit 60. Power is supplied to all of the electric circuit components shown in Fig. 20 via the main power switch 63.

In the corresponding front side operating unit 60, a left indicating lamp 66L that turns on only when under a state in which energization is performed to the left IH heat source 6L by a left operation dial 64L is provided and a right indicating lamp 66R that turns on only when under a state in which energization is performed to the right IH heat source 6R by a right operation dial 64R is provided.

Note that the left operation dial 64L and the right operation dial 64R are, as shown in Fig 10, pushed inside so as not to protrude from the front surface of the front side operating unit 60 when not in use. When using the dial, the user pushes the dial once with a finger and releases the finger therefrom. With this, the dial protrudes out (see Fig. 9) by force of a spring (not shown) embedded in the front side operating frame 62, turning the dial into a rotatable state by pinching the circumference of the dial. Further, at this stage, when turned to the left or right a notch, energization (at a minimum set heating power of 120W) is started in each of the left IH heat source 6L and the right IH heat source 6R.

Additionally, when either of the protruded left operation dial 64L and right operation dial 64R is further turned to the same direction, a predetermined electric pulse is generated by an embedded rotary encoder (not shown) in accordance with the amount of rotation. The electric pulse is read by the control means F and, thus, the amount of energization of the corresponding heat source is determined enabling the heating power to be set. Note that when either of the left operation dial 64L and the right operation dial 64R is, with the finger of the user, pushed (pushed back) once into a predetermined position where the dial does not protrude out from the front surface of the front side operating unit 10, irrespective of whether in the initial state or in a state in which the dial has been turned to the right or left, the dial is kept at this position and the energization of the left IH heat source 6L or the right IH heat source 6R is instantaneously stopped (for example, even during cooking, when the right operation dial 64R is pushed in, energization of the right IH heat source 6R is instantaneously stopped.)

Note that when an opening operation is performed with the operation button 63A (see Fig. 11) of the main power switch 63 (see Fig. 10), the operation of the right operation dial 64R and the left operation dial 64L will be made invalid all at once thereafter. Similarly, all energization of the central electric radiant heat source 7 and the electric radiant heat sources 22 and 23 disposed in the grill heating chamber 9 will be also shut off.

Further, although not shown, there are three independent timer dials provided at the bottom portion on the front side of the front side operating frame 62. These timer dials are for controlling timer switches (also known as a timer counter, not shown) that energizes either one of the corresponding left IH heat source 6L, right IH heat source 6R, and central electric radiant heat source 7 for a desired time (set timer time) from the start of energization and automatically shuts off power after the set time has elapsed.

### (Top Side Operating Unit)

As shown in Fig. 12, the top side operating unit 61 includes a right heating power setting operating unit 70, a left heating power setting operating unit 71, and a center operating unit 72. That is, on the top side of the top plate 21 in the front portion, relative to a left-right center line of the main body A, the right heating power setting operating unit 70 of the right IH heat source 6R is disposed on the right side, the center operating unit 72 of the central electric radiant heat source 7 and the electric radiant heat sources 22 and 23 are disposed in the center portion, and the left heating power setting operating unit 71 of the left IH heat source 6L is disposed on the left side.

On this top side operating unit, various keys are provided for a case in which a stainless steel or metal cookware (not shown) is used. Among the keys, there is a key 250 exclusive for bread. Note that rather than a dedicated key for cooking specific food (for example, bread), a general key for a cookware may be exclusively provided, in which the pressing of the key will enable display of operable keys (input keys 141 to 145 described later) displaying the name of the desired cooked food (for example, bread) on an integrated display device 100 described later, and in which the user can input a desired cooking start command by touching with the finger the area of the corresponding key. Note that the cookware can be used on the grill 109 by inserting the cookware into the grill heating chamber 9 from the front opening 9A.

A compound cooking key 251 is further provided on the top side operating unit 61 that is used when cooking is performed with the cookware using both the IH heat source and the electric radiant heat sources 22 and 23 (hereinafter, referred to as "compound heat cooking" or "compound cooking"). Embodiment 1 allows compound cooking with the right IH heat source 6R and the electric radiant heat sources 22 and 23 of the grill heating chamber 9. The compound cooking key 251 is provided on the right heating power setting operating unit 70 side described later (see Fig. 10).

Note that rather than a fixed key, a button, a knob, or the like, the compound cooking key 251 may be integrated display means 100 (such as a liquid crystal screen) displaying the desired key allowing the user to touch an area of the key to input the compound cooking. That is, a method may be adopted in which an inputtable key shape is displayed at a suitable time on the integrated display means 100 by software in which an input operation is carried out by touching of the key.

### (Right Heating Power Setting Operating Unit)

Referring to Figs. 12 and 27, on the right heating power setting operating unit 70, one-touch setting keys 90 each for a heating power are provided that enables the user to easily set the heating power of the right IH heat source 6R with a single push. Specifically, three one-touch keys, that is, a low heating power key 91, a middle heating power key 92, and a high heating power key 93 are provided, in which the low heating power key 91 sets the heating power of the right IH heat source 6R to 300 W, the middle heating power key 92 to 750 W, and the high heating power key 93 to 2.5 kW. Further, a high heating power key 94 is provided on the right side of the right one-touch key. When the heating power of the right IH heat source 6R is desired to be 3 kW, this key is pushingly operated.

### (Left Heating Power Setting Operating Unit)

Similarly, a group of one-touch keys that are similar to the ones of the right heating power setting operating unit 70 are disposed also in the left heating power setting operating unit 71 for setting the heating power of the left IH heat source 6L.

### (Center Operating Unit)

Referring to Figs. 12 and 27, in the center operating unit 72, an operation button 95 of the operating switch that starts energization of the electric radiant heat sources 22 and 23 of the grill heating chamber 9 used for grilling (roasting) and oven cooking and an operation button 96 of the operating switch that stops energization thereof are provided next to each other.

In the center operating unit 72, operation buttons 97A and 97B of the temperature control switch that sets the control temperature of the grilling, which is carried out by the electric radiant heat sources 22 and 23, and the temperature of the electromagnetic cooking, which is carried out by the left IH heat source 6L and the right IH heat source 6R, by 1-degree increments or 1-degree decrements are provided sideways in one line. Further, the power on/off switching button 98 for the central electric radiant heat source 7 and the configuration switches 99A and 99B that each sets the level of the heating power incrementally or decrementally are also provided here.

Furthermore, as shown in Fig. 27, a convenient menu key 130 is provided in the center operating unit 72. When the key is pushingly operated when setting to deep fry (using the left IH heat source 6L and the right IH heat source 6R), when setting to deep-fry preheating status display (using the left IH heat source 6L and the right IH heat source 6R, and heating oil to a preset preheating temperature), and when setting to timer cooking (cooking by energizing the left IH heat source 6L, the right IH heat source 6R, the central electric radiant heat source 7, the electric radiant heat sources 22 and 23 provided in the grill heating chamber 9 for a set time set by the timer switch), the desired input screen or the status display screen can be easily read to the integrated display means 100 described later.

On the right side of the key 250 dedicated to bread, a right IH convenient menu button 131 R that includes a hard button is provided. The button is a configuration button to perform various settings of the right IH heat source 6R. A similar configuration button is also provided for the left IH heat source 6L (not shown).

Upon operation of the start switch that operates and starts the timer counter (not shown), the elapsed time from the starting point is measured and is numerically displayed on the liquid crystal display screens 45R and 45L. Note that the indication light of the liquid crystal display screen 45R and 45L penetrates through the top plate 21 and the elapsed time is clearly displayed to the user in units of "minutes" and "seconds".

Similar to the right heating power setting operating unit 70, a left timer switch (not shown) and a left liquid crystal display 45L are provided in the left heating power setting operating unit 71 on the left side such that they are disposed in a symmetrical position relative to the left-right center line CL1 of the main body 1.

### (Heating Power Indicating Lamp)

On the right front side of the top plate 21 between the right IH heat source 6R and the right heating power setting operating unit 70, a right heating power indicating lamp 101 R that indicates the level of heating power of the right IH heat source 6R is provided. The right heating power indicating lamp 101 R is provided in the vicinity of the bottom side of the top plate 21 so as to emit an indication light to the top side through (penetrating through) the top plate 21.

Similarly, a left heating power indicating lamp 101 L that indicates the level of heating power of the left IH heat source 6L is provided on the left front side of the top plate 21 between the left IH heat source 6L and the left heating power setting operating unit 71. The left heating power indicating lamp 101 L is provided in the vicinity of the bottom side of the top plate 21 so as to emit an indication light to the top side through (penetrating through) the top plate 21. Note that the illustration of these indicating lamp 101 R and 101 L are omitted in the circuit configuration diagram of Fig. 22.

### (Display Means G)

The display means G of the cooking system according to Embodiment 2 includes the integrated display means 100.

Referring to Figs. 10, 12, and 27, the integrated display means 100 is provided in the center portion in the left and right direction of the top plate 21 and on the front side in the front and rear direction. This integrated display means 100 is constituted mainly by a liquid crystal display and is provided in the vicinity of the bottom side of the top plate 21 so as to emit an indication light to the top side through (penetrating through) the top plate 21.

The integrated display means 100 can be used to input and confirm the energization status (heating power, time period, and the like) of the left IH heat source 6L, the right IH heat source 6R, the central electric radiant heat source 7 and the electric radiant heat sources 22 and 23 of the grill heating chamber 9. That is to say, the heating condition and the operation status such as the heating power corresponding to the following three cases are clearly displayed, by means of characters, illustration, and graphs.
(1) The function of the left and right IH heat sources 6L and 6R (whether during cooking operation)
(2) The function of the central electric radiant heat source 7 (whether during cooking operation)
(3) When cooking with the grill heating chamber 9, the operation procedure of the cooking and the function (for example, which, among the roaster, grill, and oven is used for cooking at present).

The liquid crystal screen used in the integrated display means 100 is a known dot matrix LCD screen. This screen is capable of providing a screen with high-definition (equivalent to QVGA with a resolution of 320 × 240 pixels or to VGA with 640 × 480 dots and that is capable of displaying 16 colors) and can display a large number of characters in a case where characters are displayed. Not only ones with one layer, the liquid crystal screen may be one displaying with more than two upper and lower layers to increase displayed information. The display area of the liquid crystal screen is rectangular shaped with a height (front-rear direction) of approximately 4 cm and width of 10 cm.

Further, the display area that displays information is divided into a plurality of areas each corresponding to a heat source (see Fig. 27). For example, the display is allocated into ten areas in total that are defined as below.
(1) A corresponding area 100L of the left IH heat source 6L (total of two, i.e., 100L1 for heating power and 100L2 for time period and cooking menu).
(2) A corresponding area 100M of the central electric radiant heat source 7 (total of two, i.e., 100M1 for heating power and 100M2 for time period).
(3) A corresponding area 100R of the right IH heat source 6R (total of two, i.e., 100R1 for heating power and 100R2 for time period).
(4) A cooking area 100G of the grill heating chamber 9.
(5) A guiding area (one area, i.e., 100GD) that displays reference information related to various cooking as required or by operation of the user, as well as notifying the user when an abnormal operation is detected or when an improper operation is carried out.
(6) A key display area 100F that displays six input keys 141, 142, 143, 144, 145, and 146 that are mutually independent and that has a function allowing each various cooking conditions and the like to be directly input.
(7) An arbitrary display area 100N.

As shown in Figs. 27 and 28, in the corresponding area 100L of the left IH heat source 6L, specifically, in the 100L2 for time period and cooking menu, seven keys, namely a selection key E1A for rapid heating, a selection key E1 B for water-boiling, a selection key E1C for boiling, a selection key E2A for preheating, a selection key E2B for cooking rice, a selection key E3A for deep frying, and a selection key E3B for water-boiling and heat-retaining are, as keys for selecting the cooking menu, displayed all at once (in an at-a-glance state) at a certain situation. Fig. 28 is a drawing depicting this state.

Fig. 30 is a drawing illustrating a case in which rapid heating is selected. The selection key E1A remains displayed and the other selection keys are all turned off such that the cooking menu "rapid heating" which E1A denotes is selected and such that display that a heating operation is being performed at present is displayed.

If the placement-of-heating-target determination unit 280 determines that the heating target N has a pan bottom diameter of a normal pan, that the heating target is placed over the main heating coil MC, and that the pan is not so large so as to cover the four sub heating coils SC1 to SC4, then the seven keys E1A, E1B, E1C, E2A, E2B, E3A, and E3B for selecting the cooking menu are not displayed. That is, it will be possible to select the seven keys E1A, E1B, E1C, E2A, E2B, E3A, and E3B for selecting the cooking menu only in a case with a heating target N with a size that covers every one of the sub heating coils SC1 to SC4.

When the key of the arbitrary display area 100N is pushed, detailed and useful information on cooking is displayed in the guide area 100GD of the integrated display means 100 by means of character.

Further the overall background color of the display area is generally displayed in an unified color (white, for example); however, when in a case of "compound cooking", the display areas 100R and 100G change into the same color that is different from the other heat sources 100L and 100M (for example, yellow or blue). This change of color can be performed by switching the operation of the back light when the display screen is a liquid crystal display; however, detailed description will be omitted.

Although each of the above ten areas (display areas) are provided on the liquid crystal screen of the integrated display means 100, they are not each formed or partitioned on individual physical displays. That is, they are established by software (program for a microcomputer) for screen display and their areas, shapes, and positions can be changed by the software as appropriate; however, in consideration of user usability, the order of alignment of the left IH heat source 6L, the central electric radiant heat source 7, the right IH heat source 6R, and the like is set at all times in the same order so as to match the left-right order of each heat source.

Specifically, on the display, information is displayed such that the left IH heat source 6L is on the left side, the central electric radiant heat source 7 is in the center, and the right IH heat source 6R is on the right side. Further, the cooking display area 100G of the grill heating chamber 9 is at all times displayed on the near side relative to the corresponding area 100L of the above left IH heat source 6L, the corresponding area 100M of the above central electric radiant heat source 7, and the corresponding area 100R of the right IH heat source 6R. Furthermore, the display area 100F of the input keys is displayed on the forefront at all times in any case whatsoever.

Additionally, as regards the input keys 141 to 146, a contact type key that changes its static capacitance by touch of the user's finger or the like is employed. With the user's light touch to a position corresponding to the key surface on the top side of the glass plate that covers the top side of the integrated display means 100, a valid input signal to an energization control circuit 200 is generated.

On the glass plate in a portion (area) including the input keys 141 to 146, there is no display of characters, graphics, and symbols (including the arrows of the key 143 and 145 in Fig. 27) whatsoever by means of printing or marking. The liquid crystal screen (key display area F) below these keys are configured to display characters, graphics, and symbols indicating the input functions of the keys according to each operation scene of the input keys.

Not all of the input keys 141 to 146 are always simultaneously displayed. As regards a key that is invalid upon its operation (an input key that does not have to be operated), such as the input key 144 in Fig. 27, it is in an inactive state such that the characters and graphics of the input function is not displayed on the liquid crystal screen. Operation of one of the active state input keys 141 to 146 will be a valid operation command signal to the control program that sets the operation of the energization control circuit 200.

Further, the input key 146 is a key that is operated when a cooking condition is to be determined or when cooking is to be started. Once this is operated and the cooking operation is started, the input key is changed to an input key displaying "STOP" (see Figs 27 and 28). As regards other input keys 141 to 145, the input command may change as appropriate. The valid input function can be easily identified by the characters, graphics, or symbols displayed as appropriate.

Note that when a particular heat source is to be stopped while using multiple heat sources, in the case of Fig. 27, for example, pressing of the input key 143 will change the color or will flash each of the corresponding area so as to indicate that the area has been selected in the sequential order of the corresponding area 100M of the central electric radiant heat source 7, the corresponding area 100L of the left IH heat source 6L, and the corresponding area 100R of the right IH heat source 6R. Subsequently, by pressing the stop key 146 after calling (selecting) the desired corresponding area, the particular heat source is stopped. Whereas, when the input key 145 is pressed, selection can be made in the other way round in the sequential order of the corresponding area 100M of the central electric radiant heat source 7, the corresponding area 100R of the right IH heat source 6R, and the corresponding area 100L of the left IH heat source 6L, and after calling the desired corresponding area, the stop key 146 may be pressed.

"AM" is an active mark that is displayed next to the name of the heat source that is performing a cooking operation. If this is displayed, it means that the heat source is driven at that time. The user can understand the operation of the heat source with the existence of the display of the active mark.

### (Grill Heating Chamber)

As shown in Figs. 10 and 15, the front opening 9A of the grill heating chamber 9 is openably covered with the door 13, and the door 13 is supported by a support mechanism (not shown) such as rails or rollers in the grill heating chamber 9 such that the door 13 is movable in the front-rear direction by a user operation. Further, a window plate made of heat-resisting glass is disposed in a center opening 13A of the door 13 so as to allow visual recognition of the inside of the grill heating chamber 9 from the outside. "13B" is a handle protruded forward to perform an opening/closing operation of the door. Note that the grill heating chamber 9 forms a predetermined space SX (see Fig. 15) with the inside of the rear wall of the main body as described above. As described later, the exhaust duct 14 is disposed therein by utilizing this space, and the exhaust hood 12 is also formed.

The door 13 is connected to front ends of metal rails that extend horizontally in both the left and right side position of the heating chamber 9. Generally, when cooking oily foodstuff, a metal saucer 108 (see Fig. 15) is placed on the rails. The saucer 108 is used while placing a metal grill 109 thereon. As such, when the door is drawn out horizontally to the front side, the saucer 108 (when the grill 109 is placed thereon, the grill, too) is drawn out horizontally to the front side of the grill heating chamber 9 along with the drawing out motion. Note that the saucer 108 is supported by merely placing the left and right end portions thereof on the two metal rails. Accordingly, the saucer 108 is independently detachable from above the rails.

Further, the shape of the grill 109 and the position, shape, and the like of the saucer 108 are devised so that they will not knock into the lower heater 23 and obstruct the saucer 108 from being drawn out to the front. The grill heating chamber 9 has a "double side grilling function" that heats foodstuff from above and below when meat, fish, or other foodstuff is placed on the grill 109 and when the electric radiant heat sources 22 and 23 are energized (at the same time, upon time division, or the like). Furthermore, this grill heating chamber 9 is provided with an in-chamber temperature sensor 242 (see Fig. 22) that detects the temperature inside the chamber; accordingly, it is possible to cook while maintaining the temperature inside the chamber to a desired temperature.

As shown in Fig. 15, the grill heating chamber 9 includes a tubular metal inner frame 9C, which has an opening 9B in the entirety of the rear (back) side and an opening 9A on the front side; and an outer frame 9D that covers all of the outside of this inner frame while maintaining predetermined gaps with the inner frame, namely, gap 113 (below), gap 114 (above), both left and right gaps (115, not shown). Note that "307" in Fig. 15 is a space formed between the outer frame 9D of the grill heating chamber 9 and the bottom side of main body case 2.

The outer frame 9D has five sides, namely the left and right two sides, the top side, the bottom side, and the rear side in which the entirety is formed of a steel sheet or the like. The inside surfaces of the inner frame 9C and outer frame 9D are formed with a coating that has high cleanability such as enamel, are coated with heat resistant coating film, or are formed with an infrared radiation film. When an infrared radiation film is formed, the infrared radiant quantity to the heating target such as foodstuff is increased, heating efficiency is increased, and uneven baking is improved. "9E" is an outlet formed on the upper portion of the rear side wall of the outer frame 9D.

A metal exhaust duct 14 is disposed so as to communicate with the outside of the outlet 9E. The cross section of the passage of this metal exhaust duct 14 is square or rectangular, and, as shown in Fig. 15, from midway, as the duct extends to the downstream side, the duct is inclined obliquely upwards, and subsequently is bent to a vertical direction such that the upper end opening 14A is ultimately in communication with the vicinity of the center vent hole 20C formed in the upper frame 20.

"121" is a deodorizing catalyst disposed in the exhaust duct 14 in the position on the downstream side of the outlet 9E. The catalyst is activated by being heated with the electric heater (121 H) for the catalyst and functions to remove the odorous component from the hot exhaust in the grill heating chamber 9 passing through the exhaust duct 14.

### (Exhaust Structure, Intake Structure)

As described above, a right vent hole (serves as an inlet) 20B, a center vent hole (serves as an outlet) 20C, and a left vent hole 20D that are long sideways are formed on the rear portion of the upper frame 20. A metal flat-plate shaped cover 132 (see Fig. 10), which is formed with numerous and small communication holes throughout, is detachably placed above these three rear vent holes so as to cover the entire upper side of the vent holes. The cover 132 may be one with tiny holes serving as communication holes that is formed by press work on a metal sheet (also known as perforated metal), or other than that, may be a wire netting or one with a small gridded shape. In any case, the cover may be any that does not let the user's finger or foreign matter enter from above into each of the vent holes 20B, 20C, and 20D.

The suction 37B in the uppermost portion of the suction tube 37A of the fan case 37 is located immediately below the right end portion of the cover 132 such that the suction 37B is capable of introducing external indoor air such as air in the kitchen into the left and right cooling chamber 8R and 8L in the main body A through the communication holes of the cover 132.

As shown in Fig. 11, the upper end of the exhaust duct 14 is positioned in the rear exhaust hoods 12. In other words, the rear exhaust hoods 12, which are in communication with the space 116 (see Fig. 15) that is formed around the grill heating chamber 9, are secured in both the left and right sides of the exhaust duct 14. As described above, the grill heating chamber 9 is disposed with a predetermined space 116 with the horizontal partition plate 25 (see Fig. 15). This space 116 is ultimately in communication with the rear exhaust hoods 12. As mentioned above, since the inside of the upper portion component chamber 10 is in communication with the rear exhaust hoods 12 through the pair of outlets 28A that is formed in the rear partition plate 28, when the cooling air flowing in the upper portion component chamber 10 (arrow Y5 in Fig. 14) is discharged to the outside of the main body 1 as arrows Y9 of Fig. 11, the air inside the space 116 is induced and discharged along with this.

### (Auxiliary Cooling Structure)

Referring to Figs. 13 and 14, a front component case 46 accommodates therein a mounting substrate 56 that fixes thereon various electrical and electronic components 57 of the top side operating unit 61 and light emitting elements (LED) that indicates the heating power with light during induction heat cooking. The front component case 46 includes a transparent plastic made lower duct 46A whose top side is opened and a transparent plastic made upper duct 46B that serves as a cover that adheres to the top side opening of this lower duct 46A so as to cover the opening. In the right edge portion and the left end portion of the lower duct 46A, vent holes 46R and 46L are opened, respectively (see Fig. 13), and in the center rear portion thereof, a notch permitting ventilation is formed.

On the ceiling side of the upper duct 46B, the integrated display means 100 is disposed in the middle and liquid crystal display screens 45R and 45L are each disposed in the right and left, respectively (see Fig. 14). The cooling air of the fan 30 enters the ventilation space 42H of the cooling duct 42 through the second outlet 34B of the component case 34, enters the front component case 46 from below the liquid crystal display screen 45R and 45L through a vent hole 42K that has been formed so as to correspond with the ventilation space 42H, and is discharged from the notch 46 into the upper portion component chamber 10. As such, each of the liquid crystal display screen 45R and 45L and the integrated display means 100 are cooled by the cooling air from the fan 30 at all times.

In particular, since the cooling air from the second outlet 34B of the component case 34 is not air that has cooled the left and right IH heating coils 6LC and 6RC that become high in temperature during the induction heating operation, the temperature thereof is low, and even though with a small volume of cooling air, increase in temperature of both the liquid crystal display screens 45R and 45L and the integrated display means 100 can be effectively suppressed. Especially, since the rear positions of the left and right IH heating coils 6LC and 6RC that are on the downstream side of the flow of the cooling air (arrow Y5 in Fig. 14) are not easily cooled, in Embodiment 2, the relative portion is cooled by supplying the cold air from the first outlet 34A to the ventilation space 42F directly.

### (Auxiliary Exhaust Structure)

As shown in Fig. 15, a tubular bottom portion 14B is formed having a shape that is sunk downwards a level at a portion that is on the downstream side of the deodorizing catalyst 121 of the exhaust duct 14. A vent hole 14C is formed at the tubular bottom portion 14B. An exhaust purpose auxiliary axial flow fan 106 faces this vent hole, where "106A" are its rotor blades and "106B" is a drive motor that rotates the rotor blades 106A. The fan is supported by the exhaust duct 14. During cooking in the grill heating chamber 9, since the grill heating chamber 9 becomes high in temperature, the inside air pressure naturally increases thus discharging high-temperature ambient air therefrom which ascends through the exhaust duct 14. By operating the fan 106 and taking air inside the main body A into the exhaust duct 14, as indicated by arrow Y7, the high-temperature air in the grill heating chamber 9 is induced to this fresh air and is exhausted, as indicated by arrow Y8, from the upper end opening 14A of the exhaust duct 14 while decreasing its temperature.

The exhaust purpose auxiliary axial flow fan 106 is not always operated during operation of the cooking system. The fan is operated while cooking is carried out in the grill heating chamber 9. This is because high-temperature hot air is discharged to the exhaust duct 14 from the grill heating chamber 9. Further, the air flows Y7 and Y8 in Fig. 15 and the air flows Y1 to Y5 in Fig. 14 are completely unrelated and is not a continuous flow.

### (Control Means F)

The control means (control unit) F of the cooking system according to Embodiment 2 includes the energization control circuit 200 (see Fig. 22).

Fig. 22 is a component diagram that illustrates the entirety of the control circuit of the cooking system, in which the control circuit is formed with the energization control circuit 200 that is formed by embedding a single or a plurality of microcomputer therein. The energization control circuit 200 includes four parts, namely, an input unit 201, an output unit 202, a storage unit 203, and an arithmetic control unit (CPU) 204, is supplied with DC power through a voltage stabilizer (not shown), and serves a central role as control means controlling all of the heat sources and the display means G. In Fig. 22, the inverter circuit 210R for the right IH heat source 6R is connected to a commercial power supply with a voltage of 100V or 200V through the rectifier circuit (also known as a rectifier bridge circuit) 221.

Similarly, in parallel with this inverter circuit 210R for the right IH heat source 6R, the inverter circuit 210L for the left IH heat source 6L, which has a similar basic configuration as that of the right IH heating coil 6RC (induction heating coil) shown in Fig. 22, is connected to the commercial power supply through the rectifier bridge circuit 221. That is, the left IH heating coil 6LC (induction heating coil) includes the rectifier bridge circuit 221 whose input side is connected to the bus-line of an commercial power supply; the direct current circuit that includes the coil 222, which is connected to the DC side output terminal, and the smoothing capacitor 223; a resonance circuit, which one end is connected to a connecting point of the coil 222 and the smoothing capacitor 223, formed by a parallel circuit of the right IH heating coil 6RC and a resonance capacitor 224; and the IGBT 225 serving as switching means in which the collector side is connected to the other end of the resonance circuit.

The major difference between the inverter circuit 210L for the left IH heat source 6L and the inverter circuit 210R for the right IH heat source 6R is that the inverter circuit 210L has the main heating coil MC and the sub heating coils SC. Accordingly, the inverter circuit 210L for the left IH heat source 6L includes the inverter circuit MIV for the main heating coil, which supplies electric power to the inner coil LC2 and the outer coil LC1, that is, to the main heating coil MC, and the inverter circuits SIV1 to SIV 4 for the sub heating coils, which individually supplies electric power to each of the four independent sub heating coils SC1 to SC4 described later. Further, the timing of energization and the amount of energization of the four sub heating coils SC1 to SC4 are all determined by the energization control circuit 200.

The inverter circuit MIV for the main heating coil employs a variable output frequency method, thus, by changing the frequency, it will be possible to vary the inverted power, that is, the obtained heating power. As the drive frequency of the inverter circuit MIV is set higher, the inverted power reduces and damage to the electrical and electronic elements constituting the circuit such as the switching means (IGBT) 225 and the resonant capacitor 224 increases, as well as increase in the amount of heat therefrom. Since this is not preferable, a predetermined upper limit frequency is determined and control is carried out such that the frequency is changed at of under the determined frequency. Electric power allowing continuous control at the upper limit frequency is the minimum electric power. When electric power lower than this is to be input, duty factor control, which performs intermittent energization, may be used in combination, thus obtaining an ultimate low heating power. The heating power of the inverter circuits SIV1 to SIV4 for the sub heating coils may be controlled in the same manner.

Further, the drive frequency for driving the inverter circuit MIV is basically set to be the same as the drive frequency for the inverter circuits SIV1 to SIV4 for the sub heating coils. If it is to be changed, the energization control circuit 200 controls the drive frequency difference between the two frequencies to be out of the range of 15 to 20 kHz such that the difference between the two does not enter the audio frequency range. This is because, when two or more induction heating coils are driven at the same time, depending on the frequency difference, the frequency difference becomes a cause of unpleasant sound such as the ones called beat noise or interference noise.

Note that the main inverter circuit MIV and the sub inverter circuits SIV1 to SIV4 for the sub heating coils do not have to be driven at the same time. For example, depending on the heating power instructed by the energization control circuit 200, the heating operation may be switched alternately at short intervals. Herein, "at the same time" refers to a case in which the energization start timing and the energization stop timing is completely simultaneous.

A heater driving circuit 211 is a heater driving circuit of the central electric radiant heat source 7; "212" is a heater driving circuit that drives the electric radiant heat source 22 for in-chamber heating of the grill heating chamber 9; similarly, "213" is a heater driving circuit that drives the electric radiant heat source 23 for in-chamber heating of the grill heating chamber 9; "214" is a heater driving circuit that drives a catalytic heater 121 H provided midway of the exhaust duct 14; and "215" is a driving circuit that drives the liquid crystal screen of the integrated display means 100.

The emitter of the IGBT 225 is connected to a common connecting point of the smoothing capacitor 223 and the rectifier bridge circuit 221. The flywheel diode 226 is connected between the emitter of the IGBT 225 and the collector so that the anode of the flywheel diode 226 is on the emitter side. "N" indicates a heating target such as a metal pan and the like.

A current detection sensor 227 detects the current flowing through the resonance circuit that includes the parallel circuit of the right IH heating coil 6RC and the resonance capacitor 224R. The detection output of the current detection sensor 227 is input to a placement-of-heating-target determination unit 280 described later; through this, determination information on whether there is a heating target is supplied to the input unit of the energization control circuit 200, and determination of the presence of the heating target N is performed. Further, if an inappropriate pan (heating target N) is used in the induction heating or if by some kind of accident, an undercurrent or an overcurrent having a value difference equivalent to or above a predetermined value when compared to a normal current value is detected, the energization control circuit 200 controls the IGBT 225 through the driving circuit 228 to instantaneously stop the energization of the induction heating coil 220.

Similarly, since the inverter circuit MIV for the main heating coil and the inverter circuits SIV1 to SIV 4 for the sub heating coils, which individually supplies electric power to each of the four independent sub heating coils SC1 to SC4, have similar circuit configuration to that of the inverter circuit 210R for the right IH heat source 6R, description will be omitted. However, these common circuit configuration is denoted collectively in Fig. 22 as the inverter circuit 210L for the left IH heat source 6L.

In Fig. 22, "6LC" is the left IH heating coil and "224L" is the resonant capacitor. The inverter circuit MIV for the main heating coil MC is also connected to the above mentioned rectifier bridge circuit 221; the direct current circuit that includes the coil 222 and the smoothing capacitor 223; a resonance circuit, which one end is connected to a connecting point of the coil 222 and the smoothing capacitor 223, that includes a parallel circuit of the main heating coil MC and a resonance capacitor 224; and the IGBT 225 serving as switching means in which the collector side is connected to the other end of the resonance circuit.

The current detection sensor 227 is, although not shown, provided in the inverter circuit 210L of the left IH heat source 6L in the same manner. Note that the current detection sensor 227 may include a shunt, which measures current using a resistor, or a current transformer.

A driving circuit 260 drives the inverter circuit MIV for the main heating coil and serves a similar role to that of the driving circuit 228. Similarly, driving circuits 261 to 264 each drives the corresponding inverter circuits SIV1 to SIV4 for the sub heating coils.

A current detection sensor 266 detects the current flowing through the resonance circuit that includes the parallel circuit of the main heating coil MC and the resonant capacitor (not shown); similarly, current detection sensors 267A, 267B, 267C (not shown), and 267D (not shown) each detects current flowing through the corresponding one of the resonance circuits that includes a parallel circuit of the sub heating coil SC and the resonant capacitor (not shown). These current sensors 266, 267A, 267B, 267C, and 267D serve similar roles to that of the current detection sensor 227. Note that the above-described current sensors on the resonance circuit side are referred to as output side current sensors and that an current sensor that is referred to as an input side current sensor is proved on a commercial power supply (AC power supply) 75 side relative to the a rectifier circuit 76 of a DC power unit 80 described later. These input side and output side current sensors monitor the current value, and, thus, monitoring of the operation and abnormal state of the resonance circuit is carried out.

As in the invention, in a cooking system that heats a heating target N with an induction heating method, the power control circuit for distributing high-frequency power to the left and right IH heating coils 6LC and 6RC is called a resonant inverter. The configuration includes a circuit connecting the inductance of the left and right IH heating coils 6LC and 6RC, as well as that of the heating target N (metal object) to the resonant capacitor (224L and 224R in Fig. 22), in which the on/off control of the switching circuit element (IGBT, 225 in Fig. 20) is carried out at a drive frequency of approximately 20 to 40 kHz.

Further, as regards the resonant inverter, there is a current resonance type suitable for a 200-V power supply and voltage resonance type suitable for a 100-V power supply. The resonant inverter circuit is divided into a so-called half bridge circuit and a full bridge circuit depending on to where the connection target of the left and right IH heating coils 6LC and 6RC and the resonant capacitors 224L and 224R is switched by the relay circuit.

When a heating target is induction heated by using a resonant inverter circuit, and when the heating target N is made of a magnetic material such as iron, magnetic stainless steel, or the like, the amount of resistance (equivalent resistance) contributing to heating is large and it is easier to charge electric power, and, thus, heating is easier. However, when the heating target N is made of a non-magnetic material such aluminum or the like, since its equivalent resistance is small, the eddy current induced in the heating target N is not easily turned into Joule heat. Accordingly, there is a known control in which a configuration of an inverter circuit is automatically switched into one with a half bridge method when the material of the heating target N is a magnetic material, and is switched into one with a full bridge method when the heating target N uses a magnetic body (Japanese Unexamined Patent Application Publication No. 5-251172, Japanese Unexamined Patent Application Publication No. 9-185986, Japanese Unexamined Patent Application Publication No. 2007-80751, for example). Unless specified otherwise, in the present invention, the inverter circuits 210R and 210L may be configured with a half bridge circuit or with a full bridge circuit.

In order to facilitate description, in Fig. 22, a half bridge resonant inverter circuit is used; however, as shown in Figs. 23 and 24, it is desirable that a full bridge circuit is used when actually carrying out the invention.

Referring to Figs. 23 and 24 and describing the above in more detail, the cooking system includes a power unit (power circuit) 74. The power unit 74 includes a DC power unit 80, the main inverter circuit MIV, and four sub inverter circuits SIV1 to SIV4. Note that in Fig. 23, only two circuits, that is, the main inverter circuit MIV and the sub inverter circuit SIV1, are depicted; however, as shown in Fig. 24, three sub inverter circuits SIV2 to SIV4 having a similar configuration as that of the inverter circuit SIV, which has connecting points CP1 and CP2, are connected in parallel to the energization control circuit 200. That is, similar to the sub inverter circuit SIV1, connecting points CP3, CP4, CP5, CP6, and CP7 that are the two ends of each of the respective other three sub inverter circuits SIV2, SIV3, and SIV4 are connected to the circuit of the connecting points CP1 and CP2. Note that the three sub inverter circuits SIV2 to SIV4 are each connected with driving circuits that has a similar function as that of the driving circuits 228 and 228B shown in Fig. 23. The driving circuits 228A and 228B will be described in detail later.

As it is apparent from the above description, the four sub inverter circuits SIV1 to SIV4 are each connected in parallel to the DC power unit 80 and the energization control circuit 200.

The DC power unit 80 is connected to the AC power supply 75. The AC power supply 75 is a commercial, single phase or three phase AC power supply. The AC power supply 75 is connected to the rectifier circuit 76 that rectifies all the AC current output from this AC power supply 75. The rectifier circuit 76 is connected to a smoothing capacitor 86 that performs smoothing of the direct-current voltage that has been rectified in its entirety by the rectifier circuit.

The main inverter circuit MIV and the four sub inverter circuits SIV1 to SIV4 are full bridge inverters that, after conversion of AC to DC, further converts this direct current into an alternating current with high frequency. Each of the inverter circuits MIV and SIV1 to SIV4 is connected to the DC power unit 80 of the power unit 74.

The main inverter circuit MIV and the sub inverter circuit SIV1 each have a couple (also referred to as a "pair" or a "group") of two pairs of switching elements 77A and 78A, and 77B and 78B, respectively. As shown in the drawing, the switching elements 77A and the switching elements 78A, constituting the couple, of the main inverter circuit MC each include two respective switching elements 79A and 81A, and 88A and 89A that are connected in series. The switching elements 77B and the switching elements 78B, constituting the couple, of the sub inverter circuit SIV1 each include two respective switching elements 102B and 103B, and 104B and 105B that are connected in series. Although not shown, the sub inverter circuits SIV2, SIV3, and SIV4 shown in Fig. 24 each include two pairs of switching elements such as the ones described above.

A series resonance circuit including the main heating coil MC and the resonant capacitor 110A is connected between the output points of the switching elements 79A and 81A and between the output points of the switching elements 88A and 89A. Further, a series resonance circuit including the sub heating coil SC1 and the resonant capacitor 110B is connected between the output points of the switching elements 102B and 103B and between the output points of the switching elements 104B and 105B. Although not shown, the other three sub inverter circuits SIV2, SIV3, and SIV4 are each similarly connected to the respective series resonance circuit including the respective one of the sub heating coils SC2 to SC4 and the resonant capacitor (not shown) 110A.

The two pairs of switching elements 77A and 78A, constituting the couple, of the main inverter circuit MIV are respectively connected to the driving circuits 228A and 228B. The two pairs of switching elements 77B and 78B, constituting the couple, of the sub inverter circuit 1 are respectively connected to the driving circuits 228C and 228D. Each of the remaining three sub inverter circuits SIV2 to SIV4 also is connected to the respective one of the driving circuits 228E, 228F, 228G, 228H, 228I, and 228J (all not shown). Further, these driving circuits 228A to 228J are all connected to the placement-of-heating-target determination unit 280 through the energization control circuit 200.

The energization control circuit 200 has a function of uniformizing the frequency of the switch driving signal output to the main inverter circuit MIV and all of the sub inverter circuits SIV1 to SIV4.

With the above configuration, after the user has activated the main power through the front side operating unit 60 and when the user instructs the start of heat driving to the energization control circuit 200 through the top side operating unit 61 of the front side operating unit 60, the output of the AC power supply 75 is converted into a direct current with the DC power unit 80 and then a driving signal is output from each of the driving circuits 228A, 228B, 228C, 228C (description of the operation of the other driving circuits are omitted) on the basis of command signals (switch driving signals) issued from the energization control circuit 200. Then the switching elements 79A and 89A and the switching elements 81A and 88A, the switching elements 102B and 105B and the switching elements 103B and 104B are alternately turned ON and OFF such that the direct current is converted into a high-frequency current once more, and the main heating coil MC and the sub heating coil SC1 is each applied with a high-frequency current. With the above, an induction heating operation is started. Note that the frequencies of the switch driving signals output to the main inverter circuit MIV and the sub inverter circuit SIV1 from the energization control circuit 200 are automatically set to be the same.

With the above configuration, the energization control circuit 200 has a function of controlling the main inverter circuit MIV and the sub inverter circuits SIV1 to SIV4 such that the direction of the high-frequency currents IB applied to the four sub heating coils SC1 to SC4 and the direction of the high-frequency current IA applied to the main heating coil MC are the same (in the counterclockwise direction) in the areas where the coils are adjacent to each other (the outer circumference of the main heating coil) when a high-frequency current is distributed to the main heating coil MC in the clockwise direction.

On the other hand, when a high-frequency current IA is distributed to the main heating coil MC in the counterclockwise direction, the main inverter circuit MIV and the sub inverter circuits SIV1 to SIV4 are controlled such that the high-frequency currents IB applied to the sub heating coils SC1 to SC4 flows in the same direction (in the clockwise direction) in the areas where the coils are adjacent to each other. As described above, with this, it will be possible to suppress generation of abnormal noise due to frequency difference.

As described above, in a case where a heating target N is induction heated by energization of the left and right IH heating coils 6LC and 6RC, when the heating target N is of a magnetic material such as iron, current with a frequency of approximately 20 to 40 kHz may be distributed to the resonance circuit connected to resonant capacitors (224L and 224R in Fig.13 and 110A and 110B in Fig. 23) by controlling the ON/OFF of the switching circuit element (IGBT, 225 in Fig. 22. In Fig. 23, the switching elements 77A, 81A, 88A, 89A, 102B, 103B, 104B, and 105B) at a drive frequency of approximately 20 to 40 kHz.

On the other hand, in a case in which the heating target N is made of a material with high electrical conductivity such as aluminum or copper, in order to obtain the desired heating output, a large current needs to be induced on the bottom side of the heating target N by distributing a large current to the left and right IH heating coils 6LC and 6RC. Accordingly, in a case in which the heating target N is made of a material with high electrical conductivity, on/off control is performed at a drive frequency of 60 to 70 kHz.

Referring to Fig. 22, a motor driving circuit 33 is a motor driving circuit of the drive motor 300 of the fan 30 for keeping the internal space of the main body A in Fig. 10 within a fixed temperature range, and a motor driving circuit 231 is a driving circuit of the drive motor 106B of the fan 106 disposed in the exhaust duct 14.

### (Temperature Detecting Circuit)

Referring to Fig. 22, a temperature detecting circuit 240 is input with temperature detection information from each of the following temperature detecting elements.
(1) The temperature detecting element 31 R provided in the substantially middle portion of the right IH heating coil 6RC.
(2) The temperature detecting element 31 L provided in the substantially middle portion of the left IH heating coil 6LC.
(3) A temperature detecting element 241 provided in the vicinity of the electric heater of the central electric radiant heat source 7.
(4) The temperature detecting element 242 for detecting the in-chamber temperature of the grill heating chamber 9.
(5) A temperature detecting element 243 disposed in the vicinity of the integrated display means 100.
(6) Temperature detecting elements 244 and 245 that are each adhered to and mounted on the corresponding one of the two radiation fins 43A and 43B inside the component case 34 and that individually detects the temperature of the corresponding one of the two radiation fins.

Note that two or more temperature detecting elements may be provided on the subject of the temperature detection. For example, further accurate temperature control may be achieved by providing each of the temperature sensors 31 R of the right IH heat source 6R to the middle portion and the circumference of the right IH heating coil 6RC. Further, the temperature detecting elements may be ones employing different principles. For example, the temperature detecting element in the middle portion of the right IH heating coil 6RC may be one using an infrared system and the temperature detecting element on the outer circumference may be a thermister type.

On the basis of the temperature measurement state from the temperature detecting circuit 240, the control circuit 200 controls the motor driving circuit 33 of the drive motor 300 of the fan 30 continuously so that the fan 30 is operated to perform cooling with air in order that each of the temperature measured portion does not become heated to a predetermined temperature or higher.

The temperature detecting element 31 L provided in the middle portion of the left IH heating coil 6LC includes five temperature detecting elements 31 L1 to 31 L5, which will be described in detail later.

### (Sub Heating Coils)

Referring to Figs. 18, and 20, an outer coil 6LC1 of the left IH heating coil 6LC is a circular outer coil with a center point X1 and a maximum outer diameter DA (= twice the radius R1) and an inner coil 6LC2 is a coil circularly winded in the outer coil with a space 270 therebetween and has the same center point X1. The main heating coil MC is configured with two circular coils that are concentric circles.

The four sub heating coils SC1 to SC4 are each disposed with a predetermined space 271 with the outer circumference of the main heating coil MC. As shown in Fig. 20, the sub heating coils are curved along the same circumference, around the center point X1 having a radius R2, and are disposed so as to be interspersed with substantially same distances between each other. Each outer shape is of a curved ellipse or oval as shown in Figs. 18 and 20. These sub heating coils are also formed so as to have an ellipse or oval outer shape by twisting one or a plurality of assembled wires and spirally winding this, and then by partially binding it with a binding tool or by hardening it with heat-resistant resin.

As shown in Fig. 20, these four sub heating coils SC1 to SC4 are disposed on a circle with a radius R3 from the center point X1 while maintaining a space 273 with a set dimension between each other. The line of circumference having a radius R3 coincides with the center line of each of the sub heating coils SC1 to SC4 in its longitudinal direction. In other words, around the circular main heating coil MC that constitutes a closed circuit, four sub heating coils SC1 to SC4 are disposed each forming an arc on the inside (on the side that is facing the outer circumference of the main heating coil MC) having a radius R2 from the center point X1 of the main heating coil MC, in which each of the assembled wires are curved and extended with a radius of curvature in accordance with the corresponding arc, thus constituting an electrically closed circuit.

The height (thickness) of the main heating coil MC and the height (thickness) of each of the sub heating coils SC1 to SC4 are the same. The main heating coil MC and each of the sub heating coils SC1 are horizontally provided and fixed on coil supports 290 described later such that the facing distances between their upper sides and the bottom side of the top side 21 are the same.

The straight line Q1 illustrated in Fig. 18 is a straight line that connects an edge of the bend on the inside, in other words, one end RA of the bent arc (specifically, the starting point) of each of the four sub heating coils SC1 to SC4, to the center point X1. In the same manner, the straight line Q2 is a straight line that connects the other end RB of the arc (specifically, the end point) of each of the four sub heating coils SC1 to SC4 to the center point X1. When heating efficiency is considered, it is preferable that the length between the two ends RA and RB (between the starting point and the end point), that is, the length of the arc (of the sub heating coil SC) with a radius R2 that is bent along the circumference of the main heating coil MC, is long. This is because, as will be described later, the peripheral line of the main heating coil MC and the sub heating coils SC1 to SC4 are devised to reduce magnetic interference between each other by distributing high-frequency currents in the same direction.

However, in actuality, the direction of current between two adjacent sub heating coils SC1 to SC4 will be opposite to each other. This will have some influence, thus will cause a problem. In order to suppress this influence, the coils are separated with a constant distance (space 273 described later) therebetween. Accordingly, there is a certain limitation to the length of the arc. Specifically, referring to Figs. 18 and 20, assuming that space 271, which is an electric insulation distance between the main heating coil MC and each of the sub heating coils SC1 to SC4, is 5mm, since the outer diameter of the main heating coil MC is twice the length of R1, that is, 180 mm, R2 is 180 mm + 5 mm + 5 mm = 190 mm, and the circumferential length is approximately 596.6 mm (= diameter R2, 190 mm × circular constant, 3.14). When the four sub heating coils SC1 to SC4 are arranged uniformly (every 90 degrees), one fourth of the length will be 149.15 mm. An angle defined by Q1 a Q2 is not 90 degrees but is, for example, 60 to 75 degrees. Here, if the angle is 70 degrees, then the above 149.15 mm will be 116 mm obtained from the expression:
ratio of 70 degrees ÷ 90 degrees (approximately 0.778) × 149.15 mm. That is, the length of the innermost arc of each of the sub heating coils SC1 to SC4 is approximately 116 mm.

Further, as in Embodiment 2, when the number of sub heating coils SC is four, out of the 360 degrees circumference of the main heating coil MC, since a range of 280 degrees (the above mentioned four times of 70 degrees) is formed with arcs (of the sub heating coils SC) that are bent (with a radius of curvature R2) along the outer circumference of the main heating coil MC, it can be said that in approximately 77.8 % (= 280 degrees ÷ 360 degrees, hereinafter this rate is referred to as a "concordance rate" in the subsequent description) of the range, the direction of the peripheral line of the main heating coil MC and the sub heating coils SC1 to SC4 are in concordance with each other (parallel). This means that there is a large margin for allowing the high-frequency currents IA and IB to be distributed in the same direction between the main heating coil MC and the sub heating coils SC1 to SC4 and, thus, contributes to increase in the heating efficiency of the heating target N by reduction of magnetic interference and increasing the magnetic flux density.

In order to facilitate understanding of the description of Figs. 18 and 20, the sizes of each of the main heating coil MC and the sub heating coils SC1 to SC4 is not drawn to proportional scale. The larger the concordance rate, the length in which the high-frequency current flows in the same direction becomes larger and the length of the area in which the magnetic flux density of two adjacent heating coils is increased increases. This is desirable when considering heating efficiency; however, in actuality, there is a limitation due to the need to secure the above spaces 273, and it is not possible to achieve a concordance rate of 100%.

Note that referring to Fig. 20, since the diameter R3 is R2 + (2 × average width W1 of the assembled wires of the sub heating coils SC on the side that is adjacent to the main heating coil MC) + (2 × average width W2 of the assembled wires of the sub heating coils SC on the outside), when W1 = 15 mm and W2 = 15 mm, then R3 is 250 mm (= 190 mm + 30 mm + 30 mm). The space 271 may not be the minimum dimension of 5 mm but may be, for example, 10 mm. The space is an insulation space that is needed to maintain the insulation between the two objects, namely, the main heating coil MC and each of the sub heating coils SC1 to SC2 that are each supplied with power from different power sources. The dimension of each space 271 can be further shortened by interposing an electrical insulator, such as porcelain or thermally stable plastic, that is formed into a thin plate between the main heating coil MC and each of the sub heating coils SC1 to SC4 so as to block between the two and improve the electric insulation of each space 271.

As shown in Fig. 18, these four sub heating coils SC1 to SC4 are arranged such that their maximum outer diameters are DB. As described in Fig. 19, the outer coil 6LC1 and the inner coil 6LC2 are connected in series. Accordingly, the outer coil 6LC1 and the inner coil 6LC2 are energized at the same time.

Each of the sub heating coils SC1 to SC4 is not a perfect circle and may be divided into two upper and lower layers to facilitate manufacturing. That is, it may be manufactured by bundling about 30 fine wires (element wire) of approximately 0.1 mm to 0.3 mm, twisting one or a plurality of this assembled wire, and spirally winding this into two coils having a completely identical planar shape that is of an ellipse or oval outer shape, and then connecting the two in series, thus forming an electrically single coil. Note that an element wire that is finer than the element wire of the main heating coil MC may be used in order to improve the magnetic drive force per unit plane area compared to that of the main heating coil MC and in order to perform higher output with smaller plane area.

A space (cavity) 272 is spontaneously created when forming each of the sub heating coils SC1 to SC4. That is, it is inevitably formed when winding the assembled wire in one direction. This space 272 is used to air-cool each of the sub heating coils SC1 to SC4 itself, and the air for cooling supplied from the fan 30 ascends through this space 272. A coil support 290 is integrally formed with a non-metallic material such as thermally stable plastic or the like, has eight arms 290B radially extending from the center point X1, and has an outermost circumferential edge 290C with an annual shape connected to the arms.

When the infrared sensors 31 L1 to 31 L5 are to be supported, five support portions 290D1 to 290D5 are arranged on the upper side or the lateral side of the arms 290b integrally or as a separate component (see Figs. 18 and 21). Support protrusions 290A are integrally formed on the four arms 290B, among the eight radially extending arms 290B, which face the center portion of the sub heating coils SC1 to SC4. Three support protrusions are interspersed to four locations such that one is provided in the space 272 of the corresponding one of the sub heating coils SC1 to SC4, one of the remaining two is provided nearer to the center point X1 relative to the corresponding one of the sub heating coils SC1 to SC4, whilst the other one is provided on the outside.

Two supporting tongues 290E are integrally formed to each of the four arms 290B that faces the two ends of the sub heating coils SC1 to SC4, on which the two ends of the sub heating coils SC1 and SC4 are placed. The middle portion of the sub heating coils SC1 to SC4 is placed on the top side of the other two arms 290B.

A cylindrical fixing portion 290F is integrally and protrudingly formed on each top side of the supporting tongue 290E. These fixing portions are located in positions corresponding to the two ends of the spaces 272 when the sub heating coils SC1 to SC4 are disposed. With the fixing portions 290F and the support protrusions 290A, three points of the sub heating coils SC1 to SC4, that is, the center portion of the spaces 272 and the inside and outside positions, are positionally controlled. Accordingly, there will be no deformation caused by careless side shifting or by expansion force (typical ones are indicated in Fig. 21 by dot and dash line arrows FU and FI) due to heating.

Note that the reason why the support protrusions 290A and the fixing portions 290F control the positions by partially abutting to the inside and the circumference of each of the sub heating coils SC1 to SC4 without forming a wall (also called a rib) surrounding the whole circumference of each coil is to free the inside and the circumference of the sub heating coils SC1 to SC4 as much as possible so that it becomes a passage for the air for cooling.

As shown in Figs. 21 and 26, the coil support 290 is placed on the top side of the upper case 42A of the cooling duct 42. The coil support 290 is cooled by the cooling air that is blown up from the blow out hole 42C of the cooling duct 42, and the main heating coil MC and the sub heating coils SC1 to SC4 thereabove are cooled so that they do not reach an abnormal temperature due to the heat generation. Accordingly, substantially whole of the coil support 290 is a gridded shape (see Fig. 21) so as to ensure ventilation of air. The magnetic flux leakage prevention materials 73 that are radially disposed relative to the center point X1 partially traverse the passage of the air. Further, the bottom sides of the sub heating coils SC1 to SC4 are in an exposed state except for portions that are facing the arms 290B and the supporting tongues 290E, and thus heat radiation effect is improved by the exposed portion.

The magnetic flux leakage prevention materials 73 are mounted on the bottom side of the coil supports 290 in a radial state relative to the center point X1. As shown in Fig. 20, the spaces 273 are provided so that the adjacent ends of the sub heating coils SC1 to SC4 do not magnetically interfere with each other when the adjacent sub heating coils SC1 to SC4 are energized simultaneously and the flow direction of the high-frequency currents IB flowing therethrough are the same. That is, when driving current is distributed to the circular main heating coil MC in an anticlockwise direction when seen from above and when driving current is distributed to the sub heating coils SC1 to SC4 in a clockwise direction, the direction of the high-frequency current IA flowing in the main heating coil MC and the directions of the currents IB flowing in the sub heating coils SC1 to SC4 on the side near to the main heating coil MC, that is, on the side adjacent to the main heating coil MC, are the same as shown in Fig. 20. However, the direction of the high-frequency currents IB between the adjacent ends of the sub heating coils SC1 to SC4 will be opposite to each other, and, hence, it has been devised to reduce these magnetic interference.

Note that during a predetermined time interval in which the driving current in the main heating coil MC is distributed in a clockwise direction when seen from above, the direction of the currents of the sub heating coils SC1 to SC4 may be alternately changed to opposite directions in a predetermined time interval such that the driving currents to the sub heating coils SC1 to SC4 are distributed in a counterclockwise direction, and, then, are distributed in a clockwise direction.

It is desirable that the amount of space 273 between the end portions of the sub heating coils SC1 to SC4 is larger than the space 271. Further, Fig. 18 is not a diagram that illustrates the precise dimensions of the actual product and although it cannot be understood directly from the drawing, it is preferable that the transverse dimension, that is, the transverse dimension along the straight line passing through the center point X1, of the spaces (cavities) 272 of the sub heating coils SC1 to SC4, that is, the width indicated by the arrow in Fig. 18, is larger than the space 271. The above is for reducing the magnetic interference, since the current that flow through the sub heating coils SC1 to SC4 flow in counter directions to each other. Compared to the above, the space 271 may be narrow since cooperative heating is conducted by magnetic coupling.

### (Individual Light Emitting Unit)

Referring to Figs. 18, 20, 22, and 26, individual light emitting units 276 are illuminants that are disposed in four locations interspersed along a concentric circle of the main heating coil MC. Each individual light emitting unit 276 is provided with a light source (not shown) using an electric lamp, organic EL, or light emitting diode (LED) and a light guide that guides light entering from the light source and is driven by a driving circuit 278 shown in Fig. 22.

The light guide may be of synthetic resin including acrylic resin, polycarbonate, polyamide, or polyimide, or a transparent material such as glass. As shown in Fig. 26, the top end side of the light guide is directed towards the bottom side of the top side 21 and the light from the light source is radiated from the top end side of the light guide as indicated by the dot and dash line in Fig. 26. Note that, as above, an illuminant that emits light in a liner manner in the upwards direction is proposed in Japanese Patent No. 3941812, for example. Emitting or lighting of this illuminant will enable the user to know whether each of the sub coils SC1 to SC4 is in an induction heating operation.

### (Wide Area Light Emitting Unit)

Referring again to Figs. 18, 20, 22, and 26, a wide area light emitting unit 277 is an annular illuminant that has a maximum outer diameter of DC on a circle that is concentric to that of the individual light emitting units 276, in which the annular illuminant surrounds the outside of the individual light emitting units 276 with a predetermined space 275 in between. This wide area light emitting unit 277 is provided with a light source (not shown) similar to that of the individual light emitting units 276 and a light guide that guides light entering from the light source and is driven by the driving circuit 278 as shown in Fig. 22.

As shown in Fig. 26, the top end side of the light guide of this wide area light emitting unit 277 faces the bottom side of the top plate 21. As indicated by the dot and dash line in Fig. 26, light from the light source is radiated from the top end side of the light guide. With the emitting or lighting of this illuminant, the outer edge portion of the group of sub heating coils SC1 and SC4 and the main heating coil MC can be distinguished.

The position of the guide mark 6LM that is a circle displayed on the top plate 21 does not match the position of the individual light emitting units 276.

This is because while the position of the guide mark 6LM substantially corresponds to the outer diameter DA of the main heating coil MC, the individual light emitting units 276 have sizes that surround the sub heating coils SC1 to SC4. Further, while the position of the circular cooperative heating area mark EM that is displayed on the top plate 21 substantially coincides with the position of the wide area light emitting unit 277, since the cooperative heating area mark EM is formed on the top plate 21 typically by means of print or the like, the top end portion of the wide area light emitting unit 277 is set so as to adjoinedly face a position a few millimeters outside of the cooperative heating area mark EM in consideration of the print or coating of the paint (using a material that does not penetrate most of the visible light). Note that if transparency of the cooperative heating area mark EM is ensured, they may be completely matched.

### (Arrangement of Infrared Sensor)

The infrared sensors 31 L include, as shown in Fig. 18, five sensors 31L1 to 31 L5. Among them, infrared sensor 31L1 is disposed in the space 270. This temperature sensor 31L1 detects the temperature of the heating target N such as a pan and the like that is placed on the main heating coil MC. On the outside of the main heating coil MC, infrared sensors 31 L2 to 31 L5 for the sub heating coils SC1 to SC4 are arranged. Each of the infrared sensors is disposed in the corresponding projection-shaped support protrusion 290A formed in the coil support 290.

Note that the infrared sensors 31 L2 to 31 L5 may not be used in order to exert the function of the placement-of-heating-target determination unit 280, that is, the function determining whether there is a heating target N placed or not, and, alternatively, a light detecting unit (photosensor) may be used. This is because reaching of light from the indoor lighting and light of the natural world such as sunlight from above the top plate 21 can be determined. When there is no heating target N placed, the light detecting portion below the heating target N detects ambient light such as that of an indoor lighting, and accordingly can use this as determination information indicating that no pan or the like is placed.

Temperature data from each of the temperature sensors 31R, 31L, 241, 242, 244, and 245 is sent to the energization control circuit 200 through the temperature detecting circuit 240. However, the temperature detection data from the infrared sensors (that is, all of the five sensors 31L1 to 31L5) related to the heating coils 6RC and 6LC is input to the placement-of-heating-target determination unit 280.

A ring-shaped metal shielding ring 291 (see Fig. 26) is disposed on the outermost side of the coil support 290. A speaker 316 shown in Fig. 22 is driven by signals from a voice synthesizer 315. This voice synthesizer 315 notifies various information that is displayed on the integrated display means 100 by means of phonetic sound, and notifies information such as heating power, the name of the heat source that is performing heating operation (for example, left IH heat source 6L), elapsed time from the start of cooking, remaining time of the set time of the timer, various detection temperatures, reference information for each type of cooking that is displayed on the guide area (100GD), detection of abnormal operation, improper operation of the user, and the like, including information leading to facilitation of cooking in a desirable state and in a desirable heating position (including the position of the heating target N). Information such as which of the main heating coil MC and the sub heating coils SC are performing heating operation, which will be described later, is included.

### (Operation of Cooking System)

Next, referring mainly to Fig. 22, an outline of an operation of the cooking system configured as above will be described.

A basic operation program from activation of power to the start of preparation of cooking is stored in the storage unit 203 (see Fig. 22) in the energization control circuit 200.

The user first connects the power plug to a commercial power supply of 200 V and pushes the operation button 63A (see Fig. 11) of the main power switch 63 to power-up.

Then a predetermined low supply voltage is supplied to the energization control circuit 200 through the voltage stabilizer (not shown) and the energization control circuit 200 is started up. The energization control circuit 200 carries out self-diagnosis with its control program and if there is no abnormality, the motor driving circuit 33 that drives the drive motor 300 of the fan 30 is pre-driven. Further, the left IH heat source 6L, the right IH heat source 6R, and the driving circuit 215 of the liquid crystal display of the integrated display means 100 are each pre-activated.

The temperature detecting circuit 240 in Fig. 22 reads the temperature data detected by each of the temperature detecting elements (temperature sensors) 31R, 31L (unless otherwise specified, in the description hereinafter, including all of the five 31L1 to 31L5), temperature detecting elements 241, 242, 244, and 245 and sends the data to the energization control circuit 200.

As above, since data such as circuit current, voltage, and temperature of the main components are collected to the energization control circuit 200, the energization control circuit 200 carries out determination of aberrant heating as an abnormality monitoring control before cooking. For example, when the surrounding area of the liquid crystal display substrate of the integrated display means 100 is higher than the heat resistant temperature of the liquid crystal screen substrate (for example, 70°C), then it is determined as abnormally high temperature by the energization control circuit 200.

Further the current detection sensor 227 in Fig. 22 detects the current flowing through the resonance circuit 225 that includes the parallel circuit of the right IH heating coil 6RC and the resonant capacitor 224. This detection output is supplied to the input unit 201 of the energization control circuit 200. The energization control circuit 200 compares the obtained detection current of the current detection sensor with the regular current value in the determination reference data that is stored in the storage unit 203, and if an undercurrent or an overcurrent is detected, the energization control unit 200 determines that there is abnormality due to some kind of trouble or defective conduction.

When no abnormality is determined during the above self-diagnosis, "preparation to start cooking is completed". However, if abnormality is determined, a predetermined procedure under abnormality is carried out and start of cooking is disallowed (a similar abnormality detection is carried out to the left IH heating coil 6LC).

If no abnormality is determined, displays indicating that heating operation is allowed are displayed in the corresponding areas 100L1, 100L2, 100M1, 100M2, 100R1, 100R2, and 100G of each heat source in the integrated display means 100. Then, a display displaying the user to select a desired heat source and, when induction heating, place the heating target N such as a pan on the desired guide mark 6LM, 6RM, or 7M of the heat source displayed on the top plate 21 (if a voice synthesizer 315 is added so as to work in association with the integrated display means 100, the above operation is encouraged to the user by phonetic sound at the same time.) Further, the energization control circuit 200 commands all of the individual light emitting units 276 and the wide area light emitting unit 277 to emit or light in a predetermined color (such as yellow, hereinafter referred to as "pattern 1").

Referring to Fig. 31, the overall control operation from completion of the above abnormality determination to the completion of preparation of cooking will be described next.

When the user instructs an operation of preparing heating with the operating unit (not shown) after activating the main power, estimations of whether there is a heating target N placed above the main heating coil MC and the sub heating coils SC1 to SC4 and whether the bottom area of the heating target N is larger than a predetermined value are performed with the placement-of-heating-target determination unit 280, the estimation results are transmitted to the energization control circuit 200 that is a control unit, and determination is performed of whether heating processing that is suitable for a large-diameter pan or heating processing that is suitable for a normal pan is to be performed (step MS11).

Processing different to the processing for a large-diameter pan is carried out when with a normal-sized or small-sized suitable pan or when with a pan unsuitable for heating or the like.

The energization control circuit 200 makes the liquid crystal display screen of the integrated display means 100, disposed near the control unit E, to display a display that encourages selection of the desired cooking menu (MS12).

When the user selects and inputs, with the operating unit, the cooking menu, heating power, and the cooking time (MS13), full-fledged induction heating operation is started (MS14).

As the cooking menu displayed on the display means G, there are seven modes, namely "rapid heating", "deep fry", "water-boiling", "preheating", "rice-cooking", "boiling", and "water-boiling and heat-retaining", similar to the ones described in Embodiment 1.

When the user selects one from the seven cooking menus, the program embedded in the energization control circuit 200 automatically selects a control mode corresponding to the menu, and settings such as whether to energize each of the main heating coil MC and the sub heating coils SC1 to SC4, the amount of energization (heating power), and the energization time are set. Depending on the cooking menu, the display unit displays a display encouraging the user to set an arbitrary heating power, energizing time, and the like (MS15).

With the above, the preparation of shifting to a cooking step targeting a large-diameter pan is completed, and after selection of the cooking menu, induction heating operation is promptly started. Note that when a "normal-sized pan" or a "small-sized pan" is used, it is basically similar to the above steps MS12 to MS 15. In the case with the "normal-sized pan" or the "small-sized pan", the seven cooking menus are also displayed on the integrated display means 100 as its cooking menus as shown in Fig. 28; however, in the case with the "normal-sized pan" or the "small-sized pan", since only the main heating coil MC in the center is heated in Embodiment 2, the control contents (heating power, the energization pattern, and the like) is greatly different. Naturally, it is not possible to individually control all or part of the sub heating coils SC1 to SC4, and there is no heating pattern in which the sub heating coils SC1 to SC4 are used. That is, the convection acceleration control using the sub heating coils SC1 to SC4 is not performed.

### (Cooking Step)

Next, a case in which the procedure has been shifted to the cooking step will be described with an exemplary case in which the right IH heat source 6R is used with "a normal-sized pan or a small-sized pan". Note that, in Embodiment 2, a small-sized pan refers to one with a diameter under 10 cm.

There are two ways to use the right IH heat source 6R, that is, to use the front side operating unit 60 and to use the top side operating unit 61.

### (Starting Cooking with Front Side Operating Unit)

First, a case in which the front side operating unit 60 is used will be described.

The user first turns the right operation dial 64R of the front side operating unit 60 to the left or right (the heating power is set in accordance with the turned amount).

Although not shown, three independent timer dials are provided in the front lower portion of the front side operating frame 62 of the front side operating unit 60. The user sets the timer of the right IH heat source 6R to a certain time period. With this, operating signals are input to the energization control circuit 200 and cooking conditions such as the heating power and the heating time are set by the energization control unit 200.

Next, the energization control circuit 200 drives the driving circuit 228 and drives the right IH heat source circuit 210R (see Fig. 20). Further, the integrated display means 100 is driven by the driving circuit 215 and the cooking conditions such as the heating power and the cooking time are displayed in this display area. The driving circuit 228 applies drive voltage to the gate of the IGBT 225, and, thus, a high-frequency current flows in the right IH heating coil 6RC. However, electrical heating with high heating power is not carried out from the start, but a detection of propriety of the heating target N such as a pan is carried out as below.

The current detection sensor 227 detects the current flowing through the resonance circuit that includes the parallel circuit of the right IH heating coil 6RC and the resonant capacitor 224. This detection output is supplied to the input unit of the energization control circuit 200. Further, when compared with the regular current value, if an undercurrent or an overcurrent is detected due to some kind of trouble or defective conduction, the energization control circuit 200 determines that there is abnormality. The energization control circuit 200 also has a function of determining whether the size of the used pan (heating target N) is appropriate or not in addition to the above type of abnormality detection function.

Specifically, for the first few seconds, a predetermined electric power (1 kW, for example) is distributed rather than the heating power (electric power) that the user has set and the input current value at that time is detected by the current detection sensor 227.

That is, it is known that, when the energization control circuit 200 drives the IGBT 225, which serves as switching means, by outputting a driving signal with a predetermined electric power and with the same conduction ratio, the current flowing through the portion of the current detection sensor 227 in a case in which a pan (heating target N) with a diameter smaller than the area of the right IH heating coil 6RC is placed on the top plate 21 is smaller than the current flowing through the portion of the current detection sensor 227 in a case in which a pan (heating target N) with a diameter larger than the area of the heating coil 220 is placed on the top plate 21.

Therefore, values of the current flowing through the portion of the current detection sensor 227 when an excessively small pan (heating target N) is placed are provided as determination reference data on the basis of a result derived from an experiment conducted in advance. Accordingly, when an excessively small current is detected by the current detection sensor 227, it can be determined by the energization control circuit 200 that it is used in an abnormal state, and, the process is shifted to the processing route for abnormal processing.

Note that even when the heating power is one that the user has set, for example, if a normal heating state can be maintained by the energization control circuit 200 changing the duty factor to the switching means 225 and by reducing the conduction ratio to a permissible range, then electric power adjusting control processing is carried out automatically. Accordingly, even if a small current value is detected, not all are shifted to the abnormal processing uniformly and unconditionally.

As above, in a state in which determination of the pan (heating target N) is carried out, characters "Detecting Propriety of Heating target" is first displayed in the display area 100R2 of the right IH heat source 6R. Further, a few seconds later, in accordance with the result of the determination of the above abnormal current detection monitoring processing, warning characters such as "Used Pan Too Small" and "Use Larger Pan (with diameter of 10 cm or more)" are displayed when the pan (heating target N) is too small.

When this determination result of the propriety of the pan is generated, the area of the display areas 100R1 and 100R2 of the right IH heat source 6R are enlarged a few times from the states of Fig. 27 and display indicating that the pan (heating target N) is not appropriate is displayed in the display area. When both the left IH heat source 6L and the central electric radiant heat source 7 are not used, for example, as shown in Fig. 28, the display areas 100R1 and 100R2 of the right IH heat source 6R are enlarged to sizes that cover the display areas 100L1, 100L2, 100M1, and 100M2 of the left IH heat source 6L and the central electric radiant heat source 7. Note, in Fig. 28, the right IH heat source 6R and the center heating source 7 are not used and only the left IH heat source 6L is used.

Subsequently, if the user does not take measures such as exchanging the pan (heating target N), after a certain elapse of time from when the pan (heating target N) has been indicated to be too small in the display area E, while not stopping the energization control circuit 200, the heating operation of the right IH heat source 6R is automatically stopped for a moment.

If the user changes the pan (heating target N) to a larger one, the user will be able to resume cooking once more by carrying out a cooking re-start operation.

When it is determined that the pan (heating target N) is adaptable by performing the above pan (heating target N) detection operation, the energization control circuit 200 carries out energization control processing that automatically accommodates power so that the right IH heat source 6R exerts its original set heating power. With this, the heating target N such as a pan or the like becomes high in temperature by the high-frequency magnetic flux from the right IH heating coil 6RC, and thus an electromagnetic induction heat cooking operation (cooking mode) is started.

The direct-current voltage that is obtained by the rectifier bridge circuit 221 and the smoothing capacitor 223 is input to the collector of the IGBT 225 serving as a switching element. The on/off control of the IGBT 225 is performed with the input of the driving signal from the driving circuit 228 to the base of the IGBT 225. By combining the on/off control of the IGBT 225 and the resonant capacitor 224, a high-frequency current is generated in the right IH heating coil 6RC and due to the electromagnetic induction effect caused by this high-frequency current, eddy current is generated in the heating target N such as a pan placed on the top plate 21 that is above the right IH heating coil 6RC. Accordingly, the eddy current that has been generated in the heating target N turns into Joule heat and the heating target generates heat being able to be used for cooking.

The driving circuit includes an oscillator circuit, and the drive signal that is generated by this oscillator circuit is supplied to the base of the IGBT 225 thus carrying out the on/off control of the IGBT 225. By controlling the oscillatory frequency and the oscillatory timing of the oscillator circuit of the driving circuit 228, the conduction ratio and the conduction timing of the right IH heating coil 6RC are controlled, and, thus, the frequency of the current and the like is controlled. As such, the heating power control of the right IH heating coil 6RC is achieved. Note, when a full bridge circuit is used as the driving circuit of the main heating coil MC, each of the driving circuits 228A and 228B functions in a similar manner to that of the driving circuit 228 above.

Note that when command stopping the energization of the right IH heat source 6R is issued, the energization of the right IH heat source 6R is stopped; however the operation of the fan 30 is continued for two to five minutes after the stop of the above energization. This will prevent the overshoot problem from happening, which is a rapid increase in temperature due to hot air stagnating around the right IH heating coil 6RC of the right IH heat source 6R immediately after the suspension of the fan 30. Further, this can prevent adverse effects such as temperature increase in the integrated display means 100 from occurring. This time period to continue the operation is determined by the energization control circuit 200 with a predetermined formula and a numerical table corresponding to the state of temperature increase until the stop of energization and conditions such as the indoor temperature and the high/low of the operated heating power of the heat source.

However, the energization of the fan 30 will be also suspended at the same time if it has been determined that the cooling fan itself is malfunctioning (for example, when only the temperature of the cooling fans 43A and 43B are increasing) such as detection of abnormal current of the fan 30.

The liquid crystal display substrate of the integrated display means 100 is heated by the reflected heat from the bottom portion of the heating target N, which is heated during heat cooking with the left and right IH heat source 6L and 6R, and the radiant heat from the top plate 21.

Further, in a case in which a deep fry pan (heating target N) with high temperature after its use is left in the middle portion of the top plate 21, the liquid crystal display substrate will also receive heat from the high temperature (approximately 200 degrees C) pan (heating target N).

Accordingly, in Embodiment 1, the integrated display means 100 is cooled by air from both the left and right sides with the fan 30 to suppress increase in temperature.

When the fan 30 is driven under the above normal operating environment, as shown in Fig. 12, air outside the main body 1 is drawn into the fan case 37 through the suction 37B of the suction tube 37A of the fan case 37. The air that has been drawn in is discharged forward in a horizontal direction from the outlet (exit) 37C with the blades 30F that is rotating in high speed in the fan case 37.

The component case 34 in front of the outlet 37C is connected to the fan case 37 in an adhered manner. Since the air installation port is in an adhered manner and is in communication with the outlet 37C, air from the fan 30 is sent so as to increase the inner pressure (static pressure) inside the component case 34 and the outlet 37C. A portion of the cooling air that has been sent in is discharged from the first outlet 34A that is provided on the top side of the component case 34 on the side near to the outlet 37C.

The temperature of the discharged air is substantially the same as that of the air that has exited the outlet 37C since it has not cooled any high-temperature heating element or heat generating electric parts on the way and is still fresh air as it has been.

Further, the air for cooling that has been sent into the ventilation space 42F of the cooling duct from the first outlet 34A is blown out upwards from the blow out hole 42C, as indicated by arrow Y3 in Figs. 14 and 16, impinges on the bottom side of the right IH heating coil 6RC that is immediately above, and cools the coil effectively. Note that when the right IH heating coil 6RC is partially shaped with a space that allows air for cooling to penetrate therethrough as above, the cooling air from the first outlet 34A also penetrates through this space so as to cool the coil.

Meanwhile, the cooling air that has been sent into the component case 34 from the fan 30 with some pressure is not directed to the surface of the circuit board 41 and, also, does not flow near the surface. Since the cooling air flows mainly through the portions of the radiation fins 43A and 43B that are structures protruding out to the surface (one side) of the circuit board 41 and through and between multiple heat exchanging fin elements, the radiation fins 43A and 43B are mainly cooled.

Further, among the cooling air that has been pushed out from the outlet 37C (arrow Y2 in Fig. 14), the main stream, which is the portion with the fastest velocity, flows out of the outlet 37C to the front in a straight line and is blown out from the second outlet 34B that is provided in the component case 34 in a position on the most downstream side of the cooling air, as indicated by arrow Y4. Since this second outlet 34B has an opening area that is a few times larger than that of the first outlet 34A, the greater part of the cooling air that has been pushed into the component case 34 from the outlet 37C is blown out from this second outlet 34B.

Furthermore, the cooling air that has been blown out is guided to the ventilation spaces 42G and 42H of the cooling duct 42 and the greater part of the cooling air is blown out from the blow out holes 42C that are formed in plural numbers on the top side of the upper case 42A, as indicated by arrows Y4 and Y5 in Fig. 16, impinges on the bottom side of the right IH heating coil 6RC that is immediately above, and cools the coil effectively.

A portion of the cooling air that has been guided into the ventilation space 42H of the cooling duct 42 is guided into the front component case 46 that houses each of the light emitting elements (LEDs) of the right heating power indicating lamp 101 R and left heating power indicating lamp 101 L that indicates by means of light various electrical and electronic components 56 and the heating power during induction heat cooking. Specifically, the cooling air of the fan 30 enters the ventilation space 42H of the cooling duct 42 from the second outlet 34B of the component case 34, passes through the vent hole 42K of the cooling duct 42 formed in correspondence with the ventilation space 42H, and enters the vent hole 46R or 46L (see Fig. 14) of the lower duct 46A that is positioned so as to adhere immediately above the vent hole 42K.

With the above, the cooling air that has entered the front component case 46 first cools the liquid crystal display screens 45R and 45L (see Fig. 14) from below, and, then, in the course of being discharged from the notch 46c into the upper portion component chamber 10 while flowing in the front component case 46, the built-in components and the like are sequentially cooled including sequentially cooling with the cooling air the liquid crystal display screens 45R and 45L, integrated display means 100, mounting substrate 56 that mounts thereon various electrical and electronic components, and the light emitting elements of the right heating power indicating lamp 101 R and left heating power indicating lamp 101 L that indicates by means of light the heating power during induction heat cooking.

In particular, since the cooling air that has been guided into the front component case 46 is not air that has cooled the left and right IH heating coils 6LC and 6RC that become high in temperature during the induction heating operation, even though with a small volume of cooling air, the liquid crystal display screens 45R and 45L and the integrated display means 100 are continuously cooled so as to effectively suppress the increase in temperature.

As shown in Figs. 11, 14, and 15, the cooling air that has been blown out from multiple blow out holes 42C of the cooling duct 42 flows in the upper portion component chamber 10 towards the back as indicated by arrows Y5 and Y6. The flow of the cooling air merges with the cooling air that has been discharged from the notch 46C into the upper portion component chamber 10, flows into the rear exhaust hood 12 that is opened to the outside in the main body A, and is ultimately discharged from the rear exhaust hood 12 as shown by arrow Y9 (see Fig. 11).

### (Starting Cooking with Top Side Operating Unit)

Next, a case in which the top side operating unit 61 (see Fig. 12) is used will be described.

Since the energization control circuit 200 is already activated and the driving circuit 215 (see Fig. 22) of the liquid crystal display of the integrated display means 100 is pre-activated, input keys for selecting the heat sources are displayed on the liquid crystal display of the integrated display means 100. Here, when an input key (either one of 143 to 145 that are shown in Fig. 27 will be the key) that selects the right IH heat source 6R among the above keys is pressed, the area of the corresponding area 100R (100R1 for heating power and 100R2 for time period) of the right IH heat source 6R of the liquid crystal display is automatically enlarged, and further, in this state, the input keys 142 to 145 are displayed with input functions switched so as to correspond to the situation. As such, by successively operating the displayed input keys, cooking conditions such as the type of cooking (also known as cooking menu, for example, water-boiling, stew, retaining heat, etc.), the level of heating power, and the heating time are set.

Further, when at a stage in which the desired cooking conditions are set, the input key 146 displays characters "SET" as shown in Fig. 27. The inputting of the cooking conditions is set by touching this. Note, in Fig. 27, the right IH heat source 6R has been selected.

Furthermore, as described above, the energization control circuit 200 performs determination processing of the propriety of the pan. When it is determined that the pan (heating target N) is adaptable, the energization control circuit 200 carries out energization control processing that automatically accommodates power so that the right IH heat source 6R exerts a predetermined heating power that the user has set. With this, the pan, which is the heating target N, becomes high in temperature by the high-frequency magnetic flux from the right IH heating coil 6RC, and thus an electromagnetic induction heat cooking operation (cooking step) is started.

### (Cooking with One-touch Setting)

In the right heating power setting operating unit 70, one-touch setting keys, each for a heating power, are provided that facilitates the setting of the heating power of the right IH heat source 6R with a push of a button by the user. Since three one-touch key are provided, namely, a low heating power key 91, a middle heating power key 92, and a high heating power key 93, the heating power can be input with one operation by pushing the low heating power key 91, the middle heating power key 92, the high heating power key 93, or the 3 kW key 94, without the need to operate the input key of the integrated display means 100 via at least one menu screen. Note that cooking using the left IH heat source 6L can be started with the same operation as above.

### (Starting Cooking with Grill Heating Chamber)

Next, a case in which the electric radiant heat sources 22 and 23 (see Fig. 15) of the grill heating chamber 9 are energized will be described. Cooking with this can be carried out while the right IH heat source 6R and the left IH heat source 6L are heat cooking; however, a limiting program with an interlock function is embedded in the energization control circuit 200 so that cooking cannot be carried out with the central electric radiant heat source 7 at the same time. This is because the above will exceed the limit of the rated power of the whole cooking system.

There are two ways to start various cooking in the grill heating chamber 9, which are using the input key displayed on the liquid crystal display of the integrated display means 100 in the top side operating unit 61 and pushing the operation button 95 (see Fig. 27) for the electric radiant heat sources 22 and 23.

In either way, various cooking can be carried out in the grill heating chamber 9 by energizing the electric radiant heat sources 22 and 23 at the same time or separately. By receiving information from a temperature sensor 242 and a temperature control circuit 240, the energization control circuit 200 controls the energization of the electric radiant heat sources 22 and 23 so that the ambient temperature inside the grill heating chamber 9 becomes a target temperature, which is set in the energization control circuit 200 in advance, and after elapse of a predetermined time from the start of the cooking, notifies it (display by the integrated display means 100 or a notification by the voice synthesizer 315), and ends the cooking.

Due to heat cooking with the electric radiant heat sources 22 and 23, hot air with high temperature is generated inside the grill heating chamber 9. Accordingly, the internal pressure of the grill heating chamber 9 naturally increases and air naturally ascends in the exhaust duct 14 from the outlet 9E at the back. In the course of the above, the odor component in the exhaust is decomposed by the deodorizing catalyst 121 that has become high in temperature with energization of the electric heater 121 H for the catalyst by the heater driving circuit 214 for driving.

Meanwhile, since the exhaust purpose auxiliary axial flow fan 106 is provided midway of the exhaust duct 14, regarding the hot air that is ascending the exhaust duct 14, by operating the fan 106 and taking air inside the main body A into the exhaust duct 14, as indicated by arrow Y7 (see Fig. 15), the high-temperature air in the grill heating chamber 9 is induced to this fresh air and is exhausted, as indicated by arrow Y8, from the upper end opening 14A of the exhaust duct 14 while decreasing its temperature.

As above, with the exhaust stream of the upper end opening 14A (see Fig. 15) of the exhaust duct 14, the air in the rear exhaust hood 12 adjacent to the upper end opening 14A is induced and discharged to the outside. That is, the air in the space 26 between the grill heating chamber 9 and the horizontal partition plate 25 and the air in the upper portion component chamber 10 in the main body are also discharged together through the rear exhaust hood 12.

Next, operation in a case in which the left IH heat source 6L is used in heat cooking will be described. Note that, similar to the right IH heat source 6R, there are two ways to shift to cooking mode after the abnormality monitoring processing before cooking has been completed and to use the left IH heat source 6L, that is, to use the front side operating unit 60 (see Fig. 11) and to use the top side operating unit 61 (see Fig. 10). In the below description, description will be given of a case in which a large-diameter pan is used as the heating target N from the stage in which energization to the left IH heating coil 6LC (see Fig. 11) is started and cooking is started.

In the cooking system of Embodiment 2, when an elliptical or a rectangular pan (heating target N) that has a pan bottom diameter greatly larger than the maximum outer diameter DA (see Fig. 18) of the main heating coil MC is used, there is an advantage in that as well as heating the elliptical heating target N with the main heating coil MC, cooperative heating can be performed with the sub heating coils SC1 to SC4.

For example, it is assumed that there is an elliptical pan (heating target N) that extends over both the main heating coil MC and a single sub heating coil SC1 that is on the right of the main heating coil MC.

When such an elliptical pan (heating target N) is placed and heat cooking is started, the temperature of the elliptical pan (heating target N) increases. Both the infrared sensor 31 L1 (Fig. 18) of the main heating coil MC and the infrared sensor 31 L2 of the sub heating coil SC1 detect a phenomenon indicating that the input of the ambient light (light of the indoor light and sunlight) is smaller compared to those of the other infrared sensors 31 L3, 31 L4, and 31 L5 and that the temperature is on the rise. Based on this information, the placement-of-heating-target determination unit 280 determines that an elliptical pan (heating target N) exists.

Further, basic information to determine whether the same single heating target N is placed above is input to the placement-of-heating-target determination unit 280 (see Figs . 22 and 25) from the current sensor 227 of the main heating coil MC and the current sensors 267A to 267D (see Fig. 22) of each of the sub heating coils SC1 to SC4. By detecting the current change, the placement-of-heating-target determination unit 280 detects the impedance change of the main heating coil MC and the sub heating coils SC. The energization control circuit 200 issues a command signal to drive the inverter circuit MIV of the main heating coil MC on which the elliptical pan (heating target N) is placed and each inverter circuit SIV1 to SIV4 of the sub heating coils SC1 to SC4, distribute high-frequency current to at least one of the sub heating coils among the four sub heating coils SC1 to SC4 that is placed with the elliptical pan (heating target N), and suppress or stop distributing high-frequency current to one or some of the remaining sub heating coils that is not placed with the elliptical pan (heating target N).

For example, when the placement-of-heating-target determination unit 280 determines that the same singular elliptical pan (heating target N) is placed above the main heating coil MC and a single sub heating coil SC1, the energization control circuit 200 operates only the main heating coil MC and the specific sub heating coil SC1 to work in association with each other and provides high-frequency power to the two heating coils in a heating power rate set in advance from respective inverter circuits MIV and SIV1 (the heating power distribution will be described later in detail).

Here, when the user starts cooking with the left IH heat source 6L with a heating power of 3 kW, for example, in which 2.4 kW is distributed to the main heating coil MC and 600 W to the sub heating coil SC1 by the energization control circuit 200, the "heating power rate" refers to the above ratio of 2.4 kW and 600 W. In this example, the heating power rate is 4:1. Further, only the individual light emitting unit 276 (see Figs. 18 and 26) that is positioned outside the sub heating coil SC1 is changed from a yellow light emitting state (pattern 1) to a red light emitting state (hereinafter, referred to as "pattern 2"). The driving circuit 278 (see Fig. 22) drives the individual light emitting unit 276, and a predetermined light source (red lamp, LED, etc.) in the individual light emitting unit 276 is emitted or lighted and the yellow light source that had been emitted or lighted until then is turned off. Accordingly, only the activated sub heating coil SC1 is displayed with a red light belt so as to be visible from above the top plate 21. The emitting of the individual light emitting units 276 corresponding to the other sub heating coils is stopped.

This sub heating coil SC1 cannot be driven alone to perform induction heat cooking and the other three sub heating coils SC2, SC3, and SC4 cannot perform induction heat cooking by itself or by combination. In other words, the feature is such that one or some of the four sub heating coils SC1, SC2, SC3, and SC4 that are disposed around the main heating coil MC are only heated and driven when the main heating coil MC is driven. Note that there is a control program for the energization control circuit 200 in which the four sub heating coils are driven with the following control pattern when the mode for convection acceleration is to be performed in a case in which a heating target N with a large diameter that covers over all of the four sub heating coils SC1, SC2, SC3, and SC4 is placed.

In a case in which the main heating coil MC is heat driven, all or part of the sub heating coils SC1, SC2, SC3, and SC4 are, at the same time as the main heating coil MC, heat driven with a predetermined order and heating powers.
During the period in which the main heating coil MC is heat driven, all or part of the sub heating coils SC1, SC2, SC3, and SC4 are heat driven with a predetermined order and heating powers.

In a predetermined time period before the end of heat driving of the main heating coil MC (for example, at the final stage of cooking), all or part of the sub heating coils SC1, SC2, SC3, and SC4 are heat driven with a predetermined order and heating powers.

Further, when such cooperative heating is carried out, the energization control circuit 200 supplies high-frequency power from the dedicated inverter circuits MIV and SIV1 to the main heating coil MC and the specified sub heating coil SC1 in proportion with the heating power rate set in advance to carry out the heating operation. Based on this information, the energization control circuit 200 issues a driving command to the driving circuit 278 (see Fig. 22) and the individual light emitting unit 276 is, as mentioned above, from when the cooperative heating has been started, made to emit light so that the sub heating coil SC1 that is carrying out the cooperative heating can be identified.

Further, in Embodiment 2, the individual light emitting unit 276 is emitted or lighted as a means of displaying the cooperative heating. That is, the user can recognize that a state of cooperative heating has been entered when the individual light emitting unit 276 is changed from the initial yellow light emitting state (pattern 1) to the red light emitting state ("pattern 2").

Note that rather than this displaying pattern, the integrated display means 100 may directly display characters on the liquid crystal display screen.

Note that the wide area light emitting unit 277 (see Fig. 18, 20, and 26) is driven by the driving circuit 278 (see Fig. 22) from the stage in which the abnormality determination is completed after the activation of power by the user pushing the operation button 63A (see Fig. 11) of the main power switch 63. Since it is first emitted or lighted in yellow, it will be possible to guide the user the placing position from the stage in which the elliptical pan (heating target N) is placed above the left IH heat source 6L. At the stage in which the heating operation is started by supply of high-frequency power for heating to the main heating coil MC, the energization control circuit 200 changes the luminescent color of the wide area light emitting unit 277 (for example, changing the ones that were yellow to red). For example, the emitting or lighting of the yellow light source (lamp, LED, etc.) in the wide area light emitting unit 277 is stopped and, alternatively, the emitting or lighting of the red light source (lamp, LED, etc.) that is disposed next to the yellow light source may be started or a polychromatic light source (three color LED and the like) may be used to change the luminescent color.

Further, even when the elliptical pan (heating target N) is temporarily lifted up or shifted to the left or right for a predetermined time t (a few seconds to about 10 seconds), the energization control circuit 200 maintains the heating operation and does not change the emitting or lighting status of the wide area light emitting unit 227 and keeps on displaying the preferable position to place the elliptical pan (heating target N) to the user. At this point, when the elliptical pan (heating target N) is lifted up for more than the predetermined time t, the placement-of-heating-target determination unit 280 determines that there is no elliptical pan (heating target N) and outputs this to the energization control circuit 200. On the basis of the discrimination information from the placement-of-heating-target determination unit 280, the energization control circuit 200 issues a command temporarily reducing or stopping the heating power of the induction heating until the elliptical pan (heating target N) is placed once more. In this case, while the preferred place to place the elliptical pan (heating target N) is kept displayed to the user, the emitting or lighting state (lighting color) of the wide area light emitting unit 277 may be changed in accordance with the state of the heating power. For example, when in a state in which the heating power is lowered, it may be emitted or lighted in orange, and when stopped, emitted or lighted in yellow. Accordingly, it will be possible to display the preferable place of placement, as well as notifying the state of the heating power to the user.

Further, when the elliptical pan (heating target N) is shifted to the left, for example, the placement-of-heating-target determination unit 280 determines that the same singular elliptical pan (heating target N) is placed above the main heating coil MC and the sub heating coil SC2 on the left side, and, based on the discrimination information from the placement-of-heating-target determination unit 280, the energization control circuit 200 operates only the two, that is, the main heating coil MC and the specific sub heating coil SC2, to work in association with each other and provides the high-frequency power to the two heating coils in a heating power rate set in advance from respective inverter circuits MIV and SIV2. Further, the energization to the sub heating coil SC2 on the left side is stopped. The "heating power" (for example 3 kW) and the heating power distribution (for example, when cooking with a heating power of 3 kW with the left IH heat source 6L, the main heating coil MC will have a heating power of 2.4 kW and the sub heating coil SC1 will have a heating power of 600 W, so it will be 4:1) that are already performed are maintained and cooking is continued. The integrated display device 100 maintains the display of the heating power of 3 kW by means of numbers and letters.

Further, since the sub heating coil SC1 is not contributing to the cooperative heating any more, and alternatively, since a different sub heating coil SC2 has been added to the cooperative heating operation, high-frequency power is supplied to the dedicated inverter SIV2. That is, when the energization control circuit 200 detects that the sub heating coil SC1 has been switched to the sub heating coil SC2 on the basis of discrimination information from the placement-of-heating-target determination unit 280, the energization control circuit 200 issues a driving command to the driving circuit 278. It is commanded so that the sub heating coil SC2 performing cooperative heating can be identified with the individual light emitting unit 276. That is, the energization control circuit 200 makes the driving circuit 278 drive the individual light emitting unit 276 such that the individual light emitting unit 276 on the outside position (left side in Fig. 18) of the relevant sub heating coil SC2 alone is emitted or lighted. Accordingly, the specified light source (red lamp, LED, etc.) in the individual light emitting unit 276 is emitted or lighted (with pattern 2) and the red light source that has been emitted or lighted until then at a position adjoining the sub heating coil SC2 is turned off.

Note that the direction of the high-frequency current IA flowing in the main heating coil MC and the high-frequency current IB flowing in each of the sub heating coils SC1 to SC4 are preferably the same on their adjacent sides, as shown by the solid arrows in Fig. 20, from the view point of heating efficiency (Fig. 20 illustrates a case in which they are in agreement while the main heating coil MC has a flow in the counterclockwise direction and each of the four sub heating coils has a flow in the clockwise direction). This is because, in an area where two independent coils are adjacent to each other, when the currents of the coils flow in the same direction, the magnetic fluxes generated by the currents intensifies each other, the density of the magnetic flux that interlink with the heating target N is increased, and more eddy current is generated on the bottom side of the heating target; hence, efficient induction heating is enabled. The loops illustrated by broken lines in Fig. 22 shows magnetic flux loops when high-frequency currents with opposite flow directions with that of the high-frequency currents IA and IB shown in Fig. 20 are made to flow.

With this magnetic flux loop, eddy current that flows in the opposite direction to the high-frequency current is generated on the bottom side of the heating target N, and Joule heat is generated. When the main heating coil MC and the sub heating coils SC1 to SC4 are disposed close to each other and when the currents are made to flow in opposite directions, the alternating magnetic fields generated by the coils interfere with each other in a certain adjoining area and as a result restricts the amount of pan current (the current flowing in the heating target N) generated by the main heating coil MC and the sub heating coils SC1 to SC4 from becoming large and the calorific value that becomes large proportional to the square of this pan current is curbed. However, conversely, this creates a different advantage. That is, in the adjacent areas described above where the magnetic flux density becomes high, since the magnetic flux density can be suppressed to a low density, in a wide area planarly covering the main heating coil MC and one or more sub heating coils SC1 to SC4 performing cooperative heating, the distribution of the magnetic flux that interlink with the heating target N can be equalized, that is, can be uniformized, thus providing an advantage that the temperature distribution can be uniformized when cooking in a wide heating region.

Accordingly, the invention adopts a method in which, in areas in which the heating coil MC and each of the sub heating coils SC1 to SC4 are adjacent to each other, currents are distributed in the same direction in specific cooking menus, and a switching operation is employed in which the direction of the currents are made to counter each other in other cooking menus. Note that the direction of each magnetic loop shown in Fig. 26 is determined by the directions of the high-frequency currents IA and IB flowing in the heating coils.

Figs. 31 to 34 illustrate a flowchart of a cooking operation according to Embodiment 2 of the invention.

The control program in this flowchart is stored in the storage unit 203 (see Fig. 22) that is inside the energization control circuit 200.

Since Fig. 31 has already been described, Fig. 32 will be described. First, when starting cooking, initially, the operation button of the main power switch 63 provided in the front side operating unit 60 of the main body A of the cooking system, illustrated in Fig. 10, is pushed and turned on (step 1, hereinafter, "step" will be abbreviated as "ST"). Accordingly, electric power of a predetermined voltage is supplied to the energization control circuit 200, and the energization control circuit 200 itself checks whether there is any abnormality in the entire cooking system (ST2). The energization control circuit 200 carries out self-diagnosis with its control program and if there is no abnormality, the motor driving circuit 33 (see Fig. 22) that drives the drive motor 300 of the fan 30 is pre-driven. Further, the driving circuit 215 of the liquid crystal display of the left IH heat source 6L and the integrated display means 100 are each pre-activated (ST3).

Then, if no abnormality is detected in the result of the abnormality determination processing (ST2), the process proceeds to ST3. On the other hand, if abnormality is detected, the process proceeds to predetermined abnormal processing and, ultimately, the energization circuit 200 itself turns the electric power off and stops.

When the process proceeds to ST3, the energization circuit 200 controls the driving circuit 278 so that all of the individual light emitting units 276 and the wide area light emitting unit 277 are emitted or lighted at the same time (yellow color, pattern 1). Note that either one of the individual light emitting units 276 and the wide area light emitting unit 277 may be first emitted or lighted, then, a different light emitting unit may be emitted or lighted, and thus, by gradually increasing the number of light emitting units, all of the individual light emitting units 276 and the wide area light emitting unit 277 may be emitted or lighted. Then, in the above state in which all of the individual light emitting units 276 and the wide area light emitting unit 277 are emitted or lighted (with pattern 1), command from the user is awaited. Note that all of the individual light emitting units 276 and the wide area light emitting unit 277 are in a state in which yellow light is continuously emitted (ST3A).

Then, as mentioned above, since there are IH heating sources 6L and 6R on the left and right side, respectively (see Fig. 12), the user selects either one with the front side operating unit 60 or the top side operating unit 61 (ST4). Here, when the left IH heat source 6L is selected, the result of the selection is displayed in the corresponding area 100L1 for the left IH heat source 6L in the integrated display means 100. As shown in Fig. 29, the areas of the corresponding areas 100L1 and 100L2 are automatically enlarged, and these areas are maintained for a certain time period (when other heat sources, such as the right IH heat source 6R, are not in operation, then, these enlarged areas of 100L1 and 100L2 are kept as they are until cooking is completed). Subsequently, it is detected whether there is a pan (heating target N) above the selected heating coil 6LC. This detection is carried out by the placement-of-heating-target determination unit 280.

When the energization control circuit 200 determines that a pan (heating target N) is placed on the basis of the detection information of the placement-of-heating-target determination unit 280 (ST5), the energization control circuit 200 determines if the pan (heating target N) is appropriate for induction heating (ST6). This determination is carried out on the basis of discrimination information from the placement-of-heating-target determination unit 280. The placement-of-heating-target determination unit 280 discriminates the heating target N, such as a pan (heating target N) that has a markedly small diameter of a few centimeters and a pan (heating target N) in which its bottom is greatly deformed or bent, on the basis of the difference in their electrical characteristics, and outputs the discrimination result as discrimination information.

Further, on the basis of the discrimination information from the placement-of-heating-target determination unit 280, the energization control circuit 200 performs determination processing of whether the pan (heating target N) is appropriate at ST6, and when it is determined to be appropriate, the procedure proceeds to step ST7. The set heating power (for example, one of the nine levels, such as 120 W for the minimum heating power "heating power 1" to 2.5 kW for the "heating power 8" and 3 kW for the "maximum heating power") is displayed in the corresponding area 100L1 of the left IH heat source 6L of the integrated display means 100. For example, it is 1 kW. Note that the heating power may initially be set to a predetermined heating power, such as a middle heating power (for example a heating power 5 of 1 kW) as the default setting, allowing cooking to be started with this initially set heating power without the user having to set the heating power.

Further, if inappropriate, since the display means such as the integrated display means 100 is already operating at this stage, the energization control circuit 200 makes the integrated display means 100 display that the pan (heating target N) is inappropriate, and at the same time, makes the voice synthesizer 315 output this as message information and the speaker 316 to notify this by output of phonetic sound.

As above, when either one of the left or right IH heat sources 6L and 6R is selected, since cooking is started automatically based on the preset heating power (1 kW mentioned above, for example), there is no need to issue a new cooking start command with the input key, the dial, or the operation button. Naturally, the user can arbitrarily change the heating power at all times after the start of the induction heating.

When the heating operation is started in ST7A with the left IH heat source, induction heating is carried out with the main heating coil MC and the sub heating coils SC1 to SC4 that constitute the left IH heat source 6L. In ST5, detection has been carried out whether the pan (heating target N) is only on the main heating coil MC or, further, in addition to that, on which sub heating coils SC1 to SC4 the pan is placed. If the pan (heating target N) is placed only on the main heating coil MC, it will be induction heating with the main heating coil MC alone, and if the same pan (heating target N) is also on at least one of the sub heating coils SC1 to SC4, it will be cooperative heating with the main heating coil MC and the at least one of the sub heating coils SC. The above determination processing is carried out in ST8.

In the case of cooperative heating, under the control of the energization control circuit 200, cooperative heating is started by supplying high-frequency current to the sub heating coils SC1 to SC4 involved in the heating and the main heating coil MC from the corresponding inverter circuits MIV and SIV1 to SIV4 (ST9). Further, with the control command from the energization control circuit 200, the illumination pattern of the wide area light emitting unit 277 is changed from the emitting or lighting state of yellow (pattern 1) to the emitting or lighting state of red (pattern 2) (ST10). Note that the change may be such that while the same color as ST3A is emitted or lighted, the emitting or lighting is performed in an intermittent manner so that it looks as if it is flashing to the user or may be such that the brightness of the emitting or lighting is increased. Either corresponds to changing the pattern and switching of the invention.

Further, the energization control circuit 200 outputs to the integrated display means 100, for example, information indicating that the main heating coil MC and the sub heating coil SC1 are in the midst of cooperative heating along with information on the heating power. Accordingly, the corresponding areas 100L1 and L2 of the integrated display means 100 displays that SC1 is the sub heating coil that has started the heating operation by means of characters and graphics. In Fig. 29, a display example "main coil and left sub coil simultaneously heating" is illustrated by characters. Note that since this display section is in the corresponding area L1, heating power information "heating power: 3kW" is adjacently displayed. That is, the display position of the heating power and the position displaying information on the cooperative heating operation are positioned adjacently. Here, CM corresponds to information indicating that cooperative heating operation is performed. Further, the energization control circuit 200 creates phonetic sound information such as "sub heating coil on the left is also carrying out heating" and outputs this from the speaker 316 such that the above message is displayed and is notified by phonetic sound at the same time.

Note that other than keeping the emitting or lighting state of the wide area light emitting unit 277, as shown in Fig. 20, the individual light emitting unit 276 provided in each of the sub heating coils SC1 to SC4 may be simultaneously emitted or lighted, for example, so that the user can visually identify the sub heating coils SC1 to SC4 that are involved in the cooperative heating.

Further, the processes ST8 to ST 10 are repeated in a short cycle of a few seconds until there is a heat-cooking stop command from the user. Even if the sub heating coil SC1 on the right side is temporarily involved in the cooperative heating, there are cases in which the placed position of the pan (heating target N) is changed by unintentional or intentional slight shifting of the pan (heating target N) in all directions by the user during cooking. Thus, in the cooperative heating determination step ST8, information of the placement-of-heating-target determination unit 280 is always output from the voice synthesizer 315 as well. Accordingly, when the energization control circuit 200 carries out processing of specifying the sub heating coils SC1 to SC4 that are to be heat driven based on information from the placement-of-heating-target determination unit 280 and the temperature sensors 31 L1 to 31 L5, the voice synthesizer 315 notifies the result in real time.

On the other hand, if it is determined that cooperative heating is not to be performed in ST8 (corresponding to step MS11 in Fig. 31), the energization control circuit 200 controls the main inverter circuit MIV such that the main heating coil MC alone is driven. Accordingly, high-frequency current is supplied from the inverter circuit MIV to the main heating coil MC and independent heating is started (ST11). Then, the individual light emitting unit 276, which radiates light to the outer circumferential edge of the heating area corresponding to the main heating coil MC that is involved in the independent heating, is changed from the state in which yellow light is emitted or lighted (pattern 1) to the state in which red light is emitted or lighted (pattern 2) (ST12).

Note that the change may be such that while the same color as ST3 is emitted or lighted, the emitting or lighting is performed in an intermittent manner so that it looks as if it is flashing to the user or may be such that the brightness of the emitting is increased. Both are change and switching of patterns. Note that other than keeping the emitting or lighting state of the individual light emitting units 276, the emitting or lighting of the wide area light emitting unit 277 may be continued but also may be turned off. Then the process proceeds to step 13.

Subsequently, when a heat-cooking stop command is sent from the user or when it is determined by the energization control circuit 200 that a certain set time has elapsed (time is up) during cooking with the timer, the energization control circuit 200 controls the main inverter circuit MIV and the sub inverter circuits SIV1 to SIV4 and stops the energization of the main heating coil MC and all of the sub heating coils SC1 to SC4 that has been heat driven at that time. Further, in order to alert that the temperature of the top plate 21 is high, the energization control circuit 200 allows a high-temperature notifying operation to be started which is done by flashing all of the wide area light emitting unit 277 and the individual light emitting units 276 in red (ST14).

The high-temperature notifying operation is continued after the energization of the main heating coil MC and the sub heating coils SC1 to SC4 are stopped until a certain time that has been set in advance (for example, 20 minutes) elapses or until the detection temperature data from the temperature detecting circuit 240 indicates that the temperature of the top plate 21 has dropped to, for example, 50°C (due to natural heat radiation, it normally takes 20 minutes or more). The above determination of the temperature drop or elapse of time is performed in ST15 and if the high-temperature notifying condition is satisfied, the energization control circuit 200 ends the high-temperature notification and the operation of the cooking system is ended (subsequently, the electric power switch is automatically tuned off. That is, when the power switch had been turned ON, power has been supplied to a relay (not shown) for maintaining the power switch ON. This power supply is shut off, and the relay is turned OFF; hence, the power switch is also turned OFF automatically).

Note that the energization control circuit 200 synchronizes with the start of the high-temperature notifying operation ST14, and displays a warning text "Do not touch the top plate, the top plate is still high in temperature" or a graphic indicating this on the liquid crystal screen of the integrated display means 100. Note that in the vicinity and neighbor of the integrated display means 100, a separate display may be provided that displays with LEDs characters "Caution High Temperature" that stand out on the top plate 21, and this may further notify the high temperature.

As configured as above, in Embodiment 2, it is possible to perform induction heating to large-diameter pans that had not been possible conventionally. Further, after the start of energization of the heating coil and before the induction heating operation substantially starts, it is possible to inform the user all of the heating region by means of emitting or lighting of the individual light emitting units 276 and the wide area light emitting unit 277. Then, since the emitting or lighting state of the individual light emitting units 276 and the wide area light emitting unit 277 can be visually confirmed by the user, after the selection of the heat source by the user and the start of the heating operation, even in the preparation state before placing the pan (heating target N), the optimum position to place the pan (heating target N) can be understood, and thus provides the user with high usability.

Further, since the high-temperature notification is performed by using the individual light emitting units 276 and the wide area light emitting unit 277, a cooker with high safety can be provided without increasing the parts count.

An operation in a case where the sub heating coil performing the cooperative heating operation is switched from SC1 to SC2 after the illumination pattern of the wide area light emitting unit 277 has been changed from the emitting or lighting state of yellow (pattern 1) to the emitting or lighting state of red (pattern 2) (ST10) will be described subsequently with reference to Fig. 33.

As mentioned above, when the user moves the elliptical pan (heating target N) on the top plate 21 to the left, for example, the placement-of-heating-target determination unit 280 determines that a same single elliptical pan (heating target N) is placed on the main heating coil MC and the sub heating coil SC2 on the left side and outputs this discrimination information to the energization control circuit 200.

Referring to Fig. 33, when the energization control circuit 200 detects this on the basis of the discrimination information from the placement-of-heating-target determination unit 280 (ST10A), the sub inverter circuit SIV1 corresponding to the sub heating coil SC1 is stopped, and the main inverter circuit MIV and the sub inverter circuit SIV2 are controlled such that only the main heating coil MC and the specific sub heating coil SC2 on the left side work in association with each other. As such, high-frequency power is supplied to the two heating coils MC and SC2 in a heating power rate set in advance from respective inverter circuits MIV and SIV2. Further, the energization to the sub heating coil SC1 on the right side is stopped. The "heating power" (for example 3 kW) and the heating power distribution (for example, when attempting to cook with a heating power of 3 kW with the left IH heat source 6L, the main heating coil MC will have a heating power of 2.4 kW and the sub heating coil SC1 will have a heating power of 600 W, so it will be 4:1) that are already performed are maintained and cooking is continued. The integrated display device 100 maintains the display of the heating power of 3 kW by means of numbers and letters (ST10B).

Further, the corresponding area 100L1 of the integrated display means 100 displays that the sub heating coil that is performing the heating operation has been switched from SC1 to SC2 by means of characters and graphics. Note that this can be displayed in the corresponding area 100L2.

Subsequently, in step ST10C, unless the user changes the heating power settings, the processes ST8 to ST10 is repeated until there is a heat-cooking stop command from the user. When a heat-cooking stop command is sent from the user or when it is determined by the energization control circuit 200 that a certain set time has elapsed (time is up) during cooking with the timer, the process jumps to ST14 in Fig. 32, and the energization control circuit 200 stops the energization of the main heating coil MC and all of the sub heating coils SC1 to SC4 that has been heat driven at that time and ends the process (ST14 to ST16).

The end of the heating operation is displayed in the corresponding area 100L1 of the integrated display means 100. Further, unless the user has turned off the switch (not shown) of the voice synthesizer 315, similar to ST10, the end of the operation is notified by phonetic sound at the same time. Note that although the control program has been described with a sequential flowchart in Figs. 31 to 34, the determination processing of abnormality (ST2), determination processing of whether a pan is placed or not (ST5), determination processing of appropriateness of the pan (ST6), and the like are provided as subroutines. Further, interrupt handling is performed such that the main routine that determines the heating control operation is interrupted by the subroutine at appropriate timings. In actuality, abnormality detection and detection of placement of a pan is executed a number of times during induction heat cooking.

A case in which the user changes the heating power settings in step ST10C during heating of the "large-diameter pan" will be described.

The induction cooking system according to Embodiment 2 of the invention includes a main heating coil MC heating a heating target N placed on a top plate 21; a group of sub heating coils SC including a plurality of sub heating coils SC1 to SC4 each disposed adjacent to an outside of the main heating coil; a main inverter circuit MIV supplying a high-frequency current to the main heating coil MC; a group of sub inverter circuits SIV1 to SIV4 independently supplying the high-frequency current to each of the plurality of sub heating coils of the group of sub heating coils; a placement-of-heating-target determination unit 280 determining whether a same heating target N is placed above the main heating coil and the first or sub heating coils; input units 64R, 64L, 70, 71, 72, 90, 94, and 142 to 145 that are operated by the user setting a heating power during induction heating; integrated display means 100 on which the setting information of the input unit is displayed; and an energization control circuit 200 controlling, on the basis of the setting information of the input unit, output of each of the main inverter circuit MIV and the group of sub inverter circuits SIV1 to SIV4, in which, on the basis of information from the placement-of-heating-target determination unit 280, when a cooperative heating operation is started with the main heating coil MC and the group of sub heating coils SC, the energization control circuit 200 controls the output of the main inverter circuit MIV and the output of the group of sub inverter circuits SIV1 to SIV4 to become a predetermined distribution such that a cooperative heating operation with a heating level set by a user is obtained, when in a state in which one or some of the sub heating coils SC that is performing the cooperative heating operation is increased or reduced in number, or is switched to a different one of the sub heating coils, the energization control circuit 200 maintains the distribution of the output before the change and the display means 100 displays the predetermined heating information so as to be visually seen regardless of the increase or reduction in the number of sub heating coils that is performing the cooperative heating operation or the switching to the different sub heating coil.

In ST10C in Fig. 33, when it is determined that a heating-power change command has been issued, the process proceeds to ST17 in Fig. 34. In ST17, it is determined whether the changed heating power is higher or lower than a predetermined heating power (for example, 501W); if it is changed to a higher heating power than the predetermined heating power, then the process proceeds to ST18, while the predetermined heating power distribution is maintained by control of the energization control circuit 200. That is, in the above-mentioned example of 3 kW, when the executed heating power is 3 kW, then the heating power of the main heating coil MC is 2.4 kW and the heating power of the sub heating coil SC2 is 600 W, and the ratio is 4:1. This distribution is maintained. Further, the set heating power after the change is displayed in the corresponding area 100L1 of the integrated display means 100 as "middle heating power: 1 kW" by the energization control circuit 200.

On the other hand, when the heating power is changed to a heating power that is smaller (there are three: 120 W, 300 W, and 500W) than the predetermined heating power level (501 W), the process of step 17 is followed by step 19, and the energization control circuit 200 outputs a control command signal with a different heating power distribution to the main inverter circuit MIV and the group of sub inverter circuits SIV1 to SIV4. Accordingly, even if the number of sub heating coils SC that is to perform cooperative heating is one or more than two, the heating power difference between the main heating coil MC and the sub heating coil(s) SC is maintained at a constant rate. Further, as for this heating power after the change, the heating power after the change is displayed in the corresponding area 100L1 of the integrated display means 100 as "heating power: low: 500 W".

A representative example of the heating power and the main-sub heating power ratio will be specifically illustrated in the following Figs 35 and 36.

Fig. 35(A) illustrates the heating level (W) of the main heating coil MC and the sub heating coils SC1 to SC4 when the maximum heating power is 3 kW and when the heating power ratio between the main heating coil and all of the sub heating coils is fixed to 4:1.

Fig. 35(B) illustrates the heating level (W) of the main heating coil MC and the sub heating coils SC1 to SC4 when the heating power is 6 (1.5 kW) and when the heating power ratio between the main heating coil and all of the sub heating coils is fixed to 4:1.

Fig. 36(A) illustrates the heating level (W) of the main heating coil MC and the sub heating coils SC1 to SC4 when the heating power is 3 (500 W) and when the heating power ratio between the main heating coil and all of the sub heating coils is changed to 3:2.

On the other hand, when the heating power is changed to a heating power that is smaller (there are three: 120 W, 300 W, and 500W) than the predetermined heating power level (501 W), and when the minimum driven heat power of the sub heating coil SC is 50 W, then, with the heating power ratio of 4:1, the sub heating coil SC will be driven at a low heating power of 25 W and 33 W as shown in Fig. 35(B), which is a problem.

In the actual product, since the impedance between each individual metal pan that serves as the heating target N is different, even when a high-frequency power equivalent to or higher than a predetermined value is applied to the pan, the heat conversion ratio is not constant. As described in Embodiment 2, the current detection sensor 227 detects the current flowing through the resonance circuit that includes the parallel circuit of the left IH heating coil 6LC and the resonant capacitor 224L and the determination is performed determining whether there is a heating target N, whether the pan (heating target N) is appropriate for induction heating, and, further, whether an undercurrent or an overcurrent having a value difference equivalent to or above a predetermined value when compared to a normal current value is detected. The above is used in performing these determinations. Accordingly, the current applied to the induction heating coil is minutely controlled such that the designated heating power is exerted. Accordingly, when the heating power setting is set low, since the flow of current is small, a problem that detection of the current cannot be accurately performed arises. In other words, when heating power is high, it is relatively easy to detect the current component flowing in the resonance circuit; however, when heating power is low, without taking measures such as increasing the sensitivity of the current sensor, it will not be possible to accurately deal with the change in heating power, hence, it will not be possible to carry out the object of performing an accurate heating power control operation.

Although not shown, as described above, since input-side current sensors that detect the input current value of the power input to the inverter circuits MIV and SIV1 to SIV4 are provided in actuality, these current values and the above-mentioned current values on the output side of the coils detected by the (output-side) current sensors may be used in combination to achieve appropriate control.

Note that similar to the main heating coil of the left IH heating coil 6LC, the sub heating coil SC is formed of a twisted, assembled wire constituted of fine wires with a size of approximately 0.1 mm to 0.3 mm. Since the cross-sectional area in which the current that causes induction heating is small, compared with the main heating coil MC, a large driving current cannot be applied and the maximum heating capacity is accordingly small. However, as described above, by further reducing the wire diameter of the fine wires of each coil and with more winding, thus increasing the surface area of the coil conductor, even if the drive frequency of each inverter circuits SIV1 to SIV4 is increased, the surface resistance can be reduced; hence, it will be possible to control further low heating power continuously while suppressing loss and temperature rise.

Fig. 36(B) illustrates the heating level (W) of the main heating coil MC and the sub heating coils SC1 to SC4 when the heating power is 3 (500 W) and when the heating power ratio between the main heating coil and all of the sub heating coils is fixed to 4:1.

In Embodiment 2, control is performed such that the heating power distribution is changed to 3:2.

Note that in a case in which the heating power is 120 W or 300 W, even with the heating power distribution is 3:2, the minimum driven heat power 50 W may not be maintained. In such a case, control is performed such that a display encouraging change of the heating power such as "Set heating power is too small and heat cooking cannot be performed. Please set the heating power to 500 W or higher" is displayed on the corresponding area 100L1 of the integrated display means 100 or the heating is limited to the main heating coil MC alone. In actuality, it is not practical to assume that a large pan that covers both the main heating coil MC and the sub heating coil SC will be heated with a heating power of 120 W or 300 W, and there is no concern of degrading the actual usability even if the above control is performed.

During the cooperative heating operation, the energization control circuit 200 controls the amount of electric power supplied to each of the main heating coil MC and the group of sub heating coils SC1 to SC4 such that the heating power ratio, that is, the main-sub heating power ratio, between the main heating coil MC and the group of sub heating coils SC1 to SC4 is within a substantially constant range. Since it is difficult to suppress the amount of electric power applied when the heating power setting is small as mentioned above, the actual power supply time may be limited so that the amount of electric power is reduced per unit time. For example, if the power applying time to each of the sub heating coils SC1 to SC4 from the corresponding sub inverter circuits SIV1 to SIV4 is reduced to 50% by duty factor control, the amount of electric power per unit time that is actually contributing to heating can be 50%. That is, if it is difficult to reduce the heating power by limiting the frequency of the applied electric power alone, duty factor control may be adopted in which the rate of time supplying electric power to time not supplying electric power can be reduced such that the actual acting electric power can be reduced to a smaller value.

Note that in Embodiment 2 of the invention, although it is described that the heating power ratio between the main heating coil MC and the group of sub heating coils SC1 to SC4 is maintained substantially constant during cooperative heating, it does not assure that the heating power ratio during various cases of the cooperative heating is always maintained to a "predetermined ratio". For example, since control detecting the differences between the currents flowing on the input side of the inverter circuits and those flowing on the output side thereof is carried out and the results are fed back to the energization control circuit 200 at all times while heat driving, there are cases in which control is transitionally unstable immediately after the user has changed the heating power setting and in which the heating power ratio deviates temporarily from the target heating power ratio.

Further, during cooperative heating, when the pan is moved laterally or is lifted up for a short time, the movement is detected by the current sensors 227 and 267A to 267D, and it will be needed to be identified whether the movement is due to improper usage or the like, and thus, time is required to select the appropriate control method.

Until implementation of this identification or adaptive control is determined, the ratio may deviate from the target heating power ratio temporarily. Rather than knowing the instantaneous change in the applied current, as long as the user can confirm that the heating power set by the user has not been changed against the intent of the user, the user will feel no uneasiness in the course of cooking.

Note that even if the user has not changed the heating power settings, upon selection of another cooking menu by the user, there are cases in which the heating power ratio between the main heating coil MC and the group of sub heating coils SC1 to SC4 is changed. For example, in a case in which a large frying pan with a rectangular outer shape is used to fry a few hamburgers and in which the frying pan is placed on the top plate 21 so that it is longitudinal in the front-rear direction at a position slightly to the left relative to the center point X1, the heating will be performed with the main heating coil MC illustrated in Fig. 18 and the second sub heating coil SC2 that is provided in the obliquely left front position and the fourth sub heating coil SC4 that is provided in the obliquely left rear position.

For the entire bottom side of the frying pan to uniformly increase its temperature, a heating power of 1.5 kW or 2 kW is recommended, and, as such, the control target value of the amount of electric power supplied to each of the main heating coil MC and the sub heating coils SC2 and SC4 is set with a predetermined heating power ratio. However, in a case in which the same frying pan is used at the same position with a heating power of 2 kW or 1.5 kW to fry an omelet using a few eggs, since the cooked ingredient (beaten eggs) spreads thinly on the entire bottom surface of the frying pan, the result of cooking is, in some cases, better if the temperature of the peripheral portion of the frying pan is increased earlier than the center portion of the bottom surface and if the heating power is increased a little in the peripheral portion.

Accordingly, in the case of such cooking, the heating powers of the two sub heating coils SC2 and SC4 are set higher than that of the main heating coil MC. As above, it is desirable that the heating power rate between the main heating coil MC and the group of sub heating coils SC1 to SC4 is changed (even with the same level of heating power) depending on the content of the actual cooking.

As described in Embodiment 1, in a case of a cooking menu in which uniformity of temperature is important, the main heating coil MC at the center is driven with its minimum heating power for a predetermined time period from the start of heating, while the sub heating coils SC1 to SC4 that are involved in the cooperative heating are simultaneously driven (are set to an ON state) with a higher heating power, for example; hence, it will be possible to perform cooking in which only the pan surface (side of the pan) of a frying pan and the like is preheated.

Note that in Embodiment 2, although the main heating coil MC is set to exert higher heating power than that of the entire group of sub heating coils SC1 to SC4, the invention is not limited to this in any way. The heating powers may be changed in many ways depending on conditions such as the structure and size of the main heating coil MC and each of the sub heating coils SC1 to SC4 or the number of disposed sub heating coils SC. For example, the heating power of the entire group of sub heating coils SC1 to SC4 may be set higher than the main heating coil MC of the two may be set the same.

However, when the system is used in a common household, typically, a round normal sized pan, for example, one with a diameter of 20 cm to 24 cm, is often used. When such a standard pan is used, induction heating will be performed with the main heating coil MC alone, so it is desirable that consideration is made so that the minimum heating power required for this kind of cooking can be exerted. It is considered that when the system is used in a common household, the frequency of using a normal-sized pan is greater than the frequency of using a large-diameter pan. As this as a premise, it can be considered that the main heating coil is mainly used in a common household. Accordingly, the heating coil at the center is referred to as the main heating coil MC.

Further, during cooperative heating, that is, when two or more independent induction heating coils are driven together at a specific time so as to magnetically cooperate with one another, it is desirable from the viewpoint of stable and reliable control that the operation timing of the main inverter circuit MIV and the sub inverter circuits SIV1 to SIV4 are coordinated. For example, it is desirable that at least one of the below timings are coordinated, that is, the start timing of heating with the main inverter circuit MIV and the first sub inverter circuit SIV1, the stop timing of heating, the changing timing of the heating power. An example of the above can be conceived such that when switching is performed from a state in which the main inverter circuit MIV and the first sub inverter circuit SIVI are in operation at the same time to a state in which the second sub inverter circuit SIV2 is in operation with the main inverter circuit MIV, operations of the main inverter circuit MIV and the first sub inverter circuit SIVI are synchronized and stopped, and then the two, that is, the main inverter circuit MIV and the driving of the second sub inverter circuit SIVI2 are both started at the same time.

Note that the control may be such that the main inverter circuit MIV and each sub inverter circuit SIV are limited to a predetermined low heating power for a predetermined time (for example, 10 seconds) immediately after being driven; during this predetermined time, performing interrupt handling of some or all of the determination processing of abnormality (ST2), determination processing of whether a pan is placed or not (ST5), determination processing of appropriateness of the pan (ST6), as shown in Fig. 32 in Embodiment 1; and when there is no problem, continuing cooking by automatically increasing the heating power to the heating power that the user has set.

Note that in the above example, exemplary description is given while a resonance circuit that includes a parallel circuit of an IH heating coil and a resonant capacitor is used; however, a series circuit of an IH heating coil and a resonant capacitor may also be used.

Further, in Embodiment 2, although it has been assumed that during induction heating of the left IH heating coil 6LC, only the fan 30 of the left cooling chamber 8L is operated and the fan 30 of the right cooling chamber 8R is not operated, depending on the used state of the cooking system (cases such as the left and right IH heating coils 6LC and 6RC has been driven simultaneously until immediately before or when the central electric radiant heat source 7 or the grill heating chamber 9 is used) and depending on the environment such as the temperature of the upper portion component chamber 10, each fan 30 of the left and right cooling chambers 8L and 8R may be operated at the same time. Further, the operation speeds (fan capacities) of each of the left and right fans 30 are not always the same and either one or both may be changed as appropriate in accordance with the used state of the cooking system.

Furthermore, the outer dimensions of the left and right cooling units CU do not necessarily have to be the same and the dimensions of each of the fans 30, the rotating blades 30F, the motors 300, the fan cases 37, and the component cases 34 may be changed as appropriate in accordance with the calorific value and the size of the subject to be cooled (induction heating coil and the like). However, if the maximum heating power of each of the left and right IH heating sources 6L and 6R are equal, it is preferable that the sizes and specifications of the components of the two cooling units CU are made common to the extent possible so as to reduce production cost and improve ease of assembly. Changing, such as the disposition of the cooling unit CU to either one side in the left or right, has no relation to the purport of the invention.

Furthermore, the vertical partition plates 24R and 24L and the horizontal partition plate 25 are not necessarily required in the embodiment the invention. For example, as a matter of course, the outer walls of the grill heating chamber 9 may be covered with a heat insulating material. If a sufficient gap can be provided with the outer walls of the grill heating chamber 9 or if the temperature of the gap can be kept low (for example, with free convection or forced convection of air), these partition plates 24 and 25 and the heat insulating material may be omitted. Further, among the outer wall of the cooling unit CU itself, a heat shield panel may be mounted or a heat insulating film may be formed on the side facing the outer wall of the grill heating chamber 9. This will enable the facing gap with the outer wall of the grill heating chamber 9 to be minimum, and if assuming that the width of the main body A is the same, the width of the grill heating chamber 9 can be made larger in proportion.

Further, in the above Embodiment 2, the integrated display means 100 is capable of displaying the operation condition of the four heat sources, namely, the left IH heating coil 6LC, the right IH heating coil 6RC, the central electric radiant heat source (heater) 7, the electric radiant heat sources (heaters) 22 and 23 individually or in multiple numbers at the same time, command the start or stop of the heating operation with the touch operation to the input keys 141 to 145, and set the energizing conditions. However, the integrated display means 100 may be one limited to a display function without the above input function to the energization control circuit 200.

Furthermore, the placement-of-heating-target determination unit 280 that determines whether the same single pan (heating target N) is placed above the main heating coil MC and the sub heating coils SC1 to SC4 may use, as described in the above Embodiment, infrared sensors 31 that detect temperatures or current detection sensors 227 that detect the current flowing in the heating coils, as well as means that optically detect whether there is a pan (heating target N) above the sensor. For example, if there is a pan (heating target N) above the top plate 21, light from the lighting equipment on the kitchen ceiling or the sun will not enter the top plate 21, but if there is no pan (heating target N) above the top plate 21, ambient light such as light of the lighting equipment or light of the sun will enter the top plate 21. It may be one that detects the difference.

Additionally, as methods of determining the material properties of the pan (heating target N) other than the method in which the material properties of the pan (heating target N) is determined on the basis of the voltage flowing in the heating coil and the input current flowing in the inverter circuit, for example, ones using other electrical characteristics can be considered such as a method in which the material properties of the pan (heating target N) is determined on the basis of the voltage flowing in the heating coil and the input voltage flowing in the inverter circuit. For example, in Japanese Unexamined Patent Application Publication No. 2007-294439, a technique is introduced in which the material and the size of a heating target is distinguished on the basis of the input current value flowing in the inverter circuit and the current value flowing in the heating coil.

Note that in Embodiment 2, it is described that the placement-of-heating-target determination unit 280 "determines" that the same single pan (heating target N) is on the main heating coil MC and one or more of the sub heating coils SC1 to SC4, in actuality, it is not determined that the number of pans is one. That is, processing of actually counting the number of the placed pans is not adopted. In these types of induction cooking systems, it is difficult to assume that cooking is performed while a plurality of heating target N is placed on one induction heating coil; accordingly, the inventors have deemed that "the same single pan (heating target N) is placed" when there is no large difference between the impedance of the main heating coil MC and one or more of the sub heating coils SC1 to SC4, in which the impedance is detected by the current sensors 227 and 267A to 267D.

In other words, as shown in Fig. 22, the placement-of-heating-target determination unit 280 can grasp the size of the currents flowing in the main heating coil MC and one or more of the sub heating coils SC1 to SC4 and, accordingly, can grasp each size of the impedance. If the value of the impedance is within a predetermined range, a determination signal is sent to the energization control circuit 200 indicating that the same single pan (heating target N) is placed. Similarly, when temperatures are detected by the infrared sensors 31, the placement-of-heating-target determination unit 380 determines that the same single pan (heating target) is placed on the basis of the comparison result of comparing whether the detection temperatures of each of the infrared sensors 31 corresponding to plural heating coils are the same or not. When using means such as a photosensor that utilizes the fact that the light income changes depending on whether there is a pan or not, it is practical to process that there is a pan placed on the main heating coil MC and one or more of the sub heating coils SC1 to SC4 on the basis of comparison of the size of the light income.

As described above, when the placement-of-heating-target determination unit 280 determines that a heating target N is placed with a size extending over the main heating coil MC and the four sub heating coils SC1 to SC4, which are disposed around the main heating coil MC, in the initial step before starting the induction heating (after the abnormality detection processing is completed), seven cooking menus, namely, "rapid heating", "deep fry", "water-boiling", "preheating", "rice-cooking", "boiling", and "water-boiling and heat-retaining", similar to the ones described in Embodiment 1 , are displayed on the integrated display means 100 as the selectable cooking menu, as shown in Fig. 29.

For example, when the key for rapid heating, among the seven keys E1A, E1B, E1C, E2A, E2B, E3A, and E3B for selecting the cooking menu, is touched, for example, as shown in Fig. 26, the cooking menu for rapid heating is selected, and that "rapid heating" has been selected is displayed by means of characters. In Fig. 30, the selection key E1A itself is continuously displayed to indicate that rapid heating is carried out.

In Embodiment 2 as well, when rapid heating is selected, the heating power exerted to the heating target N can be manually set. Similar to Embodiment 1, the user can arbitrarily select the total heating power of the main heating coil MC and the sub heating coils in the range of 120 W to 3.0 kW.

The main-sub heating power ratio of the main heating coil MC and the sub heating coils SC1 to SC4 is automatically determined by the energization control circuit 200 so as to not exceed the limit that is the above-mentioned total heating power selected by the user and so as to be within the range of the predetermined heating power ratio; the user cannot arbitrarily set the heating power ratio. Further, directions of the high-frequency currents in the adjacent areas of the main heating coil MC and the sub heating coils SC1 to SC4 are controlled to coincide each other.

Further, among the seven keys for selecting the cooking menu, when the selection key E1 C for "boiling" is touched, cooking menu "boiling" can be carried out. In Embodiment 2, it is possible to boil water rapidly and shift to boiling when using a deep pan referred to as a "pasta pan" that has a large diameter and depth that is mainly used for the purpose of boiling pasta.

For example, although the default value of the heating power is 2.0 kW, the user may start heating with the heating power set to 3.0 kW from the start. In this case, the main-sub heating power ratio is automatically determined by the control unit 100 such that there is no need for the user to arbitrary set the ratio. For example, the heating power of the main heating coil MC is set to 1.0 kW and the total heating power of the four sub heating coils is set to 2.0 kW. When the water starts to boil, the energization control circuit 200 issues a notification signal and displays a display on the predetermined guide area 100GD of the integrated display means 100 encouraging the user to cast the pasta or noodle into the pan, and simultaneously notifies the user of this with the voice synthesizer 315. At this time, if the heating power is not set once more, notification that the heating power will be automatically reduced is carried out.

If the user does not carry out any operation and when a boiling state is reached, as in Embodiment 1, the energization control circuit 200 outputs a command signal to the main inverter circuit MIV and the sub inverter circuits SIV1 to SIV4 that reduces the heating power. If the user sets the heating power once more or if the user touches the input key "start boiling" that appears in the predetermined display area 100L2 of the integrated display means 100, heating is started once more at 3.0 kW. In this case, the four adjacent sub heating coils are divided into two groups such as a group of two sub heating coils SC1 and SC2, and a group of two sub heating coils SC3 and SC4, and the two groups are alternately heat driven for 15 seconds while each group is set at a total heating power of 1.5 kW.

After start of boiling, control facilitating convection of hot water is automatically carried out. Note that even if the user reduces the heating power to less than 3.0 kW, such as 2.0 kW or 1.0 kW, immediately after start of boiling, a similar heating operation with the convection acceleration control is carried out within the range not exceeding the total amount of heating power.

As above, in Embodiment 2, the keys E1A, E1B, E1C, E2A, E2B, E3A, and E3B for selecting the seven cooking menus described above are displayed on the integrated display means 100 that displays the heating conditions in a state allowing the user to perform selection operation. As such, a suitable heat driving pattern is automatically determined by the control unit with the selection of the intended cooking menu. Accordingly, there is an advantage in that cooking with a heating coil driving form according to the intent and desire of the user such as prioritization of heating time or prioritization of uniformity of temperature is enabled and elimination of improper use by the user and alleviation of mental stress can be enjoyed since the selection key for the cooking menu is made operable in the display unit.

### Embodiment 3

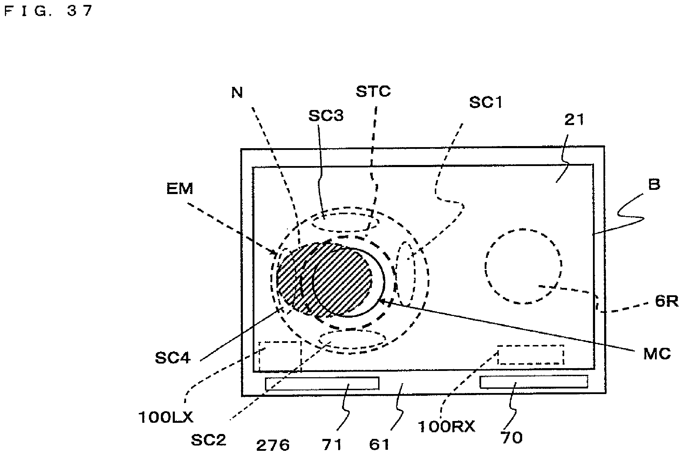

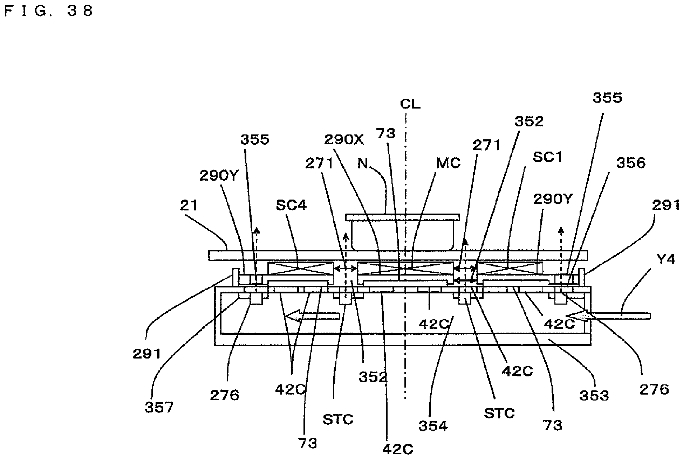

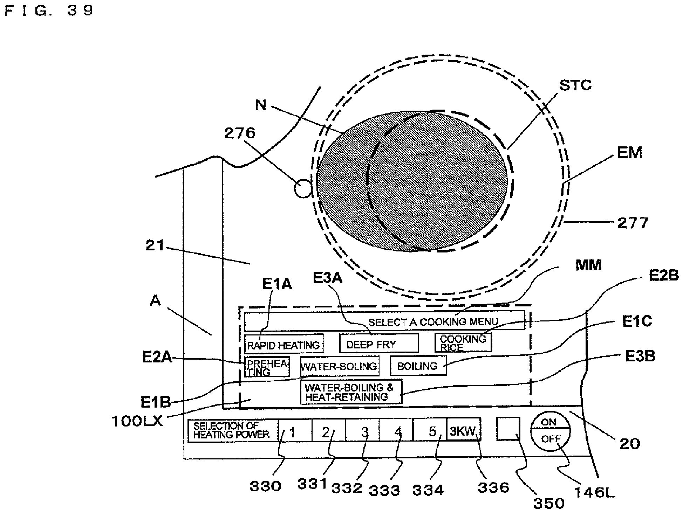

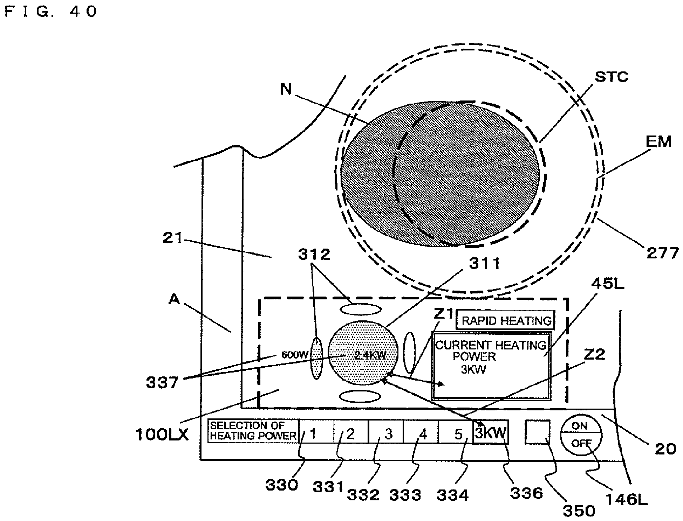

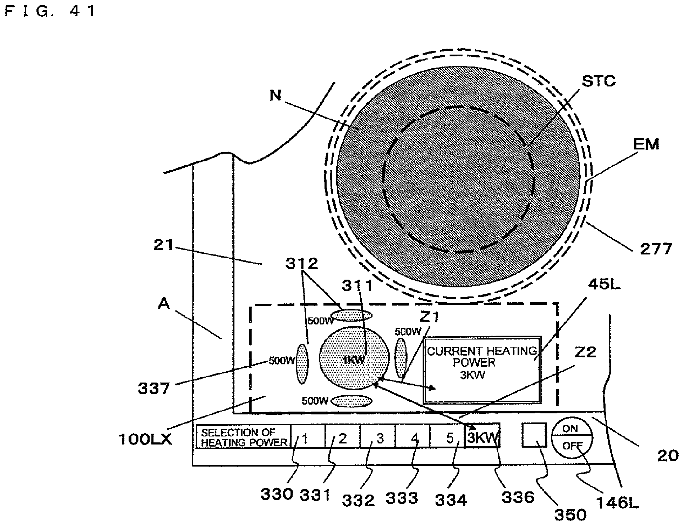

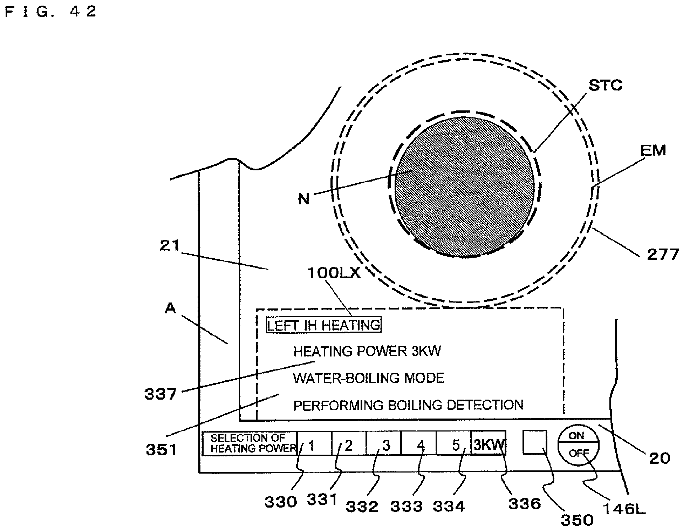

Figs. 37 to 42 illustrate an induction cooking system according to Embodiment 3 of the invention. Fig. 37 is a plan view illustrating an exemplary display screen of the integral display means of the built-in induction cooking system according to Embodiment 3 of the invention when the left IH heat source alone is used to heat a large-diameter pan. Fig. 38 is a longitudinal sectional view illustrating the built-in induction cooking system according to Embodiment 3 of the invention when the left IH heat source alone is used to heat a pan with normal diameter. Fig. 39 is a plan view illustrating an exemplary display screen of the integral display means of the built-in induction cooking system according to Embodiment 3 of the invention when the left IH heat source alone is used to heat a large-diameter pan. Fig. 40 is a plan view illustrating an exemplary display screen of the integral display means of the built-in induction cooking system according to Embodiment 3 of the invention when the left IH heat source alone is used to heat a large-diameter pan. Fig. 41 is a plan view illustrating an exemplary display screen of the integral display means of the built-in induction cooking system according to Embodiment 3 of the invention when the left IH heat source alone is used to heat a different elliptical large-diameter pan. Fig. 42 is a plan view illustrating an exemplary display screen of the integral display means of the built-in induction cooking system according to Embodiment 3 of the invention when the left IH heat source alone is used to heat the pan with normal diameter. Note that similar or corresponding elements of Embodiments 1 to 2 are designated with like reference numerals. Further, unless specified otherwise, the terms used in Embodiment 1 are used with the same meaning in Embodiment 3.

In Embodiment 3, similar to Embodiment 2 described above, the embodiment includes a display unit 100LX dedicated to the left IH heating unit 6L. That is, as in Embodiment 2 above, a left heating power setting operating unit 71 is provided in a position on the left side relative to the left-right center position of the main body A, and behind and near the unit, a display unit 100LX, in which the user can visually see one or plural display screens through the top plate 21, is provided near the front of the top plate 21 (front with respect to the user, lower part of the drawing of Figs. 37 to 42).

A first characteristic of Embodiment 3 is that, as shown in Fig. 40, schematic graphics 311 and 312 are displayed on the display screen of the display unit 100LX to indicate to the user by graphics that the main heating coil MC and at least one of the four sub heating coils SC1 to SC4 are carrying out cooperative heating (This point is different from Embodiments 1 and 2 described above). That is, graphic 311 schematically illustrating the main heating coil MC and graphics 312 schematically illustrating the sub heating coils SC1 to SC4 are displayed on the display unit 100LX dedicated to the left IH heating unit 6L during cooperative heating.

Furthermore, in Embodiment 3, in the display unit 100LX, the newest heating power information of the main heating coil MC and the group of sub heating coils SC are displayed by display objects 337 such as letters and the like. In the example in Fig. 40, it can be known clearly that an induction heating operation is carried out with a charge of the maximum heating power of 3 kW, and the heating power of the main heating coil MC is set to 2.4 kW and that of the sub heating coil SC on the left side is set to 0.6 kW by the display of letters "Current heating power 3 kW" (note that when this display is displayed, notification may be performed simultaneously with the voice synthesizer 315).

The input keys 330 to 334 and 336 are input keys for heating power and are each formed in the front side portion of a frame 20 that covers the outer circumference of the top side of the main body A. The control units including press switches are formed in a line. Further, on the right side of the display unit 100LX, a liquid crystal display screen 45L that displays the current fire power is provided. The input keys 330 to 334 and 336 for heating power allows selection of heating levels in six levels. The six heating levels increases its heating power as it moves to the right. The heating power can be set directly with a single press operation. When a specific heating power is selected, the input result thereof is displayed on the liquid crystal display screen 45L. Further, a predetermined heating power distribution result corresponding to this heating power is displayed to the user with display objects 337 such as letters and the like.

"350" is a selection switch for the convection acceleration control that is a characteristic of Embodiment 3, and its operating element is exposed on the frame 20 on the left side relative to the left-right center position of the main body A. This switch issues a command signal of whether or not to operate the convection acceleration control, such as the one described in Embodiment 1, to the energization control circuit 200. When this switch is pushed once during a cooking step, convection acceleration control, such as the one described in Embodiment 1, is automatically carried out such that control such as switching of the energization timing of the groups of sub heating coils, changing of the heating power, or making the direction of the currents in the area adjacent to the main heating coil MC to be the same is carried out after the heating target has started to boil or immediately before boiling (for example, when the temperature of the heating target or the object to be cooked rises to 98°C).

The energization control circuit 200 is programed so that the selection switch 350 is not effectively functioned unless the placement-of-heating-target detection unit 280 determines that a large-diameter pan that extends over the entire four sub heating coils and the main heating coil is placed. Further, unless the temperature detecting circuit 240 determines that the liquid in the heating target N has reached its boiling temperature or that it is immediately before boiling (for example, when the temperature of the heating target or the object to be cooked rises to 98 °C) by receiving temperature detection information from the above-described temperature sensors that are measuring the temperature of the heating target N, even if the convection acceleration selection switch 350 is operated, there will be no effective command of any kind input to the energization control circuit 200, or there will be no effective command signal output to the main inverter circuit MIV, sub inverter circuits SIV1 to SIV4, and the like from the energization control circuit 200. Note that this switch may be disposed as a touch key on the surface of the display of the display unit 100LX, where the operation key of the switch 350 is displayed in the display unit.

There are multiple cooking menus and the user can arbitrarily select one among them. The selection keys are depicted in Fig. 39. Fig. 39 illustrates a state immediately before cooperative heating a large-diameter pan. Note that as shown in Fig. 28 of Embodiment 2, there are seven keys for selecting the cooking menu, namely, the selection key E1A for rapid heating, the selection key E1 B for water-boiling, the selection key E1 C for boiling, the selection key E2A for preheating, the selection key E2B for cooking rice, the selection key E3A for deep frying, and the selection key E3B for water-boiling and heat-retaining. Fig. 39 illustrates a state in which characters MM such as "select a cooking menu" are displayed on the display screen so that the user will select either one of the above keys.

Before the start of cooperative heating or during the heating operation, when the user operates the convection-acceleration-control selection switch 350, the energization control circuit 200 outputs control signals to the inverter circuit MIV of the main heating coil MC and the sub inverter circuits SIV1 to SIV4 to change the supply state of the high-frequency power to the main heating coil MC and the groups of sub heating coils SC such that convection acceleration control described in Embodiment 1 is carried out. That is, in Embodiment 3, if the placement-of-heating-target detection unit 280 detects that a large-diameter pan is placed over the entire main heating coil MC and the sub heating coils SC1 to SC4, although cooperative heating can be carried out, it is possible to automatically shift to cooperative heating during the subsequent heating step after the object to be cooked has started to boil or immediately before boiling (for example, when the temperature of the heating target or the object to be cooked rises to 98°C). The user can arbitrary determine whether convection acceleration control is to be carried out after the cooperative heating with the selection switch 350.

As above, the user can arbitrary determine whether convection acceleration control is to be carried out after the cooperative heating with the selection switch 350. That is, irrespective of whether a cooking menu before start of the cooperative heating is being performed, when the user wishes to carry out a convection acceleration heating method in the middle of a cooking step, by operating the convection-acceleration-control selection switch 350, control that automatically switches the driving of the sub heating coils SC1 to SC4 can be carried out from the start of boiling of the object to be cooked or immediately before boiling. Note that when the convection-acceleration-control selection switch 350 is selected, not only the first convection acceleration control described in Embodiment 1 but the second or third convection acceleration control may be carried out.

In Embodiment 3, the individual light emitting units 276 provided in Embodiment 2 are also provided. A center light emitting unit (main heating coil light emitting unit) STC is disposed under the top plate 21 so as to surround the circumference of the main heating coil MC, indicates an outer edge position of the area substantially corresponding to the heating region of the main coil MC, and is annularly provided near a position immediately below the guide mark 6LM illustrated in Figs. 10 and 12 of Embodiment 2.

Further, the individual light emitting units 276 are made to differ the color of the radiated light between when a cooperative heating operation is performed and when a cooperative heating operation is not performed. In a state in which the wide area light emitting unit 277 is lighted, as shown by the broken lines in Figs. 39 and 40, there will be a dual annular band of light on the top plate 21.

As shown in Fig. 38, in Embodiment 3, a toroidal shaped, thermally stable plastic coil support 290Y in which four sub heating coils SC1 to SC4 are placed thereon is disposed, with a predetermined gap 352, around the disk shaped, thermally stable plastic coil support 290X in which the main heating coil MC is placed thereon. These two coil supports 290X and 290Y are fixed above a flow duct 353 that includes multiple blow out holes 42C in its entire upper side that serves as a ceiling wall.

This flow duct 353 is an integrally formed upper case 42A and lower case 42B of Embodiment 2. The internal space 354 of this flow duct 353 is forcefully introduced with cooling air as shown by an arrow Y4 in Fig. 38. Through holes 355 are disposed in the outer circumference of the coil support 290Y on the outside in four locations interspersed at a 90 degrees angle along a circle with a center point CL2. The first and third sub heating coils SC1 and SC3 are positioned on the right side thereof, one for the fourth sub heating coil is provided on the left side of the fourth sub heating coil, and one for the second sub heating coil is provided at its front.

Light-guiding holes 356 are formed in the ceiling wall of the flow duct 353 so as to correspond to the through holes and each has a circular or elliptical shape. The individual light emitting units 276 each include a light-emitting element, such as a light emitting diode that emits light of a point light source or equivalent light sources, extending in a predetermined circular range. STC is a center light emitting unit (main heating coil light emitting unit) as mentioned above. When the center light emitting unit STC is lighted, as shown by upwards arrows with a dot and dash line in Fig. 38, an indication light that is a visible light that penetrates through the top plate 21 is emitted. Note that as an alternative example, if the through holes 355 are formed so as to be interspersed in certain short intervals at positions near the outer side of each sub heating coils SC1 to SC4, the indication light will be visually recognized as a dotted line from above the top plate 21.

As shown in Fig. 39, the center light emitting unit (main heating coil light emitting unit) STC is configured to use the predetermined gaps 352 that are formed between the coil supports 290X and 290Y and to radiate the indication light to the top plate 21 side through the gaps. Holder plates 357 are for fixing the light-emitting elements of the center light emitting unit STC to the inner surface of the ceiling wall of the flow duct 353. The shielding ring 291 is disposed so as to cover the peripheral line of the coil support 290Y and adheres or adjoins thereto.

Note that the gaps 352 illustrated in Fig. 38 have a size that is substantially equivalent to that of the space 271 between the outermost periphery of the main heating coil MC and the inner peripheral surface of the sub heating coils SC1 to SC4. Note that ferrite slabs 73 serves as a magnetic flux leakage prevention material and is disposed so as to cross at right angles or to intersect the flowing direction of the current of the main heating coil MC and the sub heating coils SC1 to SC4. Four to eight ferrite slabs 73 are disposed radically from the center portion of each coil.

Since having the above configuration, similar to Embodiments 1 and 2 above, arbitrary selection of a cooking menu is allowed with the seven keys, namely, the selection key E1A for rapid heating, the selection key E1 B for water-boiling, the selection key E1 C for boiling, the selection key E2A for preheating, the selection key E2B for cooking rice, the selection key E3A for deep frying, and the selection key E3B for water-boiling and heat-retaining. Accordingly, it is possible to select a control operation with a heating characteristic in accordance with the desire of the user such as putting priority on heating speed or on uniformity of heating.

That is, as in Fig. 41, when with a large-diameter pan that extends over all of the five heating coils, namely, the four sub heating coils SC1 to SC4 and the main heating coil MC, in other words, when with a large-diameter pan with a size in which cooperative heating is carried out using the four sub heating coils SC1 to SC4, user-friendliness is provided such as enabling selection of the seven cooking menus with the command of the energization control circuit 200 and, further, enabling convection acceleration control to be carried out with the selection switch 35 for the convection acceleration control arbitrarily operable by the user. With this, when the user wishes to carry out a convection acceleration control after start of heating with a cooking menu such as the rapid heating mode, and after casting of an object to be cooked in a pan and starting stewing, it is possible to carry out an appropriate control method from a plurality of convection acceleration controls described above from this stage by merely pressing the selection switch 350. Note, it goes without saying that if only one control program is stored in the energization control circuit 200 without the storage of all of the control programs from the first convection acceleration control to the third convection acceleration control of Embodiment 1 above, only one control can be carried out.

Even when a circular large-sized heating target N as shown in Fig. 41 is used, it will be a display screen with the display unit 100LX, as shown in Fig. 39. Here, when the rapid heating mode is selected as the cooking menu, the display unit 100LX is switched to a display screen shown in Fig. 41 (note that the display of the schematic graphics 311 and 312 of the main heating coil MC and the group of sub heating coils SC are different), and the following control is carried out.

Heating power: heating power can be set manually.

Similar to Embodiment 2, the level of the total heating power of the main heating coil MC and the sub heating coils is selected by the user from among the nine levels in the range of 120W to 3.0 kW.

The main-sub heating power ratio of the main heating coil MC and the sub heating coils SC1 to SC4 is automatically determined by the energization control circuit 200 so as to be within the range of the predetermined heating power ratio; the user cannot arbitrarily set the heating power ratio. For example, the main-sub heating power ratio (during high heating power), when driving one or two sub heating coils, ranges from 1:2 (during high heating power) to 1:1 (during low heating power). Accordingly, when with 3 kW, a heating power of 1.0 kW is charged to the main heating coil and a heating power of 500 W is charged to each of the four sub heating coils SC1 to SC4 amounting to a total heating power of 2.0 kW.

### The direction of the current:

The directions of the high-frequency currents in the adjacent areas of the main heating coil MC and the four sub heating coils SC1 to SC4 are controlled to coincide each other.

Further, regardless of whether it is a cooperative heating operation with some or all of the sub heating coils SC1 to SC4 and the main heating coil MC or heating solely with the main heating coil MC, the user can always confirm the status of the set heating power from above the top plate 21 by looking at a predetermined portion (liquid crystal display screen 45L) of the display unit 100LX dedicated to the left IH heat source 6L (also the user can know the status from the voice synthesizer 315). Further, even if the number of sub heating coils SC1 to SC4 involved in the cooperative heating is changed or even if changed to other sub heating coils SC1 to SC3, the user is able to easily obtain information on the heating power after the change has took place.

Further, since performance of the cooperative heating operation can be forbidden when an evidently small heating target N is used, the display of the schematic graphics 311 and 312 for the main heating coil MC and the group of sub heating coils SC in the display screen of the display unit 100LX can be made unnecessary, and proportionate to this, information related to the display 337 of the independent heating power of the main heating coil, heat-cooking menu display 351, and the like can be displayed all at once (see Fig. 42). Accordingly, the display content during heating other than the cooperative heating operation can be enriched.

Note that in Embodiment 3, since the center light emitting unit (main heating coil light emitting unit) STC that indicates the outer edge position of the area substantially corresponding to the heating region of the main coil MC is provided so that the preferable placing position of the heating target N such as a pan is indicated in a more clear manner when heating with the main heating coil MC alone, when using a normal-sized round pan (heating target N) that matches the outer diameter of the main heating coil MC, the center position of the main heating coil MC and its preferable placing position can be easily understood by visual confirmation.

Further, in Embodiment 3, although the center light emitting unit (main heating coil light emitting unit) STC performs emitting or lighting operation before the start of the cooperative heating operation of the main heating coil MC and the sub heating coils SC1 to SC4 and continues the emitting or lighting of the main heating coil and the sub heating coils during cooperative heating operation, the center light emitting unit STC may be turned off during cooperative heating operation of the main heating coil MC and the sub heating coils SC1 to SC4.

Note, in Embodiment 3, the seven keys, namely, the selection key E1A for rapid heating, the selection key E1 B for water-boiling, the selection key E1 C for boiling, the selection key E2A for preheating, the selection key E2B for cooking rice, the selection key E3A for deep frying, and the selection key E3B for water-boiling and heat-retaining are displayed, at appropriate timings, as capacitance switches that employ transparent electrodes on the display unit surface of the display unit 100LX dedicated to the left IH heating unit 6L; however, switches of a press type that permanently display the function by means of characters may be provided on the upper frame 20 or the top plate 21.

Further, as shown in Fig. 38, since the center light emitting unit (main heating coil light emitting unit) STC and the individual light emitting units 276 are disposed inside the internal space 354 of the flow duct 353, the cooling air that has been supplied from the outside to cool the main heating coil MC and the sub heating coils SC1 to SC4 becomes in contact at normal temperature before the cooling air reaches the heating coils, thus allowing them to be cooled at all times. Accordingly, an advantageous effect of preventing thermal degradation of light-emitting elements, such as a light emitting diode, that are relatively susceptible to high temperature can be enjoyed. Further, although the coil supports that supports the main heating coil MC and the sub heating coils SC1 to SC4 becomes 300 degrees or more during induction heating, since the structure thereof is such that the inner coil support 290X and the coil support 290Y on the outside is separated with predetermined gaps 352, the structure is one that the temperature of the inner coil support 290X, which is immediately under the main heating coil MC that is most frequently used, is not easily transferred to the coil support 290Y on the outside.

Note that a portion of the cooling air that is supplied to the internal space 354 of the flow duct 353 passes through the gaps 352 and the through holes 355 and is blown out from the top plate 21. Accordingly, since this cools the light-emitting elements of the center light emitting unit STC; the light-emitting elements of the individual light emitting units 276; a light-guiding panel (not shown) that is formed of transparent materials such as acrylic resin and that annularly extends the light; and further, the holder plates 357 as well, an advantageous effect of preventing these components from being thermally degraded can be enjoyed. When the center light emitting unit STC and the individual light emitting units 276 extends the light from a point light source of the light-emitting element such as a light emitting diode into a band or an annular shape with a transparent resin plate and making the light to be seen as an annular line or an annular broken line from above the top plate 21, the above light-guiding panel (not shown) is required. It is preferable that this light-guiding panel is made to pass through the through holes 355 that is formed in the above coil support 290Y and extend the light-guiding panel near a position immediately below the top plate 21 as much as possible, such that more light will be radiated on the top plate 21. Furthermore, in this case, according to Embodiment 3, it will be possible to provide the light-guiding panel in a standing manner to above the coil support 290Y without the light-guiding panel becoming in contact with the hole edge of the through holes 355. Accordingly, high temperature of the coil support 290Y can be prevented from being transferred directly.

Regarding Embodiment 1 to 3, means for displaying the heating power of the main heating coil MC and the group of sub heating coils SC1 to SC4 is not limited to the display unit 100LX dedicated to the left IH heat source 6L mentioned above but may be the integrated display means 100 (see Embodiment 2) commonly used with the other heat sources. Further, the displaying method of the amount of electric power supplied to the induction heating source may be a method such as displaying with light emitted by a plurality of light-emitting elements such as light emitting diodes. The display means may be a plurality of light emitting diodes that are illustrated in Japanese Unexamined Patent Application Publication No.2008-171757, for example. Further, the display form of the heating power maybe in numbers and letters directly displaying the heating level (watt), in graphics such as symbols and bar graphs and the like, and, further, letters such as "high heating power" and "low heating power" that indicates the level of heating power as a relative concept. Furthermore, as shown in Fig. 40, for clear identification of the input key (in this case, one for 3 kW) itself that displays the heating power between the other elements, the relevant input key may be displayed brighter or in a different color by light emitting means so that the user can visually confirm the heating power displayed in the input key.

In Embodiments 1 to 3 above, the total number of sub heating coils that constitute the group of sub heating coils SC1 to SC4 and the total number of the sub inverter circuits SIV1 to SIV4 that supplies high-frequency current to the coils are both four and are the same in numbers; however, the invention is not limited to this. For example, as in the example in Fig. 18 illustrating Embodiment 2, relative to the center point X1, the first heating coil SC1 and the second heating coil SC2 may be disposed on the front side, and in a position symmetrical to the first heating coil SC1 and the second heating coil SC2 in the front-rear direction, the third heating coil SC3 and the fourth heating coil SC4 may be disposed. That is, it is an alternative example in which the four sub heating coils SC1 to SC4 are each disposed on 45 degrees slants. In this alternative example, the first sub inverter circuit SIV1 may drive the first heating coil SC1 and the fourth sub heating coil SC4, and the second sub inverter circuit SIV2 may drive the third heating coil SC3 and the second sub heating coil SC2.

In this case, the first sub inverter circuit SIV1 does not drive the first heating coil SC1 and the fourth sub heating coil SC4 at the same time but drives only either one of the two. The second sub inverter circuit SIV2 also does not drive the third heating coil SC3 and the second sub heating coil SC2 at the same time but drives only either one of the two. This is preferable since this can reduce unnecessary magnetic leakage and increase heating efficiency.

With the above configuration, advantageously, it is be possible to reduce the number of expensive inverter circuits and thus reduce cost, and it is possible to reduce the installing space of the circuit board. As in the exemplary Fig. 18, in a case in which four sub heating coils SC1 to SC4 are disposed and in which the user is cooking using a non-circular pan such as an elliptical or oval pan, when the pan is placed on the front side so as to be long sideways, the first heating coil SC1 and the second heating coil SC2 that are on the front side relative to the center point X1 may be driven, and when the pan is placed on the left side relative to the center point X1 so as to be long in the front-rear direction, the second heating coil SC2 and the fourth heating coil SC4 at the back may be driven, further, when the pan is placed on the right side relative to the center point X1 so as to be long in the front-rear direction, the first heating coil SC1 and the third heating coil SC3 may be driven. In any of the three patterns, the sub inverter circuit may be switched, and among the pairs (two heating coils) of sub heating coils, either one may be selected and used without any problem.

Note that in a case where a single common sub inverter circuit that switches two sub heating coils is used, consequently, two sub heating coils can be driven when the common sub inverter circuit switches the connection of one of the sub heating coil and the other sub heating coil alternately under a temporal condition, such as a short time interval. For example, when each of the two sub inverter circuits drives two sub heating coils, then four sub heating coils in total can be used for heat cooking. Accordingly, in a case where more than four sub heating coils are provided, the number of sub inverter circuits can be suppressed to its minimum number with this concept.

As above, when a single common sub inverter circuit is shared by two sub heating coils at the same time, in a case of a full bridge circuit, for example, as shown in Fig. 23, the sub heating coil SC3 may be connected (in series or in parallel to SC1) to the series resonance circuit of the sub heating coil SC1 and the resonant capacitor 110B. With the above, even if SC1 and SC3 are driven at the same time, since no substantial difference will occur in the drive frequency, no beat noise is generated.

Further, consequently, two sub heating coils can be driven when the common sub inverter circuit switches the connection of one of the sub heating coil and the other sub heating coil alternately under a temporal condition, such as a short time interval. For example, when two sub inverter circuits each drive two sub heating coils, then four sub heating coils in total can be used for heat cooking. Accordingly, in a case where more than four sub heating coils are provided, the number of sub inverter circuits can be suppressed to its minimum number with this concept.

Further, as described in detail in Embodiment 1, the control method, in which two adjacent sub heating coils are heat driven at the same time, can be carried out in the driving method described above in which two sub heating coils that are not adjacent to each other are driven with a single inverter circuit. That is, it will be possible to also carry out the convection acceleration mode illustrated in Embodiment 1.

Further, when control such as sequentially switching energization to the first sub heating coil and the second sub heating coil or intermittently driving the first sub heating coil and the second sub heating coil is carried out, there is a possibility that the user not understanding how the induction heating is carried out may feel uneasy during use. As such, it is further preferable if the switching of energization of the groups of sub heating coils for accelerating convection and for preventing boiling over, as described above, are displayed in real time on the above integrated display means 100 or liquid crystal display screens 45R and 45L by means of characters and symbol, animation, or the like.

Furthermore, in the above-described Embodiments 1 to 3, seven cooking menu keys, such as the selection key E1A for rapid heating, the selection key E1 B for water-boiling, the selection key E1 C for boiling, the selection key E2A for preheating, the selection key E2B for cooking rice, and the like, have been provided. However, a case is assumed in which the convection acceleration control is not automatically carried out at an appropriate timing even when a cooking menu key is selected. Accordingly, it is preferable that a selection key of a cooking recipe that requires convection acceleration control is provided for the user to select. For example, when with a key for curry that is one of the cooking recipes, because of the thickness of the liquid, convection is not easily generated, and scorching tended to occur on the pan bottom. Thus, hitherto, cooking method such as adding the curry roux after the vegetables are sufficiently boiled, stopping the induction heating after the curry roux has been added, or stewing by driving the induction heating coil with the minimum heating power has been carried out.

Accordingly, when the user operates a selection key "curry" before start of cooking, after start of cooking, or in the middle of cooking, it is preferable that a notification notifying the user to carry out the convection acceleration control of the present invention when adding curry is issued. Specifically, as shown in Fig. 27 of Embodiment 2, a method can be conceived in which a display is displayed encouraging the user to push the convection-acceleration-control selection switch 350 by using the guide area 100GD of the integrated display means 100 that appropriately notifies the user of the reference information during each cooking or in which announcement is carried out with the voice synthesizer 315. When the convection-acceleration-control selection switch 350 is selected, the energization control circuit 200 automatically performs change in the energization conditions of the sub heating coils SC and the main heating coil MC and automatically performs determination of whether the timing is appropriate, such as after start of boiling. If the timing is appropriate, then, heating that accelerates convection is carried out continuously.

### [Industrial Applicability]

The induction cooking system according to the invention performs heat driving by combining the main heating coil and the sub heating coil(s). When carrying out cooking, the user can easily select the cooking menu that matches the menu desired by the user, such as one concerning heating speed or uniform heating. The user can confirm its result, as well. As such, the induction cooking system can be applied widely to table-top type and built-in type special purpose cooking systems for induction heated heat source and complex induction cooking systems with other radiant type heat sources. Reference Signs List

A main body; B top panel; C housing; D heating means; E operation means; F control means; G display means; W width; AM active mark; CL, CL1 left-right center line of the main body A; CL2 left-right center line of the left IH heat source; CU cooling unit; DA outer diameter of left IH heating coil; DB arrangement outer diameter of auxiliary coil; DC maximum outer diameter of wide display; E1A selection key for rapid heating; E1 B selection key for water-boiling; E1C selection key for boiling; E2A selection key for preheating; E2B selection key for cooking rice; E3A selection key for deep frying; E3B selection key for water-boiling and heat-retaining; KT kitchen furniture; K1 installation opening; KTK opening; N heating target (pan); SC sub heating coils (group);SC1 to SC4 sub heating coil; MC main heating coil; MIV inverter circuit for main heating coil; SIV1 to SIV4 inverter circuit for sub heating coil; SX space; STC center light emitting unit (main heating coil light emitting unit); X1 center point; X2 center point; 2 main body case; 2A body; 2B front flange plate; 2S inclined portion; 2U rear side wall of body; 3B rear flange; 3L left flange; 3R right flange; 6L left IH heat source; 6LC left IH heating coil; 6LM guide mark; 6R right IH heat source; 6RC right IH heating coil; 6RM guide mark; 7 central electric radiant heat source (heater); 7M guide mark; 8L left side cooling chamber; 8R right cooling chamber; 9 grill heating chamber; 9A front opening; 9B rear opening; 9C inner frame; 9D outer frame; 9E outlet; 10 upper portion component chamber; 12 rear exhaust hood; 13 door; 13A center opening; 13B handle; 14 exhaust duct; 14A upper end opening; 14B tubular bottom portion 14C vent hole; 20 upper frame (frame body); 20B right vent hole; 20C center vent hole; 20D left vent hole; 21 top plate; 22 electric radiant heat source (heater); 23 electric radiant heat source (heater); 24A notch; 24L left vertical partition plate; 24R right vertical partition plate; 25 horizontal partition plate; 26 space; 28 rear partition plate; 28A outlet; 30 fan; 30F blade; 31 R infrared sensor; 31L, 31L1 to 31 L5 infrared sensor; 32 rotation shaft; 33 motor driving circuit; 34 component case; 34A first outlet; 34B second outlet; 37 fan case; 37A suction tube; 37B suction; 37C outlet (exit); 37D case; 37E case; 39 fan chamber; 41 circuit board; 42 cooling duct; 42A upper case; 42B lower case; 42C blow out hole; 42D partition wall; 42E partition wall; 42F ventilating space; 42G ventilating space; 42H ventilating space; 42J communicating hole (aperture); 42K vent hole; 43A radiation fin; 43B radiation fin; 45R liquid crystal display screen; 45L liquid crystal display screen; 46 front component case; 46A lower duct; 46B upper duct; 46C notch; 50 vessel-shaped cover; 56 mounting substrate; 57 electrical and electronic components; 60 front side operating unit; 61 top side operating unit; 62L left front side operating frame; 62R right front side operating frame; 63 main power switch; 63A operation button; 64R right operation dial; 64L left operation dial; 66R right indicating lamp; 66L left indicating lamp; 70 right heating power setting operating unit; 71 left heating power setting operating unit; 72 center operating unit; 73 magnetic flux leakage prevention material; 75 AC power supply; 76 rectifier circuit; 77A switching element; 77B switching element; 78A switching element; 78B switching element; 79A switching element; 79B switching element; 80 DC power supply; 88A switching element; 89A switching element; 90 one-touch setting key; 91 low heating power key; 92 middle heating power key; 93 high heating power key; 94 3 kW key; 95 operation button for electric radiant heat sources 22 and 23; 96 operation button for stop operation switch; 97A operation button for temperature control switch; 97B operation button for temperature control switch; 98 power on/off switching button; 99A configuration switch; 99B configuration switch; 100 integrated display means; 100L1 corresponding area of left IH heat source 6L; 100L2 corresponding area of left IH heat source 6L; 100M1 corresponding area of central electric radiant heat source 7; 100M2 corresponding area of central electric radiant heat source 7; 100R1 corresponding area of right IH heat source 6R; 100R2 corresponding area of right IH heat source 6R; 100G cooking area of grill heating chamber 9; 100GD guiding area; 100F key display area; 100N arbitrary display area; 100LX display unit; 101 R right heating power indicating lamp; 101 L left heating power indicating lamp; 106 fan; 106A rotor blade; 106B drive motor; 108 saucer; 109 grill; 110A resonance capacitor; 110B resonance capacitor; 113 gap; 114 gap; 115 gap; 116 gap; 121 deodorizing catalyst; 121H electric heater for catalyst; 130 convenient menu key; 131 R right IH convenient menu button; 132 cover; 141 input key; 142 input key; 143 input key; 144 input key; 145 input key; 146 input key; 200 energization control circuit; 201 input unit; 202 output unit; 203 storage unit; 204 arithmetic control unit (CPU); 210R inverter circuit for right IH heat source; 210L inverter circuit for left IH heat source; 211 heater driving circuit of central electric radiant heat source 7; 212 heater driving circuit for driving electric radiant heat source for heating grill heating chamber 9; 213 heater drive circuit for driving radiation electric heat source 23 for in-chamber heating grill heating chamber 9; 214 heater driving circuit for driving a catalytic heater 121 H; 215 driving circuit for driving liquid crystal screen of integrated display means 100; 221 rectifier bridge circuit; 222 coil; 223 smoothing capacitor; 224 resonance capacitor; 225 switching means (IGBT); 226 flywheel diode; 227 current detection sensor; 228 driving circuit; 228A driving circuit; 228B driving circuit; 231 driving circuit; 240 temperature detecting circuit; 241 temperature detecting element (temperature sensor); 242 temperature detecting element (in-chamber temperature sensor); 243 temperature detecting element (temperature sensor); 244 temperature detecting element (temperature sensor); 245 temperature detecting element (temperature sensor); 250 key dedicated to bread; 251 compound cooking key; 260 to 264 driving circuit; 267A current sensor; 267B current sensor; 267C current sensor; 267D current sensor; 270 to 275 space; 276 individual light emitting unit; 277 wide area light emitting unit; 278 driving circuit; 280 placement-of-heating-target determination unit; 290 coil support; 290A support protrusion; 290Y coil support; 291 shielding ring; 300 drive motor; 307 space; 310 through hole; 311 graphic of main heating coil; 312 graphic of sub heating coil; 313L left display unit; 313M center display unit; 313R right display unit; 314 display window; 315 voice synthesizer; 316 speaker; 317 to 320 input key; 330 to 336 input key for heating power; 337 heating power display; 338 high-temperature display; 339 heating power indicating mark; 340 heating power indicating mark; 350 convection acceleration selection switch; 351 heat-cooking menu display; 352 gap; 353 flow duct; 354 internal space of the flow duct; 355 through hole; 356 light-guiding hole; 357 holder plate.

## Claims

1. An induction cooking system, comprising:
a top plate (21) for placing a heating target (N) for putting an object to be cooked therein, the heating target (N) including a pan;
an annular main heating coil (MC) disposed below the top plate (21);
a first sub heating coil (SC1) and a second sub heating coil (SC2) adjoinedly disposed on respective both sides of the main heating coil (MC), and each having a flattened shape with a width smaller than a radius of the main heating coil (MC);
inverter circuits (MIV, SIV1, SIV2) supplying induction heating power to the main heating coil (MC), the first sub heating coil (SC1) and the second sub heating coil (SC2), respectively;
a control unit (200) controlling outputs of the inverter circuits; and
an operating unit instructing a start of heating and heating power settings to the control unit (200),
**characterized in that**
the control unit (200) takes a time period not to supply induction heating power to the first sub heating coil (SC1) and supplies induction heating power to the second sub heating coil (SC2) from the corresponding inverter circuit (SIV2) thereto during the time period, then the control unit (200) takes a time period to stop supplying induction heating power to the second sub heating coil (SC2) and supplies induction heating power to the first sub heating coil (SC1) from the corresponding inverter circuit (SIV2) thereto during the latter time period, and
the control unit (200) repeats the energization switching operation for the first (SC1) and the second (SC2) sub heating coils a plurality of times.

2. The induction cooking system according to claim 1, further comprising
a temperature sensor (242) that detects a temperature of the heating target (N), wherein
when the temperature sensor (242) detects a boiling state of the object to be cooked, the control unit (200) repeats energization switching operation for the sub heating coils (SC1, SC2) a plurality of times.

3. The induction cooking system according to claim 1 or 2, further comprising a display unit (100LX) that displays a heating condition instructed to the control unit (200) by a user, wherein
the display unit (100LX) displays that the control unit (200) is repeating energization switching operation for the sub heating coils (SC1, SC2) a plurality of times.

4. The induction cooking system according to one of the preceding claims, further comprising a placement-of-heated-object determination unit (280) that determines whether a heating target (N) is placed above the main heating coil (MC) and the sub heating coils (SC1, SC2),
wherein
when the placement-of-heated-object determination unit (280) determines that a heating target (N) is placed over the main heating coil (MC) and the sub heating coils (SC1, SC2) at the same time, cooperative heating operation is made operable.

5. The induction cooking system according to claim 4, wherein
a display is displayed on a display unit (100LX) that cooperative heating with the main heating coil (MC) and the sub heating coils (SC1, SC2) is being performed.

6. The induction cooking system according to claim 4, wherein
a concordance rate of a bent shape of each sub heating coil (SC1, SC2) and a bent shape of a peripheral line of the main heating coil (MC) is 60 percent or higher.

7. The induction cooking system according to claim 3, wherein
two sub heating coils (SC1, SC2) facing each other with the main heating coil (MC) in between are grouped in which a single sub inverter circuit (SIV) is connected to the group, the inverter circuit is switched by the control unit (200) such that either one of the two sub heating coils (SC1, SC2) is simultaneously driven with the main heating coil (MC) to perform cooperative heating.

## Patentansprüche

1. Induktionskochsystem, umfassend:
eine obere Platte (21) zum Platzieren eines Heizziels (N), um ein zu kochendes Objekt hineinzutun, wobei das Heizziel (N) einen Topf oder Pfanne beinhaltet;
eine ringförmige Hauptheizspule (MC), die unterhalb der oberen Platte (21) angeordnet ist;
eine erste Nebenheizspule (SC1) und eine zweite Nebenheizspule (SC2), die aneinandergrenzend auf entsprechenden beiden Seiten der Hauptheizspule (MC) angeordnet sind, und jeweils eine abgeflachte Form mit einer Breite kleiner als ein Radius der Hauptheizspule (MC) aufweisen;
Wechselrichterschaltungen (MIV, SIV1, SIV2) zum Zuführen von Induktionsheizleistung an die Hauptheizspule (MC), die erste Nebenheizspule (SC1) beziehungsweise die zweite Nebenheizspule (SC2);
eine Steuereinheit (200), die Ausgänge der Wechselrichterschaltungen steuert; und
eine Betriebseinheit, die an die Steuereinheit (200) einen Start des Heizens und Heizleistungseinstellungen anweist;
**dadurch gekennzeichnet, dass**
die Steuereinheit (200) während einer Zeitperiode der ersten Nebenheizspule (SC1) Induktionsheizleistung nicht zuführt, und der zweiten Nebenheizspule (SC2) Induktionsheizleistung von der korrespondierenden Wechselrichterschaltung (SIV2) während der Zeitperiode zuführt, die Steuereinheit (200) dann während einer Zeitperiode das Zuführen von Induktionsheizleistung an die zweite Nebenheizspule (SC2) stoppt, und der ersten Nebenheizspule (SC1) Induktionsheizleistung von der korrespondierenden Wechselrichterschaltung (SIV2) während letzterer Zeitperiode zuführt,
und
die Steuereinheit (200) den Energieversorgungsschaltbetrieb für die erste (SC1) und die zweite (SC2) Nebenheizspule eine Vielzahl von Malen wiederholt.

2. Induktionskochsystem nach Anspruch 1, ferner umfassend:
einen Temperatursensor (242), der eine Temperatur des Heizziels (N) erfasst, wobei
wenn der Temperatursensor (242) einen Siedezustand des zu kochenden Objekts erfasst, die Steuereinheit (200) den Energieversorgungsschaltbetrieb für die Nebenheizspulen (SC1, SC2) eine Vielzahl von Malen wiederholt.

3. Induktionskochsystem nach Anspruch 1 oder 2, ferner umfassend eine Anzeigeeinheit (100LX), die einen Heizzustand, der durch einen Benutzer an die Steuereinheit (200) angewiesen wurde, anzeigt, wobei
die Anzeigeeinheit (100LX) anzeigt, dass die Steuereinheit (200) den Energieversorgungsschaltbetrieb für die Nebenheizspulen (SC1, SC2) eine Vielzahl von Malen wiederholt.

4. Induktionskochsystem nach einem der vorangehenden Ansprüche, ferner umfassend eine Platzierung-von-erhitztem-Objekt-Bestimmungseinheit (280), die bestimmt, ob ein Heizziel (N) oberhalb der Hauptheizspule (MC) und der Nebenheizspulen (SC1, SC2) platziert ist, wobei
wenn die Platzierung-von-erhitztem-Objekt-Bestimmungseinheit (280) bestimmt, dass ein Heizziel (N) über der Hauptheizspule (MC) und den Nebenheizspulen (SC1, SC2) zur gleichen Zeit platziert ist, ein zusammenwirkender Heizbetrieb ermöglicht wird.

5. Induktionskochsystem nach Anspruch 4, wobei
eine Anzeige auf einer Anzeigeeinheit (100LX) angezeigt wird, dass zusammenwirkendes Heizen mit der Hauptheizspule (MC) und den Nebenheizspulen (SC1, SC2) durchgeführt wird.

6. Induktionskochsystem nach Anspruch 4, wobei
eine Konkordanzrate einer gebogenen Form von jeder Nebenheizspule (SC1, SC2) und einer gebogenen Form einer Umfangslinie der Hauptheizspule (MC) 60 Prozent oder höher ist.

7. Induktionskochsystem nach Anspruch 3, wobei zwei einander zugewandte Nebenheizspulen (SC1, SC2) mit der dazwischen angeordneten Hauptheizspule (MC) gruppiert sind, in welcher eine einzige Nebenwechselrichterschaltung (SIV) mit der Gruppe verbunden ist, wobei die Wechselrichterschaltung durch die Steuereinheit (200) geschaltet wird, so dass irgendeine der zwei Nebenheizspulen (SC1, SC2) mit der Hauptheizspule (MC) simultan angetrieben wird, um zusammenwirkendes Heizen durchzuführen.

## Revendications

1. Système de cuisson par induction, comprenant :
une plaque supérieure (21) sur laquelle est placée une cible à chauffer (N) destinée à recevoir un objet à faire cuire, la cible à chauffer (N) comprenant une casserole ;
un serpentin de chauffage principal annulaire (MC) disposé sous la plaque supérieure (21) ;
un premier serpentin de chauffage secondaire (SC1) et un second serpentin de chauffage secondaire (SC2) disposés de manière contiguë sur les deux côtés respectifs du serpentin de chauffage principal (MC), chacun d'eux présentant une forme aplatie dont la largeur est plus petite que le rayon du serpentin de chauffage principal (MC) ;
des circuits inverseurs (MIV, SIV1, SIV2) destinés à fournir une puissance de chauffage par induction au serpentin de chauffage principal (MC), au premier serpentin de chauffage secondaire (SC1) et au second serpentin de chauffage secondaire (SC2), respectivement ;
une unité de commande (200) qui commande les sorties des circuits inverseurs ; et
une unité opérationnelle qui fournit à l'unité de commande (200) des consignes de début de chauffage et de puissance de chauffage ;
**caractérisé en ce que** :
l'unité de commande (200), au cours d'une période de temps, ne fournit aucune puissance de chauffage par induction au premier serpentin de chauffage secondaire (SC1), mais fournit une puissance de chauffage par induction au second serpentin de chauffage secondaire (SC2) à partir du circuit inverseur correspondant (SIV2) au cours de la période de temps, puis l'unité de commande (200), au cours d'une autre période de temps, cesse de fournir la puissance de chauffage par induction au second serpentin de chauffage secondaire (SC2), mais fournit une puissance de chauffage par induction au premier serpentin de chauffage secondaire (SC1) à partir du circuit inverseur correspondant (SIV2) au cours de cette dernière période de temps ; et
l'unité de commande (200) répète une pluralité de fois l'opération de commutation d'excitation des premier (SC1) et second (SC2) serpentins de chauffage secondaires.

2. Système de cuisson par induction selon la revendication 1, comprenant en outre un capteur de température (242) qui détecte la température de la cible à chauffer (N), dans lequel :
lorsque le capteur de température (242) détecte un état d'ébullition de l'objet à faire cuire, l'unité de commande (200) répète une pluralité de fois l'opération de commutation d'excitation des serpentins de chauffage secondaires (SC1, SC2).

3. Système de cuisson par induction selon la revendication 1 ou la revendication 2, comprenant en outre une unité d'affichage (100LX) qui affiche un état de chauffage fourni par un utilisateur, à l'unité de commande (200), dans lequel :
l'unité d'affichage (100LX) affiche le fait que l'unité de commande (200) répète une pluralité de fois l'opération de commutation d'excitation des serpentins de chauffage secondaires (SC1, SC2).

4. Système de cuisson par induction selon l'une quelconque des revendications précédentes, comprenant en outre une unité de détermination du placement d'un objet chauffé (280), qui détermine si une cible à chauffer (N) est placée au-dessus du serpentin de chauffage principal (MC) et des serpentins de chauffage secondaires (SC1, SC2), dans lequel :
lorsque l'unité de détermination du placement d'un objet chauffé (280) détermine qu'une cible à chauffer (N) est placée en même temps au-dessus du serpentin de chauffage principal (MC) et des serpentins de chauffage secondaires (SC1, SC2), une opération de chauffage coopératif est rendue possible.

5. Système de cuisson par induction selon la revendication 4, dans lequel :
un affichage est affiché sur une unité d'affichage (100LX) selon lequel un chauffage coopératif est exécuté par le serpentin de chauffage principal (MC) et par les serpentins de chauffage secondaires (SC1, SC2).

6. Système de cuisson par induction selon la revendication 4, dans lequel :
un taux de concordance d'une forme coudée de chaque serpentin de chauffage secondaire (SC1, SC2) et d'une forme coudée d'une ligne périphérique du serpentin de chauffage principal (MC), est égal ou supérieur à 60 pour cent.

7. Système de cuisson par induction selon la revendication 3, dans lequel :
on groupe deux serpentins de chauffage secondaires (SC1, SC2) qui font chacun face au serpentin de chauffage principal (MC) qui est placé entre eux deux, dans lequel un seul circuit inverseur secondaire (SIV) est connecté au groupe, le circuit inverseur étant commuté par l'unité de commande (200), de telle sorte que l'un ou l'autre des deux serpentins de chauffage secondaires (SC1, SC2), soit commandé de manière simultanée avec le serpentin de chauffage principal (MC), de façon à exécuter un chauffage coopératif.
